# EUROPÄISCHE PATENTSCHRIFT

(11) **EP 0 480 871 B1**
(45) Veröffentlichungstag und Bekanntmachung des Hinweises auf die Patenterteilung: **13.12.1995**
(21) Anmeldenummer: 91810684.0
(22) Anmeldetag: 27.08.1991
(51) Int. Cl.: A01N 47/36

(54) **Synergistisches Mittel und Verfahren zur selektiven Unkrautbekämpfung**
Synergistic agents and method for selective control of weeds
Agents synergiques et procédé pour lutter sélectivement contre les mauvaises herbes

(30) Priorität: 06.09.1990 CH 2890/90
(43) Veröffentlichungstag der Anmeldung: 15.04.1992
(73) Patentinhaber: CIBA-GEIGY AG, 4002 Basel (CH); KUMIAI CHEMICAL INDUSTRY CO., LTD., Tokyo (JP)
(72) Erfinder: Maurer, Willy, CH-4125 Riehen (CH); Hofer, Urs, Dr., CH-4310 Rheinfelden (CH)
(74) Vertreter: Roth, Bernhard M.

(56) Entgegenhaltungen:
- EP-A- 0 298 901
- EP-A- 0 304 920

## Beschreibung

Die vorliegende Erfindung betrifft ein synergistisches Mittel, eine herbizide Wirkstoff-Kombination enthaltend. Das erfindungsgemässe Mittel eignet sich zur selektiven Unkrautbekämpfung in Nutzpflanzenkulturen, insbesondere in Getreide, Mais, Reis oder Soja.

Die Erfindung betrifft auch ein Verfahren zur Bekämpfung von Unkräutern in Nutzpflanzenkulturen, vorzugsweise in Getreide, Mais, Reis oder Soja und die Verwendung dieses neuen Mittels.

Das erfindungsgemässe Mittel besteht aus einem Gemisch von zwei an sich bekannten Wirkstoffkomponenten. Beim ersten Wirkstoff handelt es sich um einen herbizid wirksamen Sulfonylharnstoff, der allgemeinen Formel I 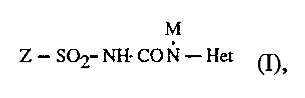
worin
- Z: einen substituierten Phenyl-, Thiophenyl-, Benzyl-, Pyridinyl-, Pyrazinyl-, heteroanellierten Phenyl- oder Alkylsulfonylamino-Rest:
- M: Wasserstoff; oder C₁-C₄-Alkyl; und
- Het: einen substituierten fünf- oder sechsgliedrigen Heterocyclus mit 2 oder drei Stickstoffatomen
bedeutet, sowie deren agrochemisch verträglichen Salze.

Herbizid wirksame Sulfonylharnstoffe der Formel I sind beispielsweise in den folgenden Literaturstellen beschrieben: DE-A-2 715 786, EP-A-0 004 163, EP-A-0 007 687,
EP-A-0 013 480, EP-A-0 023 141, EP-A-0 023 422, EP-A-0 030 139, EP-A-0 030 142, EP-A-0 035 893, EP-A-0 044 209, EP-A-0 044 210, EP-A-0 044 211, EP-A-0 044 212, EP-A-0 044 213, EP-A-0 044 807, EP-A-0 044 808, EP-A-0 044 809, EP-A-0 048 143, EP-A-0 051 466, EP-A-0 057 456, EP-A-0 070 802, EP-A-0 072 347, EP-A-0 073 562, EP-A-0 079 683, EP-A-0 082 108, EP-A-0 083 975, EP-A-0 084 020, EP-A-0 084 224, EP-A-0 085 028, EP-A-0 085 476, EP-A-0 087 780, EP-A-0 095 925, EP-A-0 096 002, EP-A-0 096 003, EP-A-0 096 593, EP-A-0 097 122, EP-A-0 102 925, EP-A-0 103 537, EP-A-0 107 979, EP-A-0 108 708, EP-A-0 117 014, EP-A-0 120 814, EP-A-0 126 711, EP-A-0 169 815, EP-A-0 176 304, EP-A-0 184 385, EP-A-0 206 995, EP-A-0 237 292, EP-A-0 238 070, EP-A-0 262 096, EP-A-0 273 860, EP-A-0 327 251, EP-A-0 336 587, EP-A-0 342 456, US-4,774,337 und die europäische Patentanmeldung No 90810392.2.

Auch sind einige der erfindungsgemäss verwendbaren Sulfoylharnstoffe zum Teil schon im Handel erhältlich.

Der zweite Wirkstoff ist ein 5,6,7,8-Tetrahydro-1H,3H-(1,3,4)-thiadiazolo-[3,4-a]-pyridazin oder 7,8-Dihydro-1H,3H-(1,3,4)-thiadiazolo-[3,4-a]-pyridazin der allgemeinen Formel II 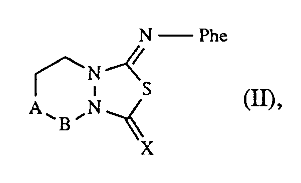
worin
- X: Sauerstoff; oder Schwefel;
- A-B: -CH₂-CH₂-; oder -CH=CH-; und
- Phe: einen substituierten Phenylrest
bedeutet.

Die Verbindungen der Formel II sind in den vorveröffentlichten europäischen Patentanmeldungen EP-A-0 238 711, EP-A-0 273 417 und EP-A-0 304 920 als herbizid wirksame Verbindungen beschrieben worden. Insbesondere werden dort, wie auch in der zur EP-A-0 238 711 konkordanten U.S. Patente US 4,816,063 und US 4,885,023 die Verbindungen der Formel II näher beschrieben. Die vorgenannten Publikationen, insbesondere aber EP-A-0 238 711, EP-A-0 273 417, EP-A-0 304 920, EP-A-0 312 064, US 4,816,063 und US 4,885,023 werden per Referenz eingeführt.

Es wurde nun gefunden, dass die Sulfonylharnstoffe der Formel I in vorteilhafter Weise mit den aus den zuvor genannten Publikationen bekannt gewordenen herbizid wirksamen 5,6,7,8-Tetrahydro-1H,3H-(1,3,4)-thiadiazolo-[3,4-a]-pyridazinen oder 7,8-Dihydro-1H,3H-(1,3,4)-thiadiazolo-[3,4-a]-pyridazinen der allgemeinen Formel II kombiniert werden können. Dabei zeigt die Kombination der Verbindungen der beiden Wirkstoffgruppen der Formeln I und II eine über die rein additive Wirkung der jeweiligen Substanzklasse bei gegebener Aufwandmenge hinausgehende synergistische (überadditive) Herbizidwirkung.

Als Alkylsulfonylaminorest kommt für Z insbesondere der Rest der Formel 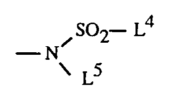
in Betracht, worin L⁴ und L⁵ die weiter unten angegebenen Bedeutungen haben.

Insbesondere betrifft die vorliegende Anmeldung die Kombination eines Sulfonylharnstoffs der Formel 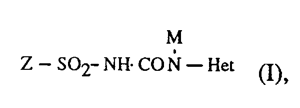
worin
- Z: einen Rest 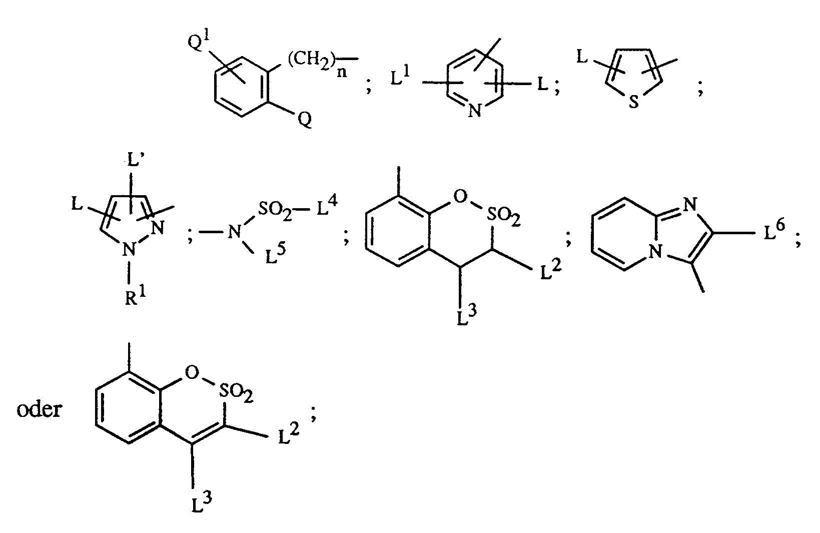
- Het: einen Rest 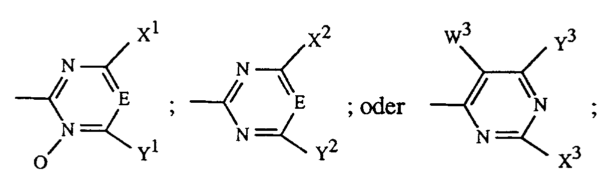
- M: Wasserstoff; oder C₁-C₄-Alkyl;
- Q: Halogen; Nitro; C₁-C₆-Alkyl; C₁-C₆-Halogenalkyl; C₂-C₆-Alkenyl; C₂-C₆-Halogenalkenyl; C₂-C₆-Alkinyl; C₃-C₆-Halogenalkinyl; -NH₂; -NH-(C₁-C₄-Alkyl); -N(C₁-C₄-Alkyl)₂; -SO₂N(C₁-C₄-alkyl)₂; -SO₂NH(C₁-C₄-alkyl); -COOR²; -COOR'; -(A)-R'; -(A)-R²; Phenyl; Phenoxy; C₁-C₅-Alkylphenyl; Halogenphenyl; oder Halogenphenoxy;
- Q¹: Wasserstoff; Nitro; C₁-C₄-Alkyl; Halogen; C₁-C₄-Alkoxy; C₁-C₄-Halogenalkyl; N(C₁-C₄-Alkyl)₂; C₁-C₄-Alkylamino; C₁-C₄-Halogenalkylthio;
C₁-C₄-Halogenalkoxy; C₁-C₄-Alkoxy-C₁-C₄-alkoxy; C₂-C₄-Alkenyl; C₂-C₄-Alkinyl; CN; C₂-C₄-Halogenalkenyl;
- n: 0; oder 1;
- R¹: Wasserstoff; C₁-C₄-Alkyl; oder Pyridyl;
- A: Sauerstoff; Schwefel; -SO-; -SO₂-; oder -O-SO₂-;
- R²: C₁-C₅-Alkyl; C₂-C₆-Alkenyl; C₃-C₆-Alkinyl; C₁-C₅-Halogenalkyl; C₁-C₄-Alkoxy-C₁-C₄-alkyl; C₂-C₅-Halogenalkenyl; C₂-C₅-Halogenalkinyl;
- R': Oxetan-3-yl; Thietan-3-yl;
- L: Halogen; Nitro; C₁-C₅-Alkyl; -A-R²; COOR²; -CO-NH₂; -CO-NHC₁-C₄-Alkyl; oder -CO-N(C₁-C₄-Alkyl)₂;
- L': Wasserstoff; oder Chlor;
- L¹: Wasserstoff; Nitro; C₁-C₄-Alkyl; Halogen; C₁-C₄-Alkoxy; C₁-C₄-Halogenalkyl; oder C₁-C₆-Halogenalkoxy;
- L²: Wasserstoff; oder C₁-C₄-Alkyl;
- L³: Wasserstoff; oder C₁-C₄-Alkyl;
- L⁴: C₁-C₆-Alkyl; C₂-C₆-Alkenyl; oder C₂-C₆-Alkinyl;
- L⁵: C₁-C₆-Alkyl; C₂-C₆-Alkenyl; oder C₂-C₆-Alkinyl; oder
- L⁴ und L⁵: gemeinsam eine C₂-C₆-Alkylenbrücke;
- E: N; oder CH;
- X¹, X², X³, und Y¹: unabhängig voneiander Wasserstoff; Halogen; C₁-C₄-Halogenalkoxy; C₁-C₄-Halogenalkyl; C₁-C₄-Alkoxy; C₁-C₄-Alkyl; Cyclopropyl; Dimethylamino; Methylamino; Aethylamino; Amino; oder C₁-C₄-Alkoxy-C₁-C₄-alkyl; C₁-C₄-Alkoxy-C₁-C₄-alkoxy; C₁-C₄-Halogenalkylthio; C₁-C₄-Alkylthio; C₁-C₄-Alkylthio-C₁-C₄-alkyl;
- Y²: Wasserstoff; Halogen; C₁-C₄-Halogenalkoxy; C₁-C₄-Halogenalky; C₁-C₄-Alkoxy; C₁-C₄-Alkyl; Dimethylamino; Methylamino; Aethylamino; Amino; C₁-C₄-Alkoxy-C₁-C₄-alkyl; Cyclopropyl; Dimethoxymethyl; Diethoxyethyl; 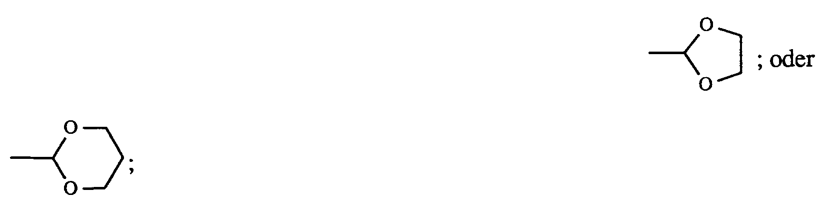
- Y³: C₁-C₄-Alkyl; C₁-C₄-Alkoxy; C₁-C₂-Halogenalkyl; oder C₁-C₂-Halogenalkoxy;
- W³: Wasserstoff; C₁-C₄-Alkyl; C₁-C₄-Alkoxy; C₁-C₂-Halogenalkyl; C₁-C₂-Halogenalkoxy; C₁-C₄-Alkoxycarbonyl; Halogen; Cyan; Nitro; C₁-C₄-Alkylthio; C₁-C₄Alkylsulfinyl; oder C₁-C₄-Alkylsulfonyl; oder
- W³ und Y³: gemeinsam eine C₂-C₄-Alkylenbrücke; oder eine durch Sauerstoff einfach unterbrochene C₁-C₃-Alkylenbrücke;
bedeutet
mit einer synergistisch wirksamen Menge eines 5,6,7,8-Tetrahydro-1H,3H-(1,3,4)-thiadiazolo-[3,4-a]-pyridazins oder eines 7,8-Dihydro1H,3H-(1,3,4)-thiadiazolo-(3,4-a]-pyridazins der Formel II 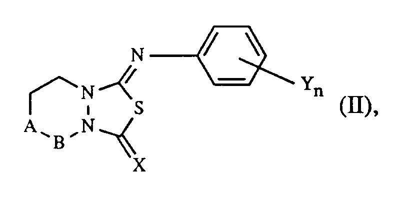
worin
- A-B: -CH₂-CH₂-; oder -CH=CH-;
- Y: unabhängig voneinander Halogen; Hydroxy; C₁-C₆-Alkyl; C₁-C₆-Alkoxy; C₁-C₆-Halogenalkoxy; C₃-C₆-Alkenyloxy; C₂-C₆-Halogenalkenyloxy; C₃-C₆-Alkinyloxy; Phenoxy; C₅-C₆-Cycloalkyloxy; C₁-C₆-Alkoxycarbonyl-C₁-C₄-alkoxy; C₁-C₆Alkoxycarbonyl-C₂-C₄-alkenyloxy; C₁-C₆-Alkylthiocarbonyl-C₁-C₄-alkoxy; C₃-C₆-Alkinyloxycarbonyl-C₁-C₄-alkoxy; Benzyloxycarbonyl-C₁-C₄-alkoxy; Trifluoromethyl; Benzyloxy; Chlorbenzyloxy; C₁-C₆-Alkylbenzyloxy; C₂-C₆-Alkenyl; CyanoC₁-C₆-alkyl; C₁-C₆-Alkylcarbamoyloxy; C₁-C₄-Alkoxy-C₁-C₄-alkyl; C₃-C₆-Alkinyloxy-C₁-C₄-alkyl; C₃-C₆-Alkenyloxy-C₁-C₃-alkyl; unsubstituiertes oder durch Halogen substituiertes C₅-C₆Cycloalkylmethoxy; C₁-C₆-Alkoxy-C₁-C₄-alkoxy; Phenethyloxy; C₅-C₆-Cycloalkoxycarbonyl-C₁-C₄-alkoxy; Pyrrolidinocarbonyl; unsubstituiertes oder durch C₁-C₆-Alkyl substituiertes Phenylcarbonyl; -CO-X⁵-R³; 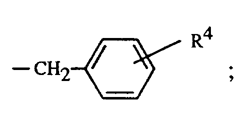 -S(O)ₚ-R⁵; -O-CH(R⁶)-CO-OR⁷; -N=C(CH₃)-R⁸; -NHR⁹; -S-CH(R¹⁰)-CO-R¹¹; oder -O-P(X⁵)(OC₂H₅)₂;
- R³: Wasserstoff; C₁-C₆-Alkyl; Phenyl; C₅-C₆-Cycloalkyl; C₁-C₆-Alkoxy-C₁-C₄-alkyl; C₁-C₆-Alkoxycarbonyl-C₁-C₄-alkyl; oder C₁-C₄-Alkoxy-C₁-C₄-alkoxy-carbonyl-C₁-C₄-alkyl;
- R⁴: Wasserstoff; C₁-C₆-Alkoxy; C₁-C₄-Alkyl; oder Halogen;
- R⁵: C₁-C₆-Alkyl; C₂-C₆-Alkenyl; oder C₂-C₆-Alkinyl;
- p: 0 oder 2;
- R⁶: Wasserstoff; oder C₁-C₆-Alkyl;
- R⁷: Wasserstoff; C₁-C₆-Alkyl; C₁-C₆-Alkoxy-C₁-C₄-alkyl; Tetrahydrofuryl; C₁-C₄-Alkoxy-C₁-C₄-alkoxy-C₁-C₄-alkyl; C₁-C₆-Alkoxycarbonyl-C₁-C₄-alkyl; oder C₅-C₆-Cycloalkyl;
- R⁸: C₁-C₆-Alkyl; oder Phenyl;
- R⁹: C₁-C₆-Alkylcarbonyl; oder C₁-C₆-Alkoxycarbonyl-C₁-C₄-alkyl;
- R¹⁰: Wasserstoff; oder C₁-C₆-Alkyl;
- R¹¹: C₁-C₆-Alkoxy; C₅-C₆-Cycloalkyloxy; 1-Pyrrolidinyl; C₃-C₆-Alkenyloxy; C₃-C₆-Alkinyloxy; C₁-C₆-Alkylthio; C₁-C₆-Halogenalkoxy; C₁-C₄-Alkoxycarbonyl-C₁-C₄-alkoxy; α,α-Dimethylbenzylamino; -OC₂H₄S(O)₂-(C₁-C₆-Alkyl); -OC₂H₄S-(C₁-C₆-Alkyl); -OC₂H₄S(O)₂-(phenyl); -OC₂H₄S-(phenyl); 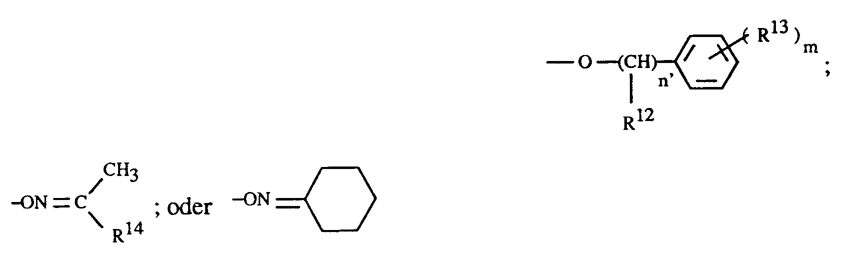
- n': 0; oder 1;
- R¹²: Halogen; oder C₁-C₄-Alkyl;
- R¹³: Phenyl; Benzyl; oder Methoxy-C₁-C₄-alkyl;
- R¹⁴: Styryl; Cyan-C₁-C₄-alkyl; Tetrahydrofuran-2-yl, Thienyl oder Pyridin-2-yl;
- X: Sauerstoff; oder Schwefel;
- X⁵: Sauerstoff; oder Schwefel;
- m: 0; 1; 2; oder 3;
und
- n: 0; 1; 2; oder 3;
bedeutet.

In den obigen Definitionen ist unter Halogen, Fluor, Chlor, Brom und Jod, vorzugsweise Fluor, Chlor und Brom zu verstehen.

Die in den Substituentendefinitionen vorkommenden Alkylgruppen können geradkettig oder verzweigt sein und stehen beispielsweise für Methyl, Ethyl, n-Propyl, iso-Propyl, n-Butyl, sek.-Butyl, iso-Butyl oder tert.-Butyl. Vorzugsweise besitzen die als oder in den Substituenten vorkommendenen Alkylgruppen 1-3 Kohlenstoffatome.

Unter Alkenyl ist geradkettiges oder verzweigtes Alkenyl zu verstehen, wie z.B. Vinyl, Allyl, Methallyl, 1-Methylvinyl oder But-2-en-1-yl. Bevorzugt sind Alkenylreste mit einer Kettenlänge von 2 bis 4 Kohlenstoffatomen.

Halogenalkyl ist beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl und 2,2,2-Trichlorethyl; vorzugsweise Trichlormethyl, Difluorchlormethyl, Trifluormethyl und Dichlorfluormethyl.

Die in den Substituentendefinitionen vorkommenden Alkoxygruppen können geradkettig oder verzweigt sein und stehen beispielsweise für Methoxy, Ethoxy, Propyloxy, i-Propyloxy, n-Butyloxy, iso-Butyloxy, sek.-Butyloxy und tert.-Butyloxy; vorzugsweise besitzen die als oder in den Substituenten vorkommendenen Alkoxygruppen 1-2 Kohlenstoffatome.vorzugsweise Methoxy und Ethoxy.

Halogenalkoxy ist z.B. Difluormethoxy, Trifluormethoxy, 2,2,2-Trifluorethoxy, 1,1,2,2-Tetrafluorethoxy, 2-Fluorethoxy, 2-Chlorethoxy und 2,2-Difluorethoxy; vorzugsweise Difluormethoxy, 2-Chlorethoxy und Trifluormethoxy.

Alkylthio ist z.B. Methylthio, Ethylthio, Propylthio, Isopropylthio, n-Butylthio, iso-Butylthio, sek.-Butylthio oder tert.-Butylthio, vorzugsweise Methylthio und Ethylthio.

Beispiele für Alkoxyalkoxy sind: Methoxymethoxy, Methoxyethoxy, Methoxypropyloxy, Ethoxymethoxy, Ethoxyethoxy sowie Propyloxymethoxy.

Unter Alkinyl ist geradkettiges oder verzweigtes Alkinyl zu verstehen, wie z.B. Ethinyl, But-2-in-1-yl.

Halogenalkenyl ist z.B. 3,3-Difluorbut-2-en-1-yl.

Halogenalkinyl ist z.B. 3.Chlorbut-2-in-1-yl.

Cycloalkyloxy ist z.B. Pentyloxy und Hexyloxy.

Unter Alkylphenyl, Halogenphenyl und Halogenphenoxy sind z.B. ein-, zwei-, drei- oder vierfach durch Methyl, Ethyl, n-Propyl, iso-Propyl, n-Butyl, sek.-Butyl, iso-Butyl oder tert.-Butyl substituierte Phenyl-Reste bzw. durch Fluor, Chlor, Brom und Jod substituierte Phenyl- und Phenoxy-Reste zu verstehen.

Alkoxyalkyl ist z.B. Methoxyethyl, Ethoxyethyl, Methoxypropyl und Ethoxypropyl.

Alkylsulfonyl ist z.B. Methylsulfonyl, Ethylsulfonyl, n-Propylsulfonyl, Isopropylsulfonyl, tert. Butylsulfonyl, Isobutylsulfonyl und n-Butylsulfonyl.

Alkylen ist z.B. -CH₂CH₂-, -CH₂CH₂CH₂-, -(CH₂)₄- und -(CH₂)₅-.

Alkoxycarbonyl ist z.B. Methoxycarbonyl, Ethoxycarbonyl, n-Propoxycarbonyl und Isopropoxycarbonyl.

Alkylsulfinyl ist z.B. Methylsulfinyl, Ethylsulfinyl, n-Propylsulfinyl und Isopropylsulfinyl.

Unter Alkenyloxy ist geradkettiges oder verzweigtes Alkenyloxy zu verstehen, wie z.B. Vinyloxy, Allyloxy, Methallyloxy, 1-Methylvinyloxy oder But-2-en-1-yloxy.

Halogenalkenyloxy ist z.B. 3,3-Difluorbut-2-en-1-yloxy.

Unter Alkinyloxy ist geradkettiges oder verzweigtes Alkinyloxy zu verstehen, wie z.B. Ethinyloxy, But-2-in-1-yloxy.

Alkoxycarbonylalkoxy ist z.B. Methoxycarbonylethoxy und Ethoxycarbonylethoxy.

Alkoxycarbonylalkenyloxy ist z.B. 4-Methoxycarbonyl-but-2-en-1-yloxy.

Alkoxyalkoxycarbonylalkyl ist z.B.2-Ethoxyethoxycarbonyleth-1-yl.

Cycloalkoxycarbonylalkoxy ist z.B. Cyclohexyloxycarbonylethoxy.

Cycloalkylmethoxy ist z.B. Cyclopentylmethoxy und Cyclohexylmethoxy.

Unter Alkenyloxyalkyl ist geradkettiges oder verzweigtes Alkenyloxyalkyl zu verstehen, wie z.B. Vinyloxyethyl, Allyloxymethyl, Methallyloxyethyl, 1-Methylvinyloxyethyl oder But-2-en-1-yloxyethyl.

Unter Alkinyloxyalkyl ist geradkettiges oder verzweigtes Alkinyloxyalkyl zu verstehen, wie z.B. Ethinyloxyethyl, But-2-in-1-yloxymethyl.

Alkylthiocarbonylalkoxy ist z.B. Ethylthiocarbonylethoxy.

Alkinyloxycarbonylalkoxy ist z.B. geradkettiges oder verzweigtes Alkinyloxycarbonylalkoxy zu verstehen, wie z.B. Ethinyloxycarbonylethoxy und But-2-in-1-yloxycarbonylethoxy.

Benzyloxycarbonylalkoxy ist z.B. Benzyloxycarbonylmethoxy und Benzyloxycarbonylethoxy.

Alkylbenzyloxy ist z.B. 4-Methylbenzyloxy, 2-Ethylbenzyloxy und 4-Isoproyplbenzyloxy.

Cyanoalkyl ist z.B. 2-Cyanoethyl, 3-Cyano-n-propyl und 3-Cyano-n-butyl.

Alkylcarbamoyloxy ist z.B. Methylcarbamoyloxy und Ethylcarbamoyloxy.

Die vorstehend genannten Verbindungen der Formeln I und II sind bekannt oder können analog zu bekannten Verfahren hergestellt werden. Insbesondere sind diese Verbindungen in den in der Beschreibungseinleitung genannten Patentpublikationen beschrieben.

Die Verbindungen der Formel I, welche der Formel 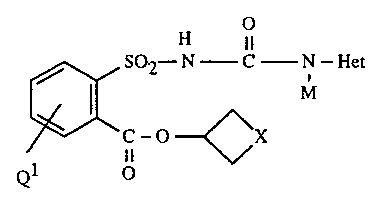
entsprechen, können z.B. hergestellt werden, indem man entweder
a) ein Phenylsulfonamid der Formel 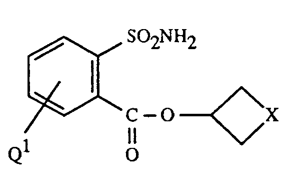 worin Q¹ und X die unter Formel I angegebenen Bedeutungen haben, in Gegenwart einer Base mit einem N-Pyrimidinyl-, oder N-Triazinylcarbamat der Formel 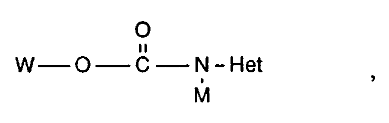 worin W gegebenenfalls substituiertes Phenyl und M und Het die unter Formel I angegebenen Bedeutungen haben, umsetzt, oder
b) ein Sulfonylcarbamat der Formel 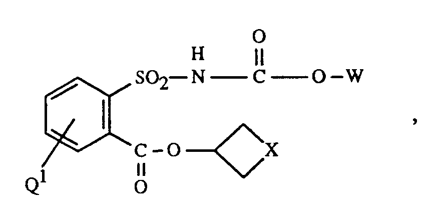 worin W, X und Q¹ die angegebenen Bedeutungen haben, in Gegenwart einer Base mit einem Amin der Formel

   H₂N-Het

   worin Het die unter Formel I angegebene Bedeutung hat, umsetzt, oder
c) ein Phenylsulfonamid der Formel 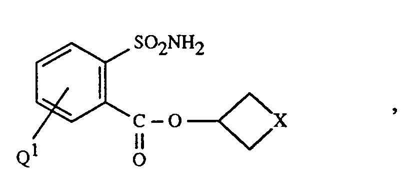 worin Q¹ und X die angegebenen Bedeutungen haben, in Gegenwart einer Base mit einem N-Pyrimidinyl- oder N-Triazinylisocyanat oder der Formel

   O=C=N-Het

   worin Het die unter Formel I angegebene Bedeutung hat, umsetzt.

Die Umsetzungen zu Verbindungen der Formel I werden vorteilhafterweise in aprotischen, inerten organischen Lösungsmitteln vorgenommen. Solche Lösungsmittel sind Kohlenwasserstoffe wie Benzol, Toluol, Xylol oder Cyclohexan, chlorierte Kohlenwasserstoffe wie Dichlormethan, Trichlormethan, Tetrachlormethan oder Chlorbenzol, Ether wie Diethylether, Ethylenglykoldimethylether, Diethylenglykoldimethylether, Tetrahydrofuran oder Dioxan, Nitrile wie Acetonitril oder Propionitril, Amide wie Dimethylformamid, Diethylformamid oder N-Methylpyrrolidinon. Die Reaktionstemperaturen liegen vorzugsweise zwischen -20° und +120°C.
Die Umsetzungen verlaufen im allgemeinen leicht exotherm und können bei Raumtemperatur durchgeführt werden. Zwecks Abkürzung der Reaktionszeit oder auch zum Einleiten der Umsetzung wird zweckdienlich für kurze Zeit bis zum Siedepunkt des Reaktionsgemisches aufgewärmt. Die Reaktionszeiten können ebenfalls durch Zugabe einiger Tropfen Base als Reaktionskatalysator verkürzt werden. Als Basen sind insbesondere tertiäre Amine wie Trimethylamin, Triethylamin, Chinuclidin, 1,4-Diazabicyclo-(2.2.2)-octan, 1,5-Diazabicyclo(4.3.0)non-5-en oder 1,5-Diazabicyclo(5.4.0)undec-7-en geeignet. Als Basen können aber auch anorganische Basen wie Hydride wie Natrium- oder Calciumhydrid, Hydroxide wie Natrium-und Kaliumhydroxid, Carbonate wie Natrium- und Kaliumcarbonat oder Hydrogencarbonate wie Kalium- und Natriumhydrogencarbonat verwendet werden.

Die Endprodukte der Formel I können durch Einengen und/oder Verdampfen des Lösungsmittels isoliert und durch Umkristallisieren oder Zerreiben des festen Rückstandes in Lösungsmitteln, in denen sie sich nicht gut lösen, wie Ether, aromatischen Kohlenwasserstoffe oder chlorierten Kohlenwasserstoffe, gereinigt werden.

Die Phenylsulfonamide lassen sich aus den entsprechenden Phenylsulfochloriden der Formel 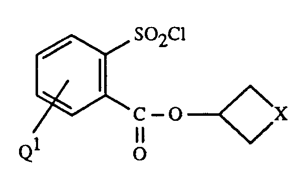
worin Q¹ und X die angegebenen Bedeutungen haben, durch Umsetzung mit Ammoniak herstellen. Derartige Umsetzungen sind bekannt und dem Fachmann geläufig.

Die Phenylsulfochloride werden hergestellt, indem man die entsprechend substituierten 2-Chlorsulfonyl-benzoylchloride (siehe z.B. D. Davis, Soc. 2042, 2044 (1932)) in Gegenwart einer Base mit einer Verbindung der Formel 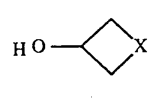
worin X die angegebene Bedeutung hat, umsetzt. Derartige Reaktionen sind bekannt und dem Fachmann geläufig.

Die Phenylsulfochloride, worin X Sauerstoff bedeutet, können auch hergestellt werden, indem man 2-Isopropylthiobenzoesäure (siehe z.B. H.Gilman, F.J.Webb, J. Am. Chem. Soc. 71, 4062-4063) mit Thionylchlorid zum entsprechenden Benzoesäurechlorid umsetzt, welches anschließend mit 3-Hydroxy-oxetan in Gegenwart einer Base zum entsprechenden 2-Isopropylthio-benzoesäureoxetan-3-ylester überführt wird, um schließlich durch Umsetzung mit Chlor das Sulfochlorid zu erhalten. Derartige Umsetzungen sind bekannt und dem Fachmann geläufig.

3-Hydroxyoxetan und 3-Hydroxythietan und deren Herstellung sind bekannt (siehe z.B. B.Lamm et al., Acta Chem. Scand. 28, 701 (1974) oder J. Org. Chem. 48, 2953-2956 (1983)).

Die Sulfonylcarbamate können beispielsweise durch Umsetzung der Sulfonamide mit Diphenylcarbamat in Gegenwart einer Base erhalten werden. Derartige Reaktionen sind bekannt und dem Fachmann geläufig.

Die Amine der Formel H₂N-Het werden in den europäischen Patentanmeldungen Nr. 0 007 687, 0 030 138, 0 073 562 und 0 126 711 sowie im USP 4,579,584 beschrieben.

Verfahren zur Herstellung von N-Pyrimidinyl- und N-Triazinylcarbamaten sind beispielsweise in EP-A-0101670 beschrieben.

Als Beispiel wird die Herstellung von
N-[2-(Oxetan-3-yloxycarbonyl)-phenylsulfonyl]-N'-(4-methoxy-6-methyl-1,3,5-triazinyl)-harnstoff beschrieben:

Eine Mischung von 15,7 g 2-Isopropylthio-benzoesäure und 15,7 g Thionylchlorid wird sehr langsam zum Rückfluß erwärmt und bis zur Beendigung der Gasentwicklung unter Rückfluß gehalten. Durch vollständiges Abdampfen des überschüssigen Thionylchlorides erhält man 17,3 g ungereinigtes 2-Isopropylthiobenzoesäurechlorid als gelbes Öl.

Eine Mischung von 4,44 g 3-Hydroxy-oxetan, 6,64 g Pyridin und 60 ml absolutem Toluol werden bei einer Temperatur von 15 bis 20°C tropfenweise mit einer Mischung von 12,9 g 2-Isopropylthio-benzoesäurechlorid und 20 ml absolutem Toluol versetzt. Die entstandene Suspension wird 2 Stunden bei einer Temperatur von 20-25°C und weitere 3 Stunden bei einer Temperatur von 40-45°C gerührt. Durch Versetzen des Reaktionsgemisches mit Wasser, Waschen der organischen Phase mit Wasser, Trocknen und Eindampfen erhält man 12,6 g 2-Isopropylthio-benzoesäureoxetan-3-ylester als hellgelbes Öl.

In eine Mischung von 12,6 g 2-Isopropylthio-benzoesäureoxetan-3-ylester, 12,9 g Natriumacetat und 100 ml 50 %ige Essigsäure wird bei einer Temperatur von - 5° bis 0°C während 1 Stunde 11,2 g Chlor eingeleitet und anschließend 15 Minuten bei einer Temperatur von 0°C gerührt. Durch Versetzen des Reaktionsgemisches mit Methylenchlorid, Waschen der organischen Phase mit Eiswasser und Trocknen erhält man eine Methylenchloridlösung von 2-(Oxetan-3-yloxycarbonyl)-phenylsulfochlorid, welches ohne weitere Reinigung eingesetzt wird.

In eine Methylenchloridlösung von 2-(Oxetan-3-yloxycarbonyl)-phenylsulfochlorid wird während 45 Minuten bei einer Temperatur von 0° bis 5°C 2,5 g Ammoniak eingeleitet. Durch Versetzen des Reaktionsgemisches mit Wasser, Waschen der organischen Phase mit Wasser, Trocknen, Eindampfen und Kristallisieren aus einem Methylenchlorid/Diethylether-Gemisch erhält man 6,7 g
2-(Oxetan-3-oxycarbonyl)-phenylsulfonamid mit einem Schmelzpunkt von 169 bis 170°C.

Eine Mischung von 2,57 g 2-(Oxetan-3-yloxycarbonyl)-phenylsulfonamid, 2,6 g 4-Methoxy-6-methyl-1,3,5-triazinyl-phenylcarbamat und 40 ml absolutem Dioxan werden bei 20-25°C tropfenweise mit einer Mischung von 1,52 g
Diazabicyclo-[5.4.0]-undec-7-en(1.5-5) und 5 ml absolutem Dioxan versetzt und anschließend 4 Stunden bei einer Temperatur von 20 bis 25°C gerührt. Durch Eingeben in Wasser, Zutropfen von 10 %iger Salzsäure bis zur Einstellung eines pH von 5, Extrahieren mit Essigester, Trocknen der organischen Phase, Eindampfen und Kristallisieren aus Essigsäureethylester erhält man 2,8 g
N-[2-(Oxetan-3-yloxycarbonyl)-phenylsulfonyl]-N'-(4-methoxy-6-methyl-1,3,5-triazinyl)-harnstoff mit einem Schmelzpunkt von 162 bis 163°C (Zers.).

Die Verbindungen der Formel II, insbesondere solche der Formel 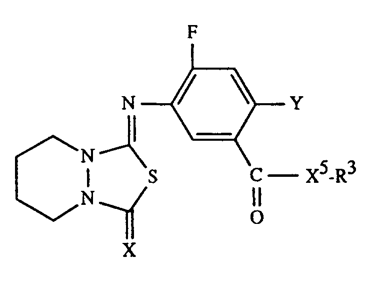
werden z.B. hergestellt, indem man ein Isothiocyanato-benzoesäureester der Formel 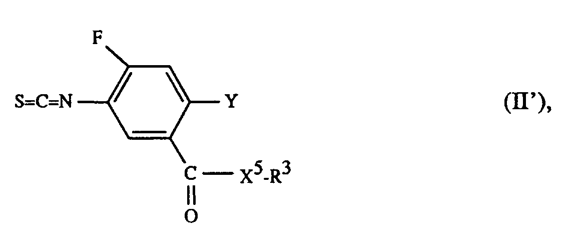
worin X, Y, X⁵ und R³ die unter der Formel II angegebene Bedeutung haben, mit Hexahydropyridazin in die Verbindung der Formel 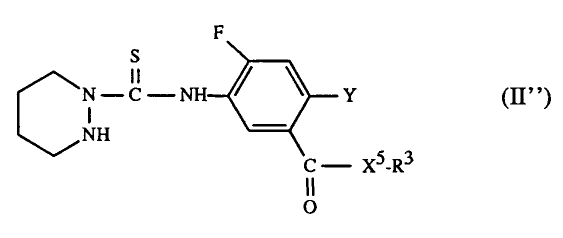
überführt und diese anschliessend mit einer Verbindung der Formel

CY'Cl₂ (II'''),

worin Y' für Sauerstoff oder Schwefel steht, in Gegenwart einer Base umsetzt.

Die Isothiocyanato-benzoesäureester können hergestellt werden, durch Umsetzung eines Anilins der Formel 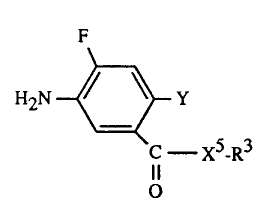
worin Y, X⁵ und R³ wie zuvor definiert sind, mit Thiophosgen.

Die Umsetzung der Benzoesäureester der Formel II' mit Hexahydropyridazin wird mit Vorteil in einem reaktionsinerten Lösungsmittel bei Temperaturen von -5°C bis zur Siedetemperatur des Lösungsmittels, insbesondere von 0 bis +50°C, besonders bevorzugt bei Raumtemperatur, durchgeführt. Geeignete Lösungsmittel für diese Reaktion sind beispielsweise Toluol, Xylol, Essigsäureethylester oder Acetonitril.

Die Umsetzung der Verbindung der Formel II'' mit der Verbindung der Formel II''' erfolgt vorteilhaft in einem reaktionsinerten Lösungsmittel bei niedrigen Temperaturen, vorzugsweise bei 0 bis +50°C, besonders bevorzugt bei 0 bis +15°C. Geeignete Basen für diese Reaktion sind beispielsweise Pyridin, Triethylamin oder N,N-Dimethylanilin.

Als Lösungsmittel eignen sich beispielsweise 1,2-Dichlorethan, Dichlormethan oder Toluol.

Als Beispiel ist die Herstellung von 9-[4-Chlor-2-fluor-5-(methoxycarbonylmethylthiocarbonyl)-phenylimino]-8-thia-1,6-diazabicyclo[4.3.0]nonan-7-on angegeben: 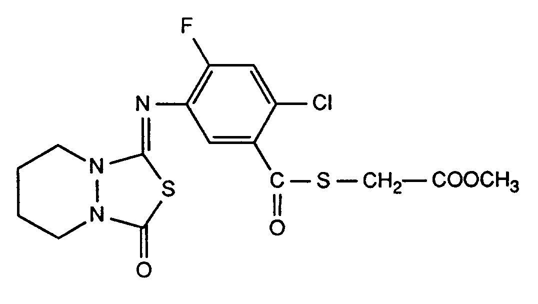
Zu einer Lösung von 20 ml Thioglycolsäuremethylester in 100 ml Essigsäureethylester gibt man unter Rühren bei Raumtemperatur 48 g 2-Chlor-4-fluor-5-nitro-benzoesäurechlorid tropfenweise hinzu. Nach 18-stündigem Rühren und anschliessendem Abdampfen der Lösung unter Vakuum erhält man 19 g 2-Chlor-4-fluor-5-nitro-thiobenzoesäure-(methoxycarbonylmethyl)-ester in Form eines Öles mit n_{D}²³: 1,5709.

10,4 g deserhaltenen 2-Chlor-4-fluor-5-nitro-thiobenzoesäure-(methoxycarbonylmethyl)-esters werden in 150 ml Tetrahydrofuran bei einer Temperatur von 20-25°C in Gegenwart von 2 g Raney-Nickel-Katalysator unter Normaldruck mit Wasserstoff hydriert. Nachdem die stöchiometrische Menge Wasserstoff verbraucht worden ist, wird der Katalysator abgetrennt und die Lösung eingedampft. Man erhält 8,6 g 5-Amino-2-chlor-4-fluor-thiobenzoesäure-(methoxycarbonylmethyl)-ester mit einem Schmelzpunkt von +88 bis +89°C.

Zu einer Suspension von 6 g Calciumcarbonat, 4 ml Thiophosgen, 20 ml Dichlormethan und 20 ml Wasser tropft man eine Lösung von 3,8 g deserhaltenen 5-Amino-2-chlor-4-fluor-thiobenzoesäure-(methoxycarbonylmethyl)-esters in 100 ml Dichlormethan bei 25-30°C hinzu. Nach Beendigung der Kohlendioxydentwicklung lässt man 18 Stunden lang bei Raumtemperatur weiterrühren. Nach Filtration und Waschen mit Wasser trennt man die organische Phase ab, trocknet sie über Natriumsulfat und dampft anschliessend ein. Man erhält 4,8 g 2-Chlor-4-fluor-5-isothiocyanato-thiobenzoesäure-(methoxycarbonylmethyl)-esters in Form eines Öles, das ohne weitere Reinigung im nachfolgenden Reaktionsschritt eingesetzt wird.

Zu einer Lösung von 1,4 g Hexahydropyridazin in 20 ml Toluol tropft man unter Rühren bei 20-25°C eine Lösung von 4,8 g deserhaltenen 2-Chlor-4-fluor-5-isothiocyanato-thiobenzoesäure-(methoxycarbonylmethyl)-ester in 50 ml Toluol hinzu. Anschliessend wird weitere 8 Stunden bei Raumtemperatur gerührt Nach dem Eindampfen im Vakuum erhält man 4,4 g 2-Chlor-4-fluor-5-(1-hexahydropridazinyl-thiocarbonylamino)-thiobenzoesäure-(methoxycarbonylmethyl)-ester in harziger Form.

Zu einer Losung von 4,4 g des erhaltenen 2-Chlor-4-fluor-5-(1-hexahydropyridazinyl-thiocarbonylamino)-thiobenzoesäure-(methoxycarbonylmethyl)-esters und 5 ml Pyridin in 10 ml Dichlormethantropft man unter Rühren bei einer Temperatur von 0°C 8 ml 20%ige toluolische Lösung von Phosgen hinzu. Anschliessend wird weitere 2 Stunden gerührt und dann das Reaktionsgemisch in Eis/Wasser gegossen. Die organische Phase wird abgetrennt und über Natriumsulfat getrocknet. Nach dem Eindampfen und anschliessender chromatographischer Reinigung des erhaltenen öligen Produktes erhält man 3 g 9-[4-Chlor-2-fluor-5-(methoxycarbonylmethylthiocarbonyl)-phenylimino]-8-thia-1,6-diazabicyclo[4.3.0]nonan-7-on mit n_{D}¹⁹ 1,5727.

Bevorzugt sind die Sulfonylharnstoffe der Formel I, 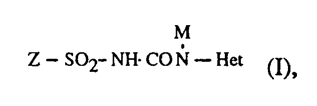
worin
- Z: einen Rest 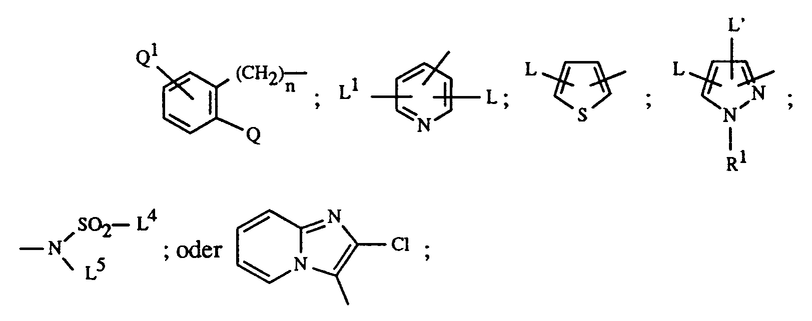 und
- Het: den Rest 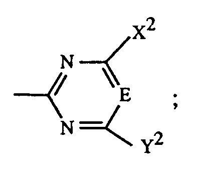 und
- M: Wasserstoff; oder C₁-C₄-Alkyl;
- Q: Halogen; Nitro; C₁-C₆-Alkyl; C₁-C₆-Halogenalkyl; C₂-C₆-Alkenyl; C₂-C₆-Halogenalkenyl; C₂-C₆-Alkinyl; C₃-C₆-Halogenalkinyl; -SO₂N(CH₃)₂; -COOR²; -COOR'; oder -(A)-R²
- n: 0; oder 1
- R¹: Wasserstoff; oder C₁-C₄-Alkyl;
- R²: C₁-C₅-Alkyl; C₂-C₅-Alkenyl; C₂-C₅-Alkinyl; C₁-C₅-Halogenalkyl; C₁-C₄-Alkoxy-C₁-C₄-alkyl; C₂-C₅-Halogenalkenyl; C₂-C₅-Halogenalkinyl;
- R': Oxetan-3-yl; oder Thietan-3-yl;
- A: Sauerstoff; Schwefel; -SO₂-; oder -O-SO₂-;
- Q¹: Wasserstoff; Nitro; Halogen; OCH₃; OCHF₂; CH₃; oder SCH₃;
- L: Halogen; Nitro; C₁-C₅-Alkyl; -A-R²; -COOR²; -CO-NH₂; -CO-NHC₁-C₄-Alkyl; oder -CO-N(C₁-C₄-Alkyl)₂;
- L': Wasserstoff; oder Chlor;
- L¹: Wasserstoff; Nitro; C₁-C₄-Alkyl; Halogen; C₁-C₄-Alkoxy; C₁-C₄-Halogenalkyl; oder C₁-C₄-Halogenalkoxy;
- L⁴: C₁-C₆-Alkyl;
- L⁵: C₁-C₆-Alkyl; oder
- L⁴ und L⁵: gemeinsam eine C₃-C₄-Alkylenbrücke;
- X²: C₁-C₄-Halogenalkoxy; C₁-C₄-Halogenalkyl; C₁-C₄-Alkoxy; C₁-C₄-Alkyl; Halogen; SCH₃; Cyclopropyl; Dimethylamino; Methylamino; oder C₁-C₄-Alkoxy-C₁-C₄-alkyl; und
- Y²: C₁-C₄-Halogenalkoxy; C₁-C₄-Halogenalkyl; C₁-C₄-Alkoxy; C₁-C₄-Alkyl; Cyclopropyl; Dimethylamino; Methylamino; oder C₁-C₄-Alkoxy-C₁-C₄-alkyl; und
- E: CH; oder N; bedeutet, sowie deren agrochemisch verträglichen Salze.

Bevorzugt sind auch die Sufonylharnstoffe der Formeln Ia, Ib, Ic, Id, Ie, If und Ig:

Sulfonylharnstoffe der Formel Ia, 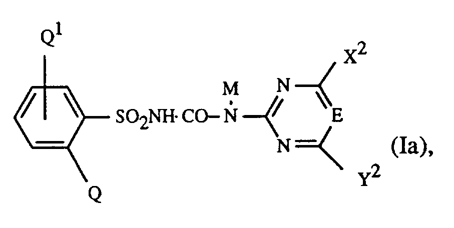
worin
- M: Wasserstoff; oder C₁-C₄-Alkyl;
- Q: Halogen; Nitro; C₁-C₆-Halogenalkyl; C₂-C₆-Alkenyl; C₂-C₆-Halogenalkenyl; C₂-C₆-Alkinyl; -SO₂N(CH₃)₂; -COOR²; -COOR'; oder -(A)-R²;
- A: Sauerstoff; Schwefel; oder -SO₂-;
- R²: C₁-C₅-Alkyl; C₃-C₆-Alkenyl; C₃-C₆-Alkinyl; C₁-C₅-Halogenalkyl; C₁-C₄-Alkoxy-C₁-C₄-alkyl; C₂-C₅-Halogenalkenyl; oder C₂-C₅-Halogenalkinyl;
- R': Oxetan-3-yl; Thietan-3-yl;
- Q¹: Wasserstoff; Nitro; Halogen; OCH₃; OCHF₂; CH₃; oder SCH₃;
- X²: C₁-C₄-Halogenalkoxy; C₁-C₄-Halogenalkyl; C₁-C₄-Alkoxy; C₁-C₄-Alkyl; Halogen; SCH₃; Cyclopropyl; Dimethylamino; Methylamino; oder C₁-C₄-Alkoxy-C₁-C₄-alkyl;
- Y²: C₁-C₄-Halogenalkoxy; C₁-C₄-Halogenalkyl; C₁-C₄-Alkoxy; C₁-C₄-Alkyl; Cyclopropyl; Dimethylamino; Methylamino; oder C₁-C₄-Alkoxy-C₁-C₄-alkyl; und
- E: CH; oder N;
bedeutet, sowie deren agrochemisch verträglichen Salze.

Besonders bevorzugt sind die Sulfonylharnstoffe der Formel Ia, worin
- M: Wasserstoff; oder Methyl;
- Q: C₁-C₆-Halogenalkyl, insbesondere C₁-C₆-FIuoralkyl; C₂-C₆-Halogenalkenyl, insbesondere C₂-C₆-FIuoralkenyl; -(A)-R²; -COOR'; oder -COOR²;
- A: Sauerstoff; oder Schwefel;
- R²: C₁-C₆-Halogenalkyl, insbesondere C₁-C₆-Fluoralkyl oder C₁-C₆-Chloralkyl; C₁-C₂-Alkoxy-C₁-C₃-alkyl; oder C₁-C₂-Alkyl;
- R': Oxetan-3-yl; oder Thietan-3-yl;
- E: N; oder CH;
- Q¹: Wasserstoff; und
- X² und Y²: unabhängig voneinander C₁-C₄-Alkyl, insbesondere Methyl; C₁-C₄-Alkoxy, insbesondere Methoxy; C₁-C₄-Halogenalkoxy, insbesondere C₁-C₂-Fluoralkoxy; oder Halogen, insbesondere Chlor; bedeutet.

Sulfonylharnstoffe der Formel Ib, 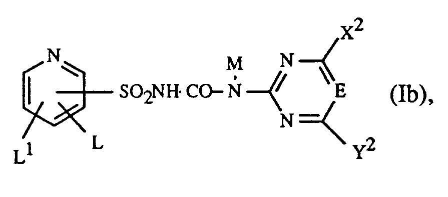
worin
- M: Wasserstoff; oder C₁-C₄-Alkyl;
- L: Halogen; Nitro; C₁-C₅-Alkyl; -A-R²; -COOR²; -NH(C₁-C₄-alkyl); oder -N(C₁-C₄-alkyl)₂; -CO-NH₂; -CO-NHC₁-C₄-Alkyl; oder -CO-N(C₁-C₄-Alkyl)₂;
- L¹: Wasserstoff; Nitro; C₁-C₄-Alkyl: Halogen; C₁-C₄-Alkoxy; C₁-C₄-Halogenalkyl: oder C₁-C₄-Halogenalkoxy;
- X²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
- Y²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl:
- A: Sauerstoff; Schwefel; oder -SO₂-;
- R²: C₁-C₅-Alkyl; C₃-C₆-Alkenyl; C₃-C₆-Alkinyl: C₁-C₅-Halogenalkyl; C₁-C₄-Alkoxy-C₁-C₄-alkyl: C₂-C₅-Halogenalkenyl; oder C₂-C₅-Halogenalkinyl:
- E: CH; oder N;
bedeutet, sowie deren agrochemisch verträglichen Salze.

Insbesondere betrifft die Erfindung auch die Verbindungen der Formel Ib' oder Ib'' 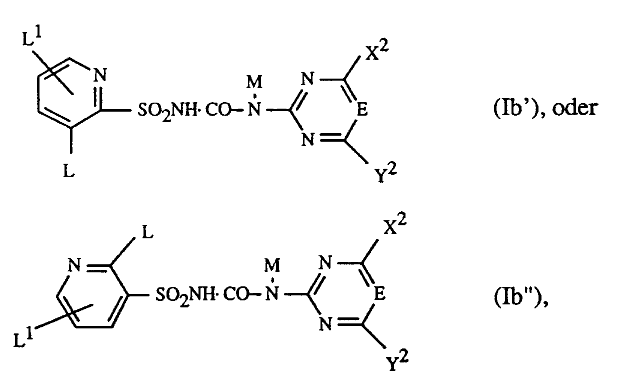
worin die Substituenten L, L¹, M, X², Y² und E wie zuvor definiert sind.

Sulfonylharnstoffe der Formel Ic, 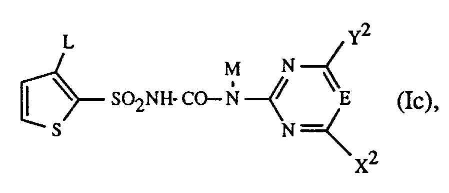
worin
- L: Halogen; Nitro; C₁-C₅-Alkyl; C₁-C₅-Alkylsulfonyl; -COOR²; -CO-NH₂; -CO-NHC₁-C₄-Alkyl; oder -CO-N(C₁-C₄-Alkyl)₂;
- R²: C₁-C₅-Alkyl; C₁-C₅-Halogenalkyl; C₂-C₆-Alkenyl; C₂-C₆-Halogenalkenyl; C₂-C₆-Alkinyl; C₃-C₆-Halogenalkinyl; oder C₁-C₄-Alkoxy-C₁-C₄-alkyl;
- X²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
- Y²: C₁-C₄-Halogenalkoxy; C₁-C₄-Halogenalkyl; C₁-C₄-Alkoxy; C₁-C₄-Alkyl; Cyclopropyl; Dimethylamino; Methylamino; oder C₁-C₄-Alkoxy-C₁-C₄-alkyl; und
- E: CH; oder N;
bedeutet, sowie deren agrochemisch verträglichen Salze.

Sulfonylharnstoffe der Formel Id 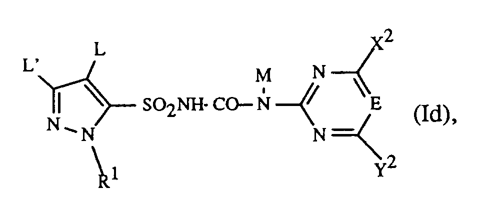
worin
- M: Wasserstoff; oder C₁-C₄-Alkyl;
- L: C₁-C₅-Alkyl; C₁-C₅-Alkylsulfonyl; -COOR²; -CO-NH₂; -CO-NHC₁-C₄-Alkyl; oder -CO-N(C₁-C₄-Alkyl)₂;
- L': Wasserstoff; oder Chlor;
- R¹: Wasserstoff; C₁-C₄-Alkyl; oder Pyridyl;
- R²: C₁-C₅-Alkyl; C₁-C₅-Halogenalkyl; C₁-C₄-Alkoxy-C₁-C₄-alkyl; C₃-C₆-Halogenalkenyl; oder C₃-C₆-Halogenalkinyl;
- X²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
- Y²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl; und
- E: CH; oder N;
bedeutet, sowie deren agrochemisch verträglichen Salze.

Sulfonylharnstoffe der Formel Ie 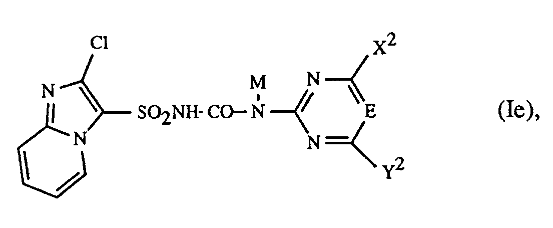
worin
- X²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
- Y²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl; und
- E: CH; oder N;
bedeutet, sowie deren agrochemisch verträglichen Salze.

Sulfonylharnstoffe der Formel If 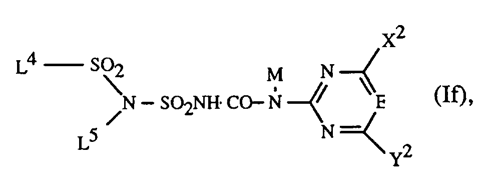
worin
- L⁴: C₁-C₆-Alkyl;
- L⁵: C₁-C₆-Alkyl; oder
- L⁴ und L⁵: gemeinsam eine C₂-C₆-Alkylenbrücke;
- X²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
- Y²: C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl; und
- E: CH; oder N;
bedeutet, sowie deren agrochemisch verträglichen Salze.

Sulfonylharnstoffe der Formel 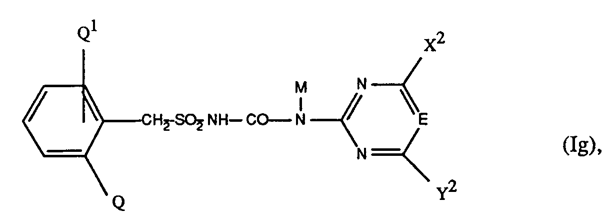
worin Q¹, Q, M, E, X² und Y² die unter Formel Ia angegebenen Bedeutungen haben. Insbesondere bevorzugt ist die Verbindung der Formel Ig, worin Q¹ Wasserstoff Q COOCH₃, M Wasserstoff, E CH, und X² und Y² je Methoxy bedeuten (Verbindung No. 0.001).

Als besonders bevorzugte Einzelverbindungen sind die Verbindungen der Tabellen 1 bis 8 zu nennen:

Als Verbindungen der Formel Ia

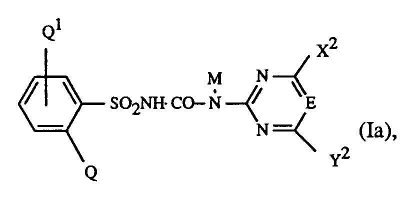

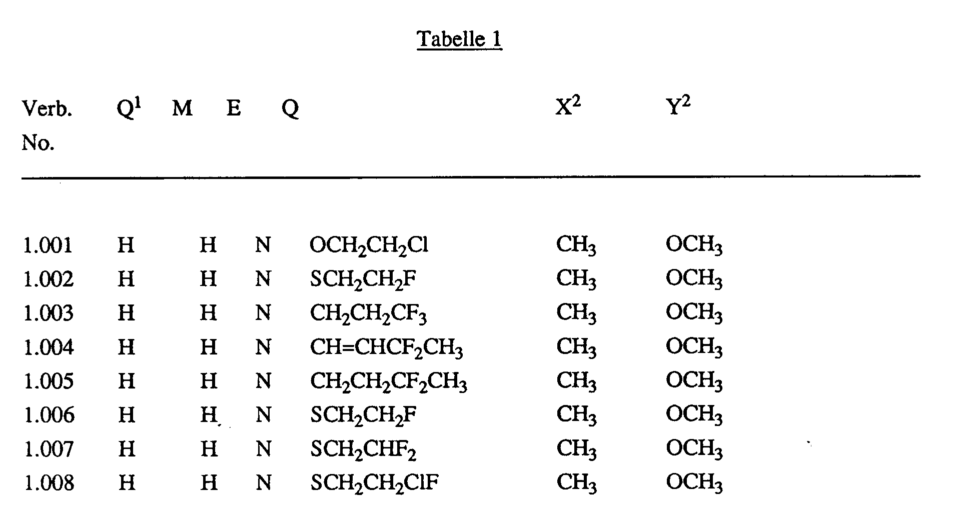

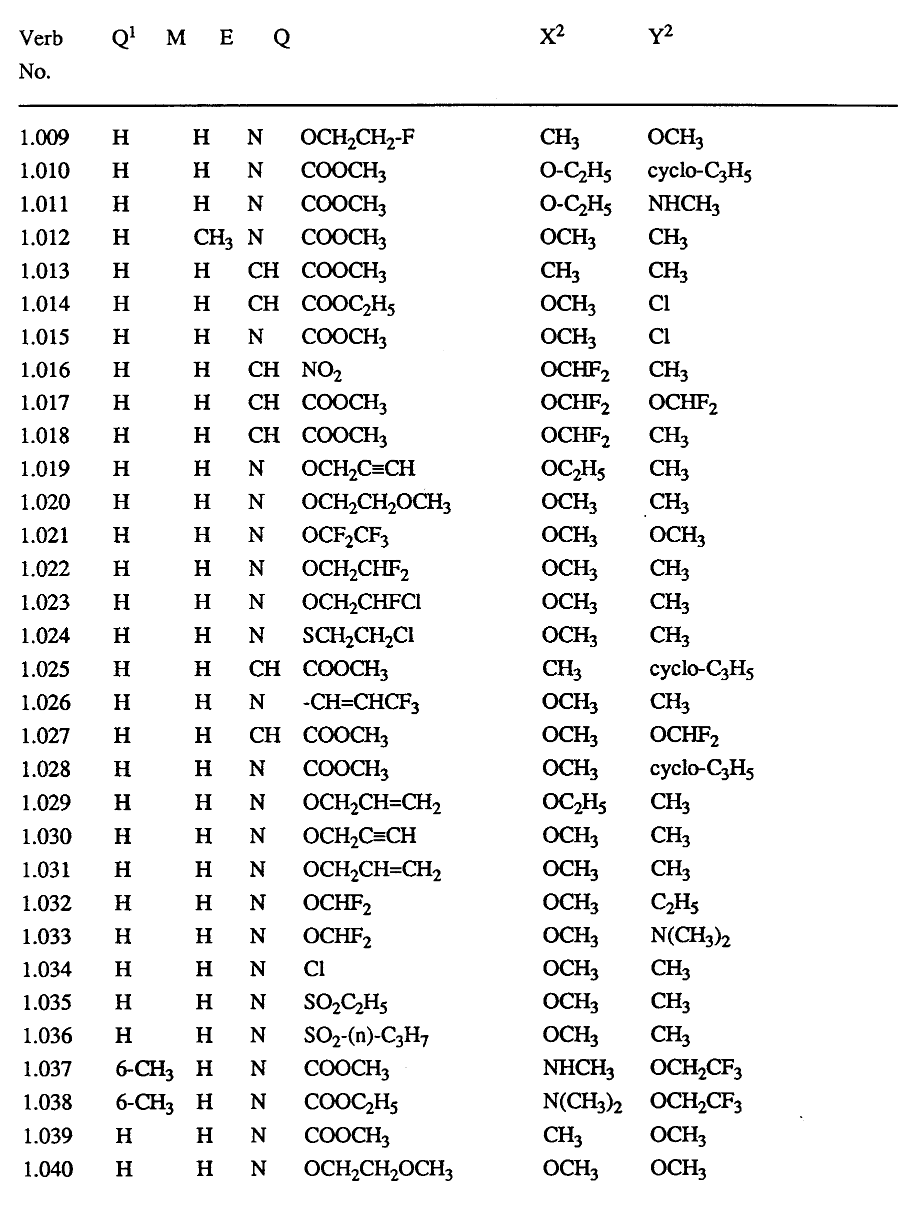

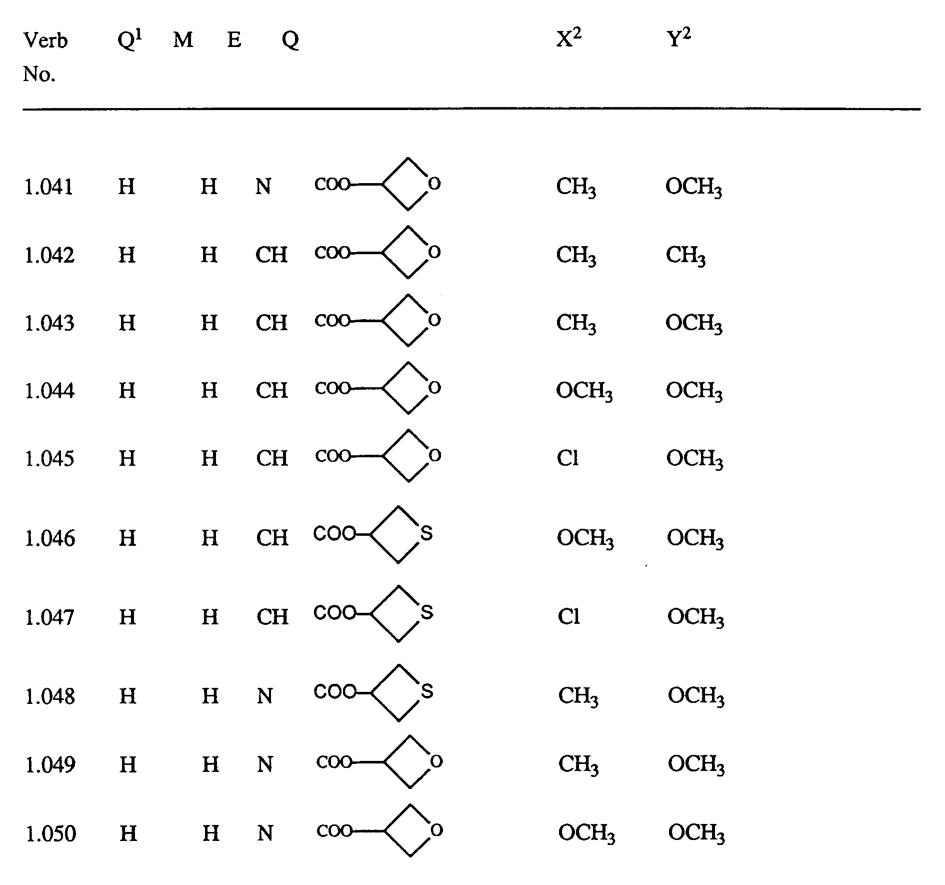

Als Verbindung der Formel Ib

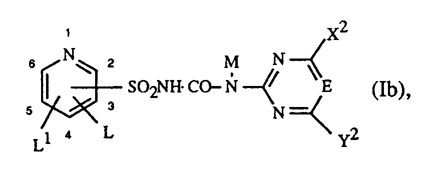

**Tabelle 2**

| Verb. No. | M | E | L | L¹ | X² | Y² | Pos. Pyridin¹⁾ |
|---|---|---|---|---|---|---|---|
| 2.001 | H | CH | 3-CON(CH₃)₂ | H | OCH₃ | OCH₃ | 2 |
| 2.002 | H | CH | 3-CF₃ | H | OCH₃ | OCH₃ | 2 |
| 2.003 | H | CH | 3-SO₂C₂H₅ | H | OCH₃ | OCH₃ | 2 |
| 2.004 | H | CH | 3-SO₂-(n)-C₃H₇ | H | OCH₃ | OCH₃ | 2 |
| 2.005 | H | CH | 3-SO₂-(i)-C₃H₇ | H | OCH₃ | OCH₃ | 2 |
| 2.006 | H | CH | 2-SO₂CH₂CH₂OCH₃ | H | OCH₃ | OCH₃ | 3 |
| 2.007 | H | CH | 3-SO₂CH₂CH₂OCH₃ | H | OCH₃ | OCH₃ | 2 |
| 2.008 | H | CH | 3-SO₂CH₂CHCH₂ | H | OCH₃ | OCH₃ | 2 |
| 2.009 | H | N | 2-Cl | H | OCH₃ | CH₃ | 3 |
| 2.010 | H | CH | 3-Cl | H | OCH₃ | OCH₃ | 2 |
| 2.011 | H | N | 3-Cl | H | OCH₃ | CH₃ | 2 |
| 2.012 | H | CH | 3-COOCH₃ | 6-CF₃CH₂O | OCH₃ | OCH₃ | 2 |

| | | | | | | | |
|---|---|---|---|---|---|---|---|
| ¹⁾ Position der Verknüpfung des Sulfonylharnstoffrests am Pyridinsystem | | | | | | | |

Als Verbindung der Formel Ic

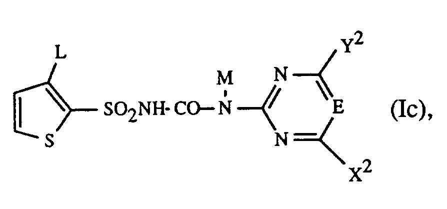

**Tabelle 3**

| Verb. No. | M | L | E | X² | Y² |
|---|---|---|---|---|---|
| 3.001 | H | COOCH₃ | N | CH₃ | OCH₃ |
| 3.002 | H | COOCH₃ | CH | OCH₂CF₃ | OCH₃ |

Als Verbindung der Formel Id

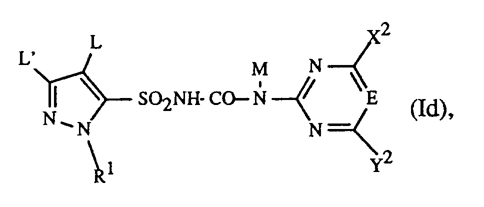

**Tabelle 4**

| Verb. No. | M | R¹ | L' | L | E | X² | Y² |
|---|---|---|---|---|---|---|---|
| 4.001 | H | CH₃ | H | COOC₂H₅ | CH | OCH₃ | OCH₃ |
| 4.002 | H | Pyridin-2-yl | H | COOC₂H₅ | CH | OCH₃ | OCH₃ |
| 4.003 | H | CH₃ | Cl | COOC₂H₅ | CH | OCH₃ | OCH₃ |

Als Verbindungen der Formel Ie

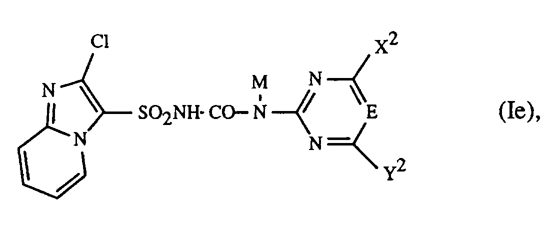

**Tabelle 5**

| Verb. No. | M | E | X² | Y² |
|---|---|---|---|---|
| 5.001 | H | N | CH₃ | O-CH₃ |
| 5.002 | H | CH | O-CH₃ | O-CH₃ |

Als Verbindungen der Formel If

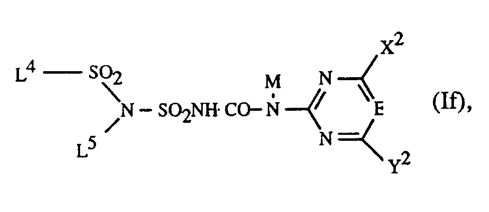

**Tabelle 6**

| Verb. No. | M | E | L⁴ | L⁵ | X² | Y² |
|---|---|---|---|---|---|---|
| 6.001 | H | CH | CH₃ | CH₃ | O-CH₃ | O-CH₃ |
| 6.002 | H | N | CH₃ | CH₃ | O-CH₃ | CH₃ |
| 6.003 | H | N | CH₃ | C₂H₅ | O-CH₃ | O-CH₃ |
| 6.004 | H | CH | -(CH₂)₃- | | O-CH₃ | O-CH₃ |
| 6.005 | H | N | -(CH₂)₃- | | O-CH₃ | CH₃ |
| 6.006 | H | CH | -(CH₂)₄- | | O-CH₃ | O-CH₃ |
| 6.007 | H | N | -(CH₂)₄- | | O-CH₃ | CH₃ |

Bevorzugt sind die Verbindungen der Formel II 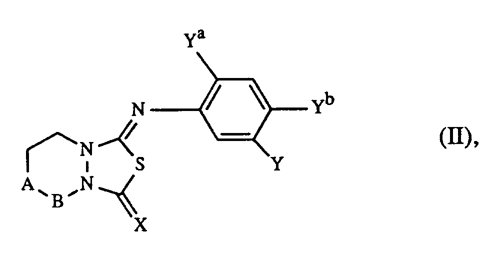
worin
- A-B: -CH₂-CH₂-; oder -CH=CH-;
- Y: Hydroxy; C₁-C₆-Alkyl; C₁-C₆-Alkoxy; C₁-C₆Halogenalkoxy; C₃-C₆-Alkenyloxy; C₂-C₆-Halogenalkenyloxy; C₃-C₆-Alkinyloxy; Phenoxy; C₅-C₆-Cycloalkyloxy; C₁-C₆-Alkoxycarbonyl-C₁-C₄-alkoxy; C₁-C₆Alkoxycarbonyl-C₂-C₄-alkenyloxy; C₁-C₆-Alkylthiocarbonyl-C₁-C₄-alkoxy; C₃-C₆-Alkinyloxycarbonyl-C₁-C₄-alkoxy; Benzyloxycarbonyl-C₁-C₄-alkoxy; Trifluoromethyl; Benzyloxy; Chlorbenzyloxy; C₁-C₆-Alkylbenzyloxy; C₂-C₆-Alkenyl; CyanoC₁-C₆alkyl; C₁-C₆-Alkylcarbamoyloxy; C₁-C₄-Alkoxy-C₁-C₄-alkyl; C₃-C₆-Alkinyloxy-C₁-C₄-alkyl; C₃-C₆-Alkenyloxy-C₁-C₄-alkyl; unsubstituiertes oder durch Halogen substituiertes C₅-C₆Cycloalkylmethoxy; C₁-C₆Alkoxy-C₁-C₄-alkoxy; Phenethyloxy; C₅-C₆-Cycloalkoxycarbonyl-C₁-C₄-alkoxy; Pyrrolidinocarbonyl; unsubstituiertes oder durch C₁-C₆-Alkyl substituiertes Phenylcarbonyl; -CO-X⁵-R³; 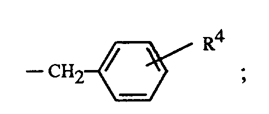 -S(O)ₚ-R⁵; -O-CH(R⁶)-CO-OR⁷; -N=C(CH₃)-R⁸; -NHR⁹; -S-CH(R¹⁰)-CO-R¹¹; oder -O-P(X⁵)(OC₂H₅)₂;
- Y^{a} und Y^{b}: unabahängig voneinander Wasserstoff; Fluor; Chlor; oder Brom; und
- R³ bis R¹¹, X, X⁵ und p: wie zuvor definiert sind.

Besonders bevorzugt sind die Verbindungen der Formel II 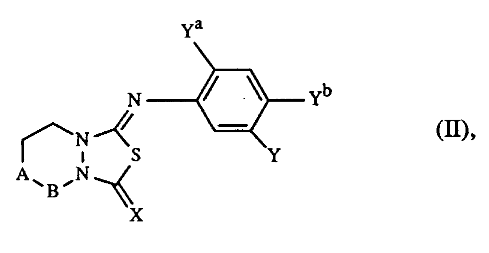
worin
- A-B: -CH₂-CH₂-; oder -CH=CH-;
- Y: C₁-C₆-Alkoxy; C₁-C₆Halogenalkoxy; C₃-C₆-Alkenyloxy; C₂-C₆-Halogenalkenyloxy; C₃-C₆-Alkinyloxy; C₅-C₆-Cycloalkyloxy; C₁-C₆-Alkoxycarbonyl-C₁-C₄-alkoxy; C₁-C₆Alkoxycarbonyl-C₂-C₄-alkenyloxy; C₁-C₆-Alkylthiocarbonyl-C₁-C₄-alkoxy: C₃-C₆-Alkinyloxycarbonyl-C₁-C₄-alkoxy; CyanoC₁-C₆alkyl; C₁-C₆-Alkylcarbamoyloxy; C₁-C₆-Alkoxy-C₁-C₄-alkoxy; Phenoxy; Benzyloxy; -S(O)ₚ-R⁵; -O-CH(R⁶)-CO-OR⁷; -CO-X⁵-R³; oder -S-CH(R¹⁰)-CO-R¹¹;
- Y^{a}: Wasserstoff; Fluor; oder Chlor;
- Y^{b}: Wasserstoff; Fluor; Chlor; oder Brom;
- R³: Wasserstoff; C₁-C₆-Alkyl; Phenyl; C₅-C₆-Cycloalkyl; C₁-C₆-Alkoxy-C₁-C₄-alkyl; C₁-C₆-Alkoxycarbonyl-C₁-C₄-alkyl; oder C₁-C₄-Alkoxy-C₁-C₄-alkoxycarbonyl-C₁-C₄-alkyl;
- R⁵: C₁-C₆-Alkyl; C₃-C₆-Alkenyl; oder C₃-C₆-Alkinyl;
- p: 0 oder 2;
- R⁶: Wasserstoff; oder C₁-C₆-Alkyl;
- R⁷: Wasserstoff; C₁-C₆-Alkyl; C₁-C₆-Alkoxy-C₁-C₄-alkyl; Tetrahydrofuryl; C₁-C₄-Alkoxy-C₁-C₄-alkoxy-C₁-C₄-alkyl; C₁-C₆-Alkoxycarbonyl-C₁-C₄-alkyl; oder C₅-C₆-Cycloalkyl;
- R¹⁰: Wasserstoff; oder C₁-C₆-Alkyl;
- R¹¹: C₁-C₆-Alkoxy; C₅-C₆-Cycloalkyloxy; 1-Pyrrolidinyl; C₃-C₆-Alkenyloxy; C₃-C₆-Alkinyloxy; C₁-C₆-Alkylthio; C₁-C₆-Halogenalkoxy; C₁-C₄-Alkoxycarbonyl-C₁-C₄-alkoxy; α,α-Dimethylbenzylamino; -OC₂H₄S(O)₂-(C₁-C₆-Alkyl): -OC₂H₄S-(C₁-C₆-Alkyl); -OC₂H₄S(O)₂-(Phenyl); -OC₂H₄S-(Phenyl); 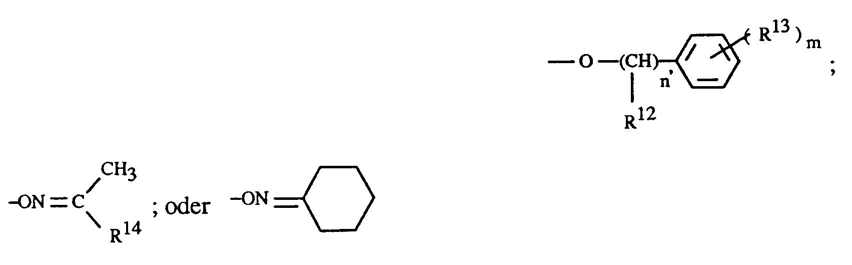
- m: 0; 1; 2; oder 3;
- n': 0; oder 1;
- R¹²: Halogen; oder C₁-C₄-Alkyl;
- R¹³: Phenyl; Benzyl; oder Methoxy-C₁-C₄-alkyl;
- R¹⁴: Styryl; Cyano-C₁-C₄-alkyl; Tetrahydrofuran-2-yl, Thienyl oder Pyridin-2-yl;
- X: Sauerstoff; oder Schwefel; und
- X⁵: Sauerstoff; oder Schwefel;
bedeutet.

Besonders hervorzuheben sind die Verbindungen der Formel IIa bis IId:
Verbindungen der Formel IIa 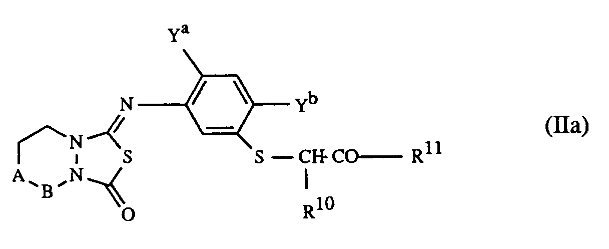
worin
- A-B, Y^{a}, Y^{b}, R¹⁰, und R¹¹: wie zuvor definiert sind.

Verbindungen der Formel IIb 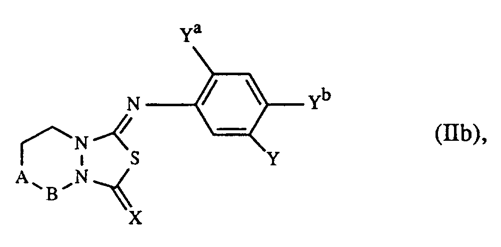
worin
- Y: C₁-C₆-Alkoxy; C₃-C₆-Alkenyloxy; C₃-C₆-Alkinyloxy; C₁-C₆-Alkoxycarbonyl-C₁-C₄-alkoxy; C₁-C₆-Alkylthiocarbonyl-C₁-C₄-alkoxy; C₃-C₆-Alkinyloxycarbonyl-C₁-C₄-alkoxy; C₁-C₆-Alkylthio; C₁-C₆-Alkylsulfonyl; C₃-C₆-Alkinylthio; C₃-C₆-Alkenylthio; C₅-C₆-Cycloalkoxy; Phenoxy; Benzyloxy; CyanoC₁-C₆alkyl; C₁-C₆-Alkoxy-C₁-C₄-alkoxy; und
- A-B, Y^{a}, und Y^{b}: wie zuvor definiert sind.

Verbindungen der Formel IIc 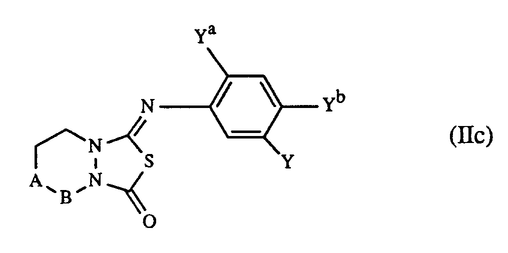
worin
- Y: -CO-X⁵-R³;
- R³: Wasserstoff; C₁-C₆-Alkyl; Phenyl; C₅-C₆-Cycloalkyl; C₁-C₆-Alkoxy-C₁-C₄-alkyl; C₃-C₆-Alkinyl; C₃-C₆-Alkenyl; Benzyl; C₁-C₆-Alkoxycarbonyl-C₁-C₄-alkyl; oder C₁-C₄-Alkoxy-C₁-C₄-alkoxycarbonyl-C₁-C₄-alkyl; und
- X⁵: Sauerstoff; oder Schwefel; und
- A-B, Y^{a}, und Y^{b}: wie zuvor definiert sind.

Verbindungen der Formel IId 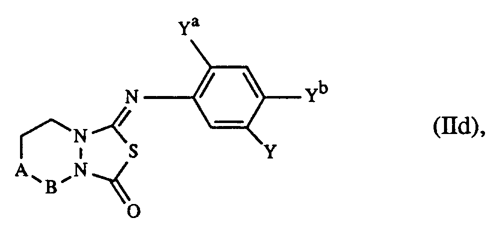
- Y: -O-CH(R⁶)-CO-OR⁷;
- R⁶: Wasserstoff; oder C₁-C₆-Alkyl;
- R⁷: Wasserstoff; C₁-C₆-Alkyl; C₃-C₆-Alkinyl; C₃-C₆-Alkenyl; C₁-C₆-Alkoxy-C₁-C₄-alkyl; Tetrahydrofuryl; C₁-C₄Alkoxy-C₁-C₄-alkoxy-C₁-C₄-alkyl; C₁-C₆-Alkoxycarbonyl-C₁-C₄-aIkyl; oder C₅-C₆-Cycloalkyl; und
- A-B, Y^{a}, und Y^{b}: wie zuvor definiert sind.

Insbesondere betrifft die Erfindung die Verbindungen der Formel II, und der Formeln IIa bis IId, worin
- A-B: -CH₂-CH₂-; bedeutet und
- Y, Y^{a}, Y^{b} und die Reste R¹⁰ und R¹¹: wie zuvor definiert sind.

Weiterhin betrifft die Erfindung die Verbindungen der Formel II, und der Formeln IIa bis IId, worin
- A-B: -CH=CH-: bedeutet und
- Y, Y^{a}, Y^{b} und die Reste R¹⁰ und R¹¹: wie zuvor definiert sind.

Besonders erwähnenswert sind auch die Verbindungen der Formel II, und der Formeln IIa bis IId, worin
- Y^{a}: Wasserstoff; oder Fluor; und
- Y^{b}: Chlor; oder Brom;
bedeutet.

Besonders hervorzuheben sind die Verbindungen der Formel IIa 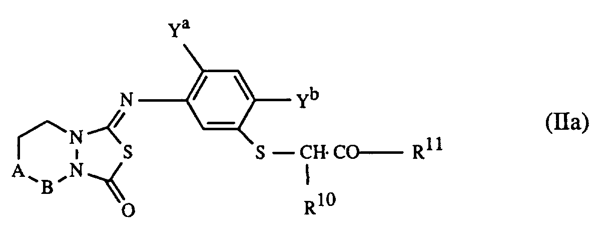
worin
- A-B: -CH₂-CH₂-;
- Y^{a}: Wasserstoff; oder Fluor;
- Y^{b}: Chlor; oder Brom;
- R¹⁰: Wasserstoff; oder C₁-C₄-Alkyl; und
- R¹¹: C₁-C₄-Alkoxy; C₅-C₆-Cycloalkyloxy; C₃-C₆-Alkenyloxy; C₃-C₆-Alkinyloxy; C₁-C₄-Alkylthio; oder C₁-C₄-Alkoxycarbonyl-C₁-C₄-alkoxy;
bedeutet.

Insbesondere betrifft die Erfindung die Kombination der besonders hervoergehobenen Verbindungen der Formel IIa mit den vorstehend genannten besonders bevorzugten Sulfonylharnstoffen der Formel Ia.

Als besonders bevorzugte Einzelverbindungen sind die Verbindungen der Tabellen 7 und 8 zu nennen:

Als Verbindungen der Formel IIa:

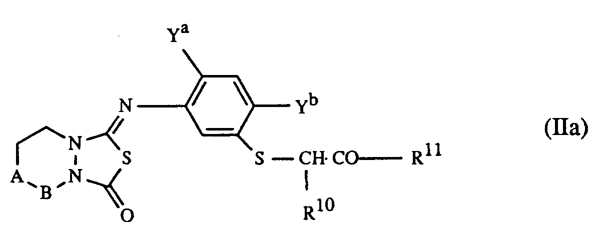

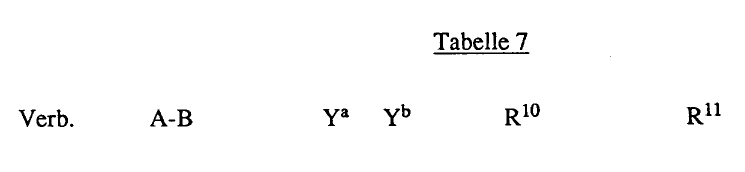

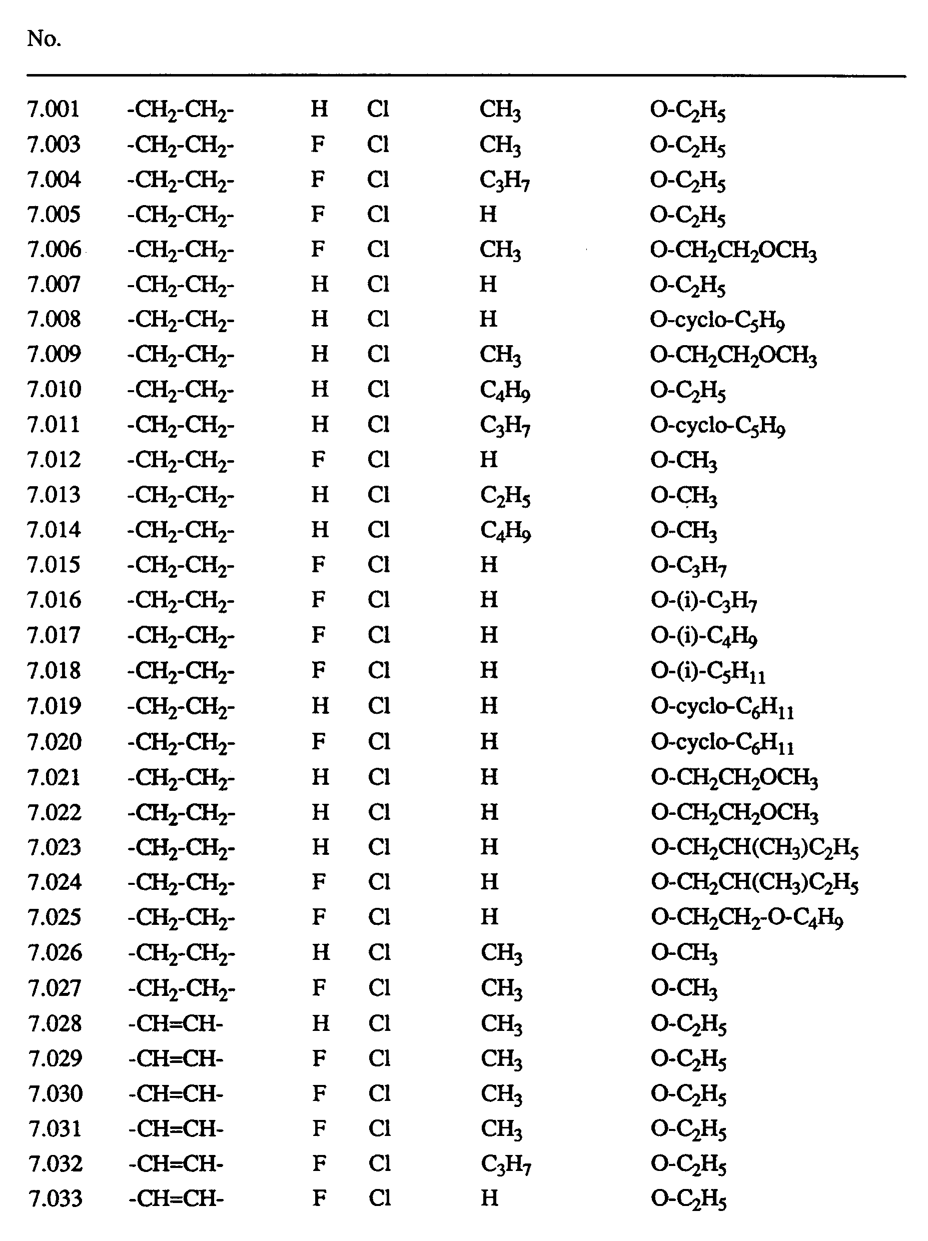

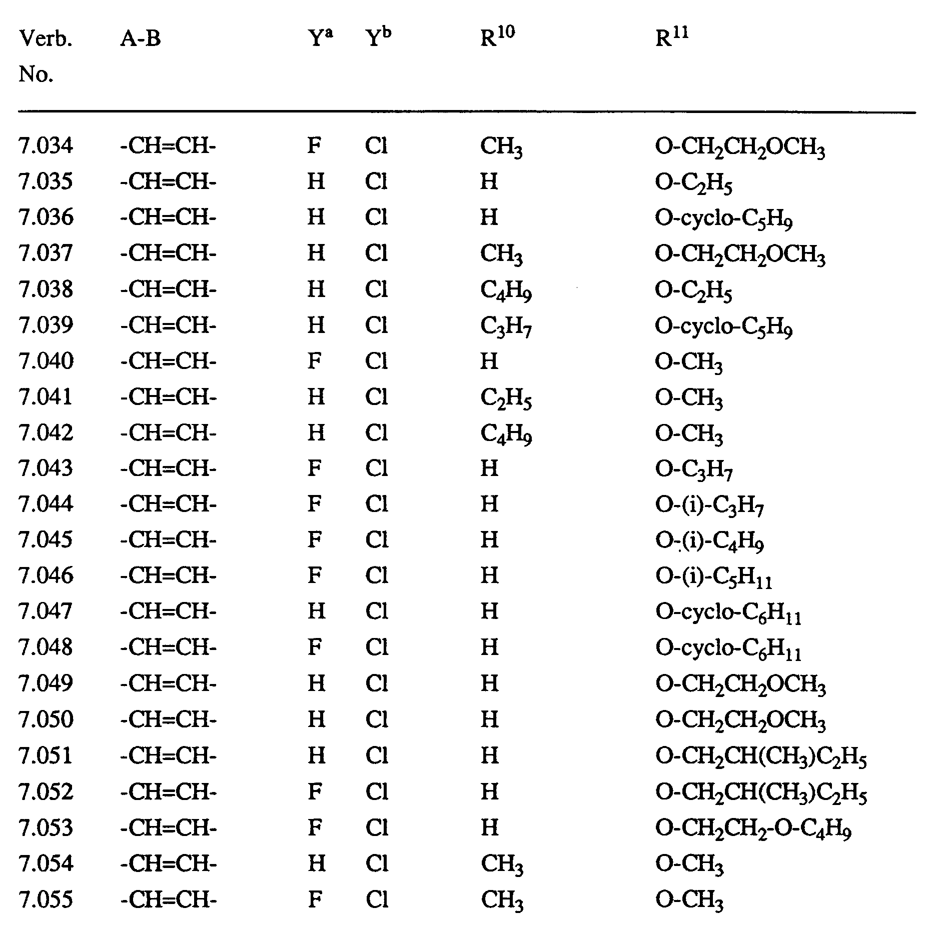

Als Verbindungen der Formel IIb - IId:

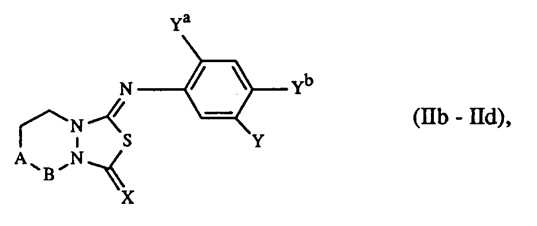

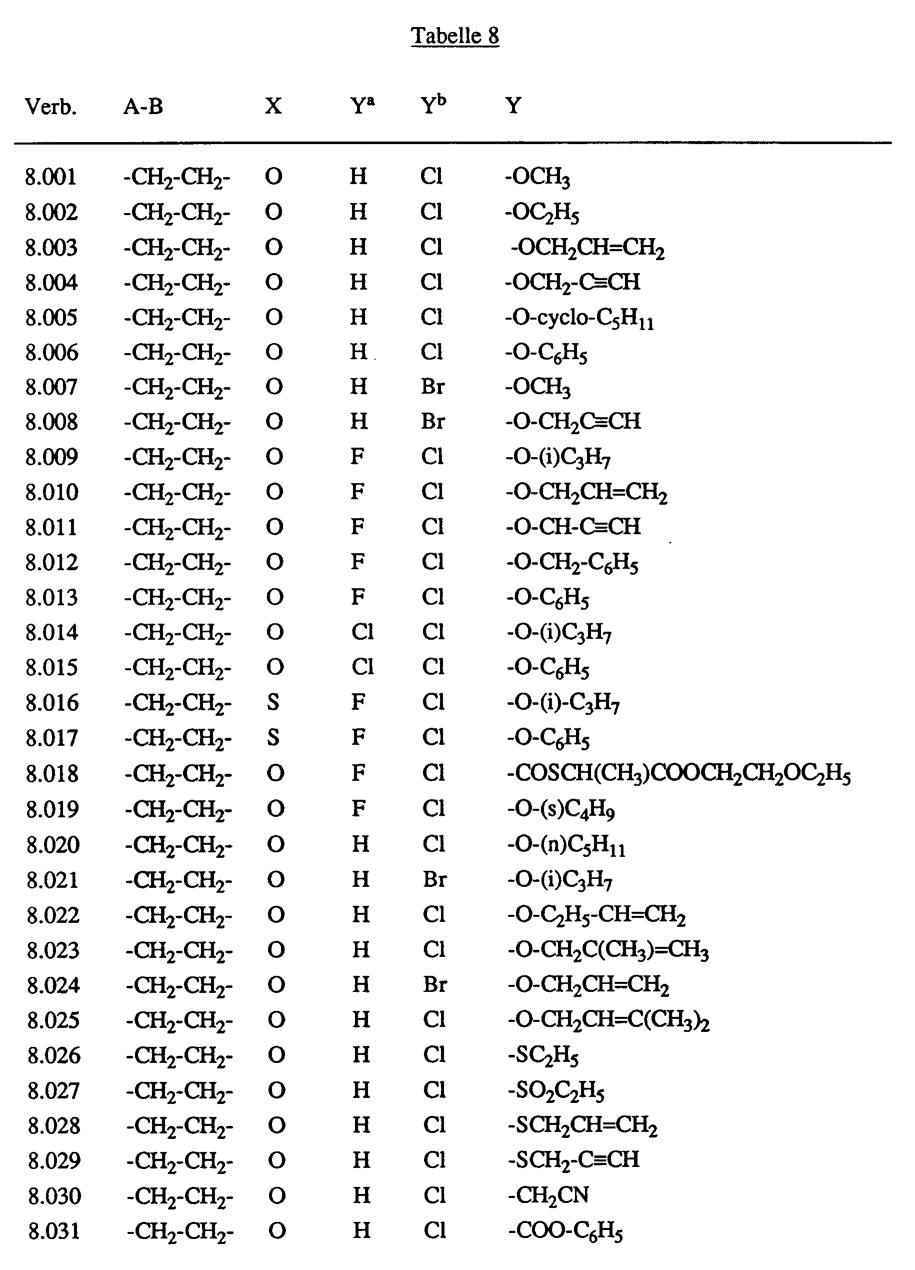

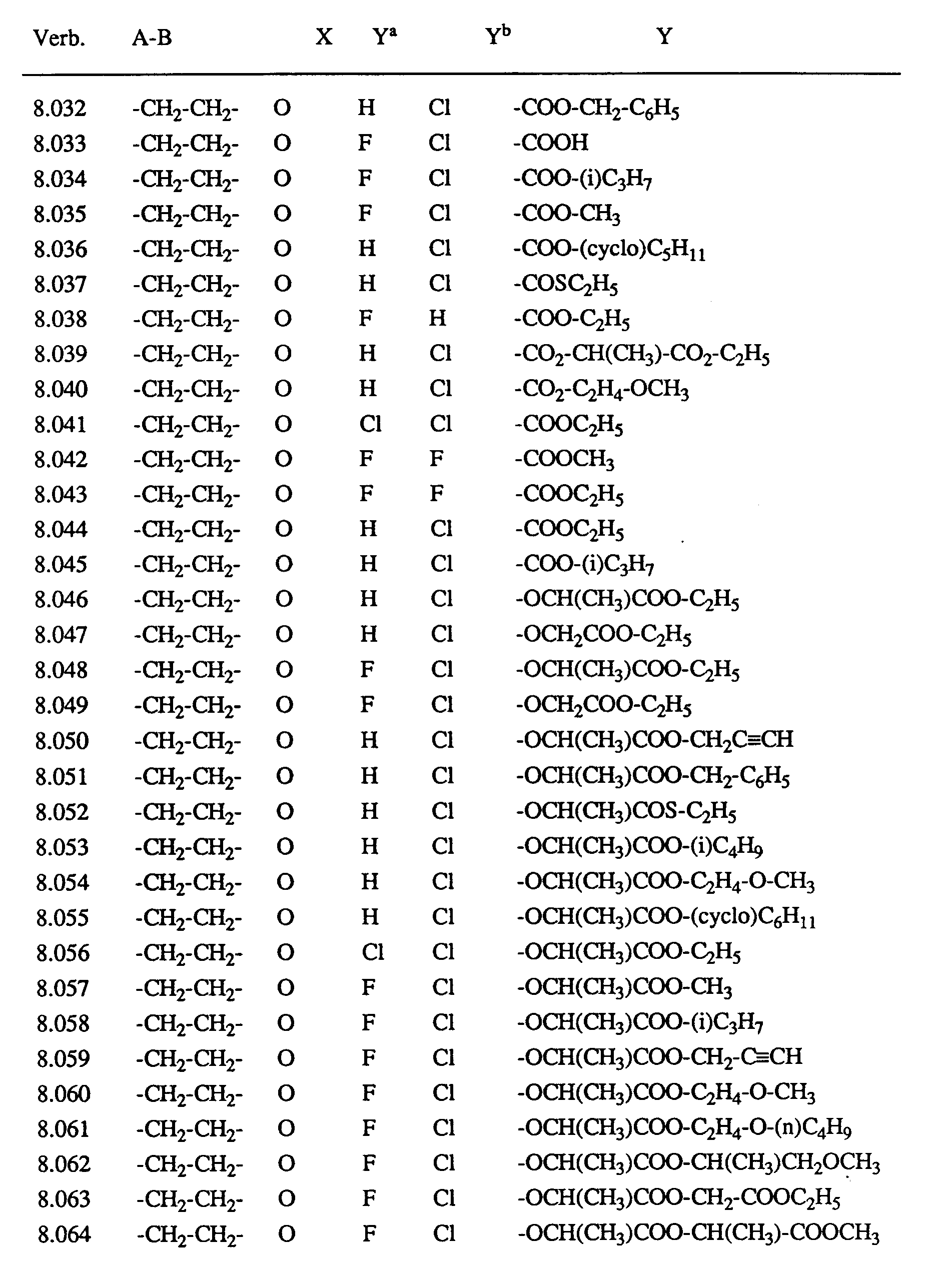

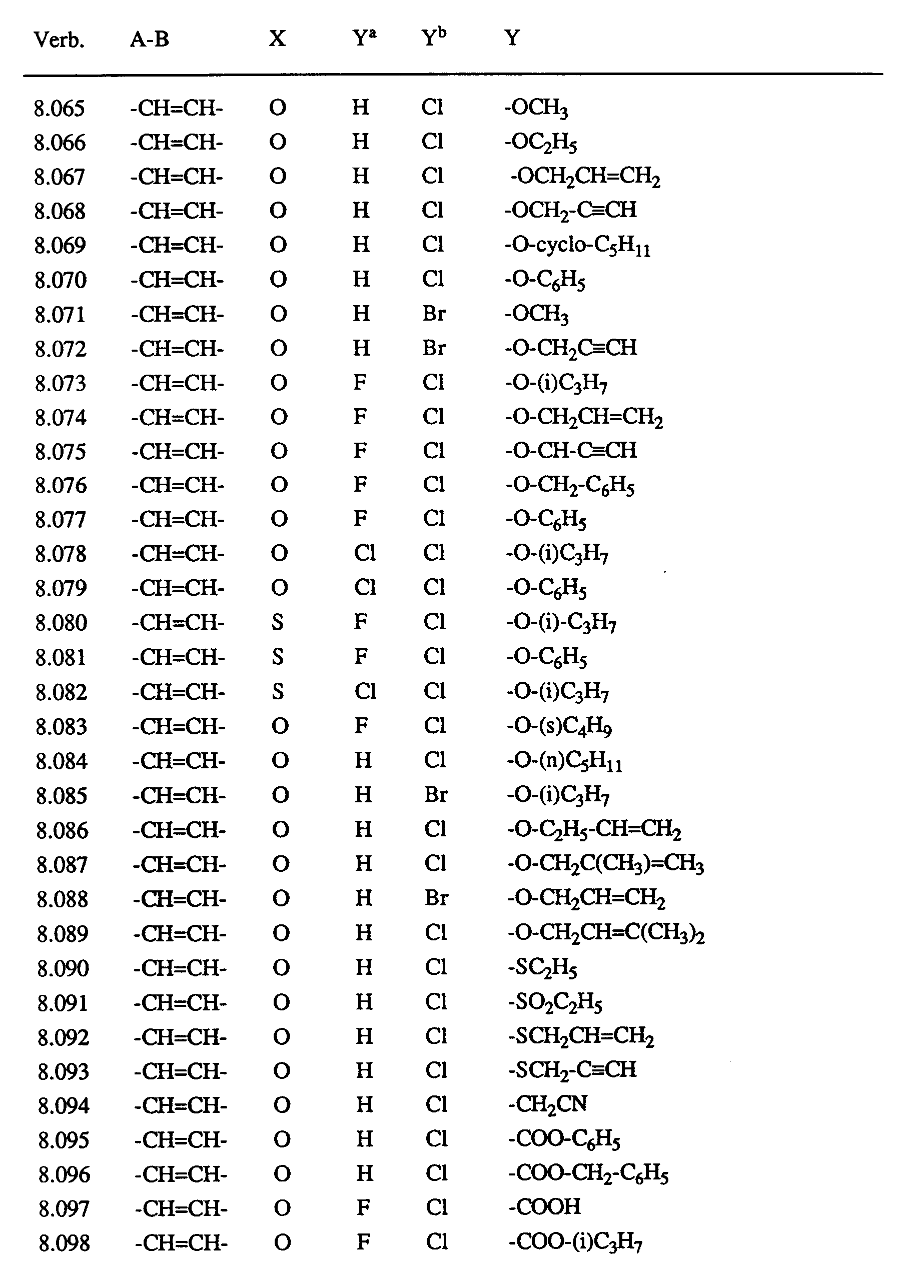

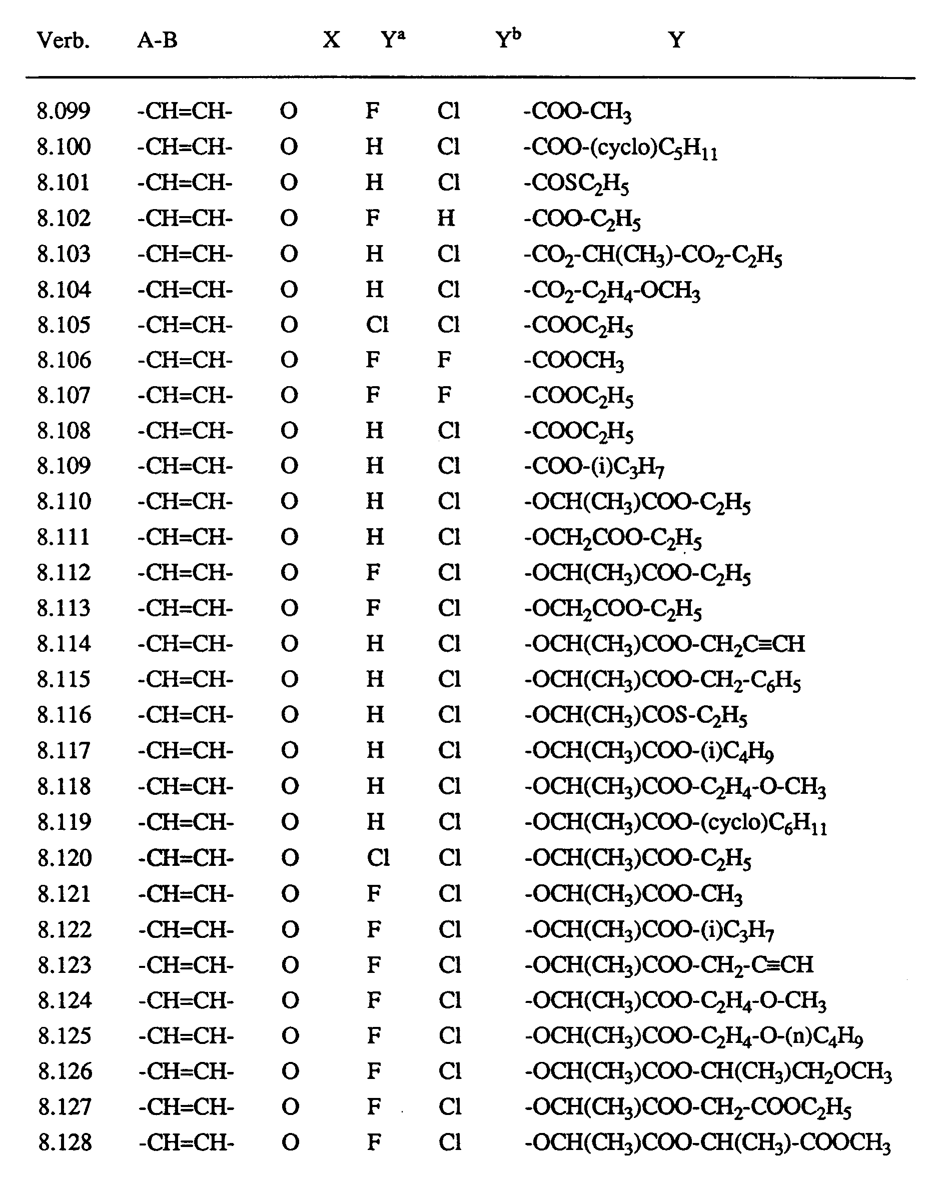

Besonders hervorzuheben ist die Kombination der Wirkstoffe der Formel I mit
N-[2-(2-Fluorethylthio)phenylsulfonyl]-N'(4-methoxy-6-methyl-1,3,5-triazin-2-yl)-harnstoff; N-[2-(3,3,3-Trifluorpropyl)phenylsulfonyl]-N'(4-methoxy-6-methyl-1,3,5-triazin-2-yl)-harnstoff, N-[2-(3,3-Difluorbut-1-enyl)phenylsulfonyl]-N'(4-methoxy-6-methyl-1,3,5-triazin-2-yl)-harnstoff, N-[2-(3,3-Difluorbutyl)phenylsulfonyl]-N'(4-methoxy-6-methyl-1,3,5-triazin-2-yl)-harnstoff, N-[2-(2,2-Difluorethylthio)phenylsulfonyl]-N'-(4-methoxy-6-methyl-1,3,5-triazin-2-yl)-harnstoff, N[2-(2-Methoxyethoxy)phenylsulfonyl]-N'-(4,6-dimethoxy-1,3,5- triazin-2-yl)-harnstoff, N-[3-Dimethylaminocarbonylpyridin-2-sulfonyl]-N'-(4,6-dimethoxy-pyrimidin-2-yl)-harnstoff, N-[3-Ethylsulfonyl-pyridin-2-sulfonyl]-N'(4,6-dimethoxy-pyrimidin-2-yl)-harnstoff, N-[2-Methoxycarbonylphenylsulfonyl]-N'-(4,6-bis-difluormethoxy-pyrimidin-2-yl)-harnstoff; N-[2-Methoxycarbonylphenylsulfonyl]-N'-(4,6-dimethoxypyrimidin-2-yl)-harnstoff, N[2-Methoxycarbonylbenzylsulfonyl]-N'-(4,6-dimethoxypyrimidin-2-yl)-harnstoff, N-[2-Methoxycarbonylphenylsulfonyl]-N'-methyl-N'-(4-methoxy-6-methyl-1,3,5-triazin-2-yl)-harnstoff, N-[1-Methyl-4-ethoxycarbonylpyrazol-5-sulfonyl]-N'-(4,6-dimethoxy-pyrimidin-2-yl)-harnstoff, oder
N[2-(2-Chlorethoxy)phenylsulfonyl]-N'-(4-methoxy-6-methyl-1,3,5-trazin-2-yl)-harnstoff als Verbindung der Formel Ia neben einer synergistisch wirksamen Menge 3-[(4-Chlor-2-fluor-5-methoxycarbonylmethylthio)phenylimino]5,6,7,8-tetrahydro-1H,3 H-(1,3,4)-thiadiazolo-[3,4-a]-pyridazin (Verbindung 7.012) als Verbindung der Formel IIa.

Besonders hervorzuheben ist ferner die Kombination der Wirkstoffe der Formel I mit N-[2-(Oxetan-3-yloxycarbonyl)phenylsulfonyl]-N'(4-methoxy-6-methyl-1,3,5-triazin-2-yl)-harnstoff (Verbindung 1.041), als Verbindung der Formel Ia neben einer synergistisch wirksamen Menge 3-[(4-Chlor-2-fluor-5-methoxycarbonylmethylthio)phenylimino]5,6,7,8-tetrahydro-1H,3H-(1,3,4)-thiadiazolo-[3,4-a]-pyridazin (Verbindung 7.012) als Verbindung der Formel IIa.

Ebenfalls besonders hervorzuheben ist die Kombination der Wirkstoffe der Formel I mit
N-[2-(2-Fluorethylthio)phenylsulfonyl]-N'(4-methoxy-6-methyl-1,3,5-triazin-2-yl)-harnstoff, N-[2-(3,3,3-Trifluorpropyl)phenylsulfonyl]-N'(4-methoxy-6-methyl-1,3,5-triazin-2-yl)-harnstoff; N-[2-(3,3-Difluorbut-1-enyl)phenylsulfonyl]-N'(4-methoxy-6-methyl-1,3,5-triazin-2-yl)-harnstoff, N-[2-(3,3-Difluorbutyl)phenylsulfonyl]-N'(4-methoxy-6-methyl-1,3,5-triazin-2-yl)-harnstoff, N-(2-(2,2-Difluorethylthio)phenylsulfonyl]-N'-(4-methoxy-6-methyl-1,3,5-triazin-2-yl)-harnstoff, N[2-(2-Methoxyethoxy)phenylsulfonyl]-N'-(4,6-dimethoxy-1,3,5-triazin-2-yl)-harnstoff, N-[3-Dimethylaminocarbonylpyridin-2-sulfonyl]-N'-(4,6-dimethoxy-pyrimidin-2-yl)-harnstoff, N-[3-Ethylsulfonyl-pyridin-2-sulfonyl]-N'(4,6-dimethoxy-pyrimidin-2-yl)-harnstoff, N-[2-Methoxycarbonylphenylsulfonyl]-N'-(4,6-bis-difluormethoxy-pyrimidin-2-yl)-harnstoff, N-[2-Methoxycarbonylphenylsulfonyl]-N'-(4,6-dimethoxypyrimidin-2-yl)-harnstoff, N[2-Methoxycarbonylbenzylsulfonyl]-N'-(4,6-dimethoxypyrimidin-2-yl)-harnstoff; N-[2-Methoxycarbonylphenylsulfonyl]-N'-methyl-N'-(4-methoxy-6-methyl-1,3,5-triazin-2-yl)-harnstoff, N-[1-Methyl-4-ethoxycarbonylpyrazol-5-sulfonyl]-N'-(4,6-dimethoxy-pyrimidin-2-yl)-harnstoff, oder N[2-(2-Chlorethoxy)phenylsulfonyl]-N'-(4-methoxy-6-methyl-1,3,5-trazin-2-yl)-harnstoff als Verbindung der Formel Ia neben einer synergistisch wirksamen Menge 9-[4-Chlor-2-fluor-5-(2-ethoxy-ethoxycarbonyl-1-ethylthiocarbonyl)phenylimino]-8-diazabicyclo[4.3.0]nonan-7-on (Verbindung 8.018) als Verbindung der Formel IIa.

Besonders hervorzuheben ist ferner die Kombination der Wirkstoffe der Formel I mit
N-[2-(Oxetan-3-yloxycarbonyl)phenylsulfonyl]-N'(4-methoxy-6-methyl-1,3,5-triazin-2-yl)-harnstoff (Verbindung 1.041), als Verbindung der Formel Ia neben einer synergistisch wirksamen Menge 9-[4-Chlor-2-fluor-5-(2-ethoxy-ethoxycarbonyl-1-ethylthiocarbonyl)phenylimino]-8-diazabicyclo[4.3.0]nonan-7-on (Verbindung 8.018) als Verbindung der Formel IIa.

Ganz besonders hervorzuheben ist die Kombination der Wirkstoffe der Formel I mit
N-[2-(2-Chlorethoxy)phenylsulfonyl]-N'-(4-methoxy-6-methyl-1,3,5-triazin-2-yl)-harnstoff als Verbindung der Formel Ia neben einer synergistisch wirksamen Menge 3-[(4-Chlor-2-fluor-5-methoxycarbonylmethylthio)phenylimino]5,6,7,8-tetrahydro-1H,3H-(1,3,4)-thiadiazolo-[3,4-a]-pyridazin als Verbindung der Formel IIa; bzw. die Kombination mit N-[2-(2-Chlorethoxy)phenylsulfonyl]-N'(4-methoxy-6-methyl-1,3,5-triazin-2-yl)-harnstoff als Verbindung der Formel Ia neben einer synergistisch wirksamen Menge
9-[4-Chlor-2-fluor-5-(2-ethoxy-ethoxycarbonyl-1-ethylthiocarbonyl)phenylimino]-8-diaza bicyclo[4.3.0]nonan-7-on als Verbindung der Formel IIa.

Ganz besonders hervorzuheben ist ferner die Kombination der Wirkstoffe der Formel I mit N-[2-(Oxetan-3-yloxycarbonyl)phenylsulfonyl]-N'(4-methoxy-6-methyl-1,3,5-triazin-2-yl)-harnstoff (Verbindung 1.041), als Verbindung der Formel Ia neben einer synergistisch wirksamen Menge 3-[(4-Chlor-2-fluor-5-methoxycarbonylmethylthio)phenylimino]5,6,7,8-tetrahydro-1H,3H-(1,3,4)-thiadiazolo-[3,4-a]-pyridazin (Verbindung 7.012) als Verbindung der Formel IIa.

Das Gemisch der Verbindungen der Formeln I und II zeigt in einem grossen Mischungsbereich synergistische, d. h. überadditive, selektive Herbizidwirkung. Es kann gegen eine grosse Anzahl agronomisch wichtiger Unkräuter, wie die Unkräuter Veronica, Galium, Papaver, Solanum, Chenopodium, Amaranthus, Xanthium, Abutilon, Ambrosia, Sagritharia, Ipomoea mit Vorteil in Nutzpflanzenkulturen verwendet werden.

Das erfindungsgemässe Herbizidgemisch kann mit Vorteil zur Unkrautbekämpfung in den folgenden Nutzpflanzenkulturen eingesetzt werden: Getreide (Weizen, Gerste, Roggen, Hirse, Hafer), Reis, Mais oder Soja Besonders zu erwähnen sind die Kulturen Weizen, Gerste und Mais.

Das Mischungsverhältnis der beiden Herbizidkomponenten der Formel I und II, in dem die synergistisch Herbizidwirkung auftritt kann durch Versuche ermittelt werden. Vorzugsweise beträgt in der erfindungsgemässen Mischung das Gewichtsverhältnis der Verbindung der Formel I zu der der Formel II 1 : 0,1 bis 1 : 20. Besonders bevorzugt 1 : 1 bis 1 : 10; insbesondere 1 : 3 bis 1 : 6 in Getreide. In Mais liegt das Gewichtsverhältnis bevorzugt im Bereich von 1 : 0,1 bis 1:1.

Die Aufwandmenge kann innerhalb weiter Bereicht variiern und hängt von der Beschaffenheit des Bodens, der Art der Anwendung (pre- oder postemergent; Saatbeizung; Anwendung in der Saatfurche; no tillage Anwendung etc.), der Kulturpflanze, dem zu bekämpfenden Unkraut, den jeweils vorherrschenden klimatischen Verhältnissen und anderen durch Anwendungsart, Anwendungszeitpunkt und Zielkultur bestimmten Faktoren ab. Im allgemeinen kann das erfindungsgemässe Wirkstoffgemisch mit einer Aufwandmenge von 1 bis 500 [g Aktivsubstanz/ha], insbesondere 1 bis 100 [g Aktivsubstanz/ha] angewendet werden. Bevorzugt kann das erfindungsgemässe Herbizidgemisch postemergent eingesetzt werden.

Das Gemisch der Verbindungen der Formeln I und II wird in unveränderter Form, wie aus der Synthese erhältlich, oder vorzugsweise mit den in der Formulierungstechnik üblichen Hilfsmitteln eingesetzt und werden daher z.B. zu emulgierbaren Konzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Benetzen, Verstreuen oder Gießen werden gleich wie die Art der Mittel den angestrebten Zielen und den gegebenen Verhältnissen entsprechend gewählt.

Die Formulierungen, d.h. die die Wirkstoffe der Formeln I und II, sowie gegebenenfalls einen oder mehrere feste oder flüssige Zusatzstoffe enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, insbesondere die Fraktionen C₈ bis C₁₂, wie Mischungen von Alkylbenzolen, z.B. Xylolgemische oder alkylierte Naphthaline; aliphatische und cycloaliphatische Kohlenwasserstoffe wie Paraffine, Cyclohexan oder Tetrahydionaphthalin; Alkohole, wie Ethanol, Propanol oder Butanol; Glykole sowie deren Ether und Ester, wie Propylenglykol oder Dipropylenglykolether, Ketone wie Cyclohexanon, Isophoron oder Diacetonalkohol, starke polare Lösungsmittel wie N-Methyl-2-pyrrolidon, Dimethylsulfoxid oder Wasser; Pflanzenöle sowie deren Ester, wie Raps-, Ricinus- oder Sojaöl; gegebenenfalls auch Silikonöle.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüber hinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali oder gegebenenfalls substituierten Ammoniumsalze von höheren Fettsäuren (C₁₀-C₂₂), wie z.B. die Na- oder K-Salze der Öl- oder Stearinsäure, oder von natürlichen Fettsäuregemischen genannt, die z.B. aus Kokosnuß- oder Talgöl gewonnen werden können. Ferner sind auch die Fettsäure-methyl-taurinsalze zu erwähnen.

Häufiger werden jedoch sog. synthetische Tenside verwendet, insbesondere Fettalkoholsulfonate, Fettalkoholsulfate, sulfonierte Benzimidazolderivate oder Alkylarylsulfonate.

Die Fettalkoholsulfonate oder -sulfate liegen in der Regel als Alkali-, Erdalkali- oder gegebenenfalls substituierte Ammoniumsalze vor und weisen einen Alkylrest mit 8 bis 22 C-Atomen auf; wobei Alkyl auch den Alkylteil von Acylresten einschließt, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, die Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen, enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nicht ionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside sind u.a. in folgenden Publikationen beschrieben:
- "Mc Cutcheon's Detergents and Emulsifiers Annual", Mc Publishing Corp., Glen Rock, New Jersey, 1988.
- M. and J. Ash, "Encyclopedia of Surfactants", Vol. I-III, Chemical Publishing Co., New York, 1980-1981.
- Dr. Helmut Stache "Tensid-Taschenbuch", Carl Hanser Verlag, München/Wien 1981.

Die pestiziden Zubereitungen enthalten in der Regel 0,1 bis 99 %, insbesondere 0,1 bis 95 %, Wirkstoff der Formel I, 1 bis 99 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren z.B. gegebenenfalls epoxydierte Pflanzenöle (epoxydiertes Kokosnußöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe zur Erzielung spezieller Effekte enthalten.

Insbesondere setzen sich bevorzugte Formulierungen folgendermaßen zusammen: (% = Gewichtsprozent)

| Emulgierbare Konzentrate: | |
|---|---|
| Aktives Wirkstoffgemisch: | 1 bis 90 %, vorzugsweise 5 bis 20 % |
| oberflächenaktives Mittel: | 1 bis 30 %, vorzugsweise 10 bis 20 % |
| flüssiges Trägermittel: | 5 bis 94 %, vorzugsweise 70 bis 85 % |

| Stäube: | |
|---|---|
| Aktives Wirkstoffgemisch: | 0,1 bis 10 %, vorzugsweise 0,1 bis 1 % |
| festes Trägermittel: | 99,9 bis 90 %, vorzugsweise 99,9 bis 99 % |

| Suspensions-Konzentrate: | |
|---|---|
| Aktives Wirkstoffgemisch: | 5 bis 75 %, vorzugsweise 10 bis 50 % |
| Wasser: | 94 bis 24 %, vorzugsweise 88 bis 30 % |
| oberflächenaktives Mittel: | 1 bis 40 %, vorzugsweise 2 bis 30 % |

| Benetzbare Pulver: | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

| Granulate: | |
|---|---|
| Aktives Wirkstoffgemisch: | 0,5 bis 30 %, vorzugsweise 3 bis 15 % |
| festes Trägermittel: | 99,5 bis 70 %, vorzugsweise 97 bis 85 % |

### Biologische Beispiele

Ein synergistischer Effekt liegt immer dann vor, wenn die Wirkung der Wirkstoffkombination I und II grösser ist als die Summe der Wirkung der einzeln applizierten Wirkstoffe.

Die zu erwartende herbizide Wirkung We für eine gegebene Kombination zweier Herbizide kann (vgl. COLBY, S.R., "Calculating synergistic and antagonstic response of herbicide combinations", Weeds 15, Seiten 20-22, 1967) wie folgt berechnet werden: 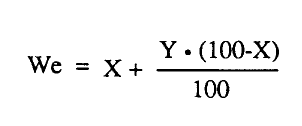
Dabei bedeuten:
- X =: Prozent Wachstumshemmung bei Behandlung mit der Verbindung der Formel I mit p kg Aufwandmenge pro Hektar im Vergleich zur unbehandelten Kontrolle (= 0 %).
- Y =: Prozent Herbizidwirkung bei Behandlung mit einer Verbindung der Formeln I oder II mit q kg Aufwandmenge pro Hektar im Vergleich zur unbehandelten Kontrolle.
- We =: Erwartete herbizide Wirkung (Prozent Wachstumshemmung im Vergleich zur unbehandelten Kontrolle) nach Behandlung mit der Verbindung der Formel I und II bei einer Aufwandmenge von p + q kg Wirkstoffmenge pro Hektar.

Ist die tatsächlich beobachtete Wirkung grösser als der zu erwartende Wert We, so liegt Synergismus vor.

Der synergistische Effekt der Kombinationen der Wirkstoffe I und II wird in den folgenden Beispielen demonstriert.

### B. Synergistische Herbizidwirkung in Weizen, Mais, Getreide, Soja und Reis

Die Wirksubstanzen werden mittels Kleinparzellenspritzgerät mit einem Wasservolumen von 500 l/ha auf aufgelaufene breitblättrige Unkräuter in Weizenbestände appliziert. Die entsprechenden Aufwandmengen werden für jede einzeln zu behandelnde Parzelle separat abgewogen. Nach der Applikation erfolgt nach den in den Beispielen (Tabellen 1 bis 18) angegebenen Zeitintervallen die Auswertung bezüglich der Toleranz der Kulturpflanze und der Wirkung auf die Unkräuter. Registriert wird die prozentuale Reduktion der Biomasse im Vergleich zur unbehandelten Kontrolle. Als Massstab gilt eine prozentuale Skala von 0% (wie unbehandelte Kontrolle) bis 100% (Pflanzen abgestorben). Dabei wird im unteren Wirkungsbereich in Intervallen von 10%, im oberen Aktivitätsbereich in kleineren Intervallschritten bonitiert.

Die Vergleichsergebnisse sind zusammen mit den nach der Colby-Formel berechneten Erwartungswerten in die Tabellen 1 und 2 eingetragen. Angegeben sind die jeweils angewendeten Wirkstoffe und die Aufwandmengen sowie die geprüften Kultur-und die Unkrautpflanzen.

Im einzelnen betreffen die Tabellen:
Tabelle 1: Versuch in Winterweizen der Sorte Gamil
Tabelle 2: Versuch in Winterweizen der Sorte Ares
Tabellen 3 bis 7: Versuche in Mais
Tabellen 8 bis 11: Versuche in Getreide
Tabelle 12: Versuche in Soja
Tabellen 13 bis 18: Versuche in Reis
Tabelle 19: Versuche in Mais

### Formulierungsbeispiele für synergistische Wirkstoffgemische

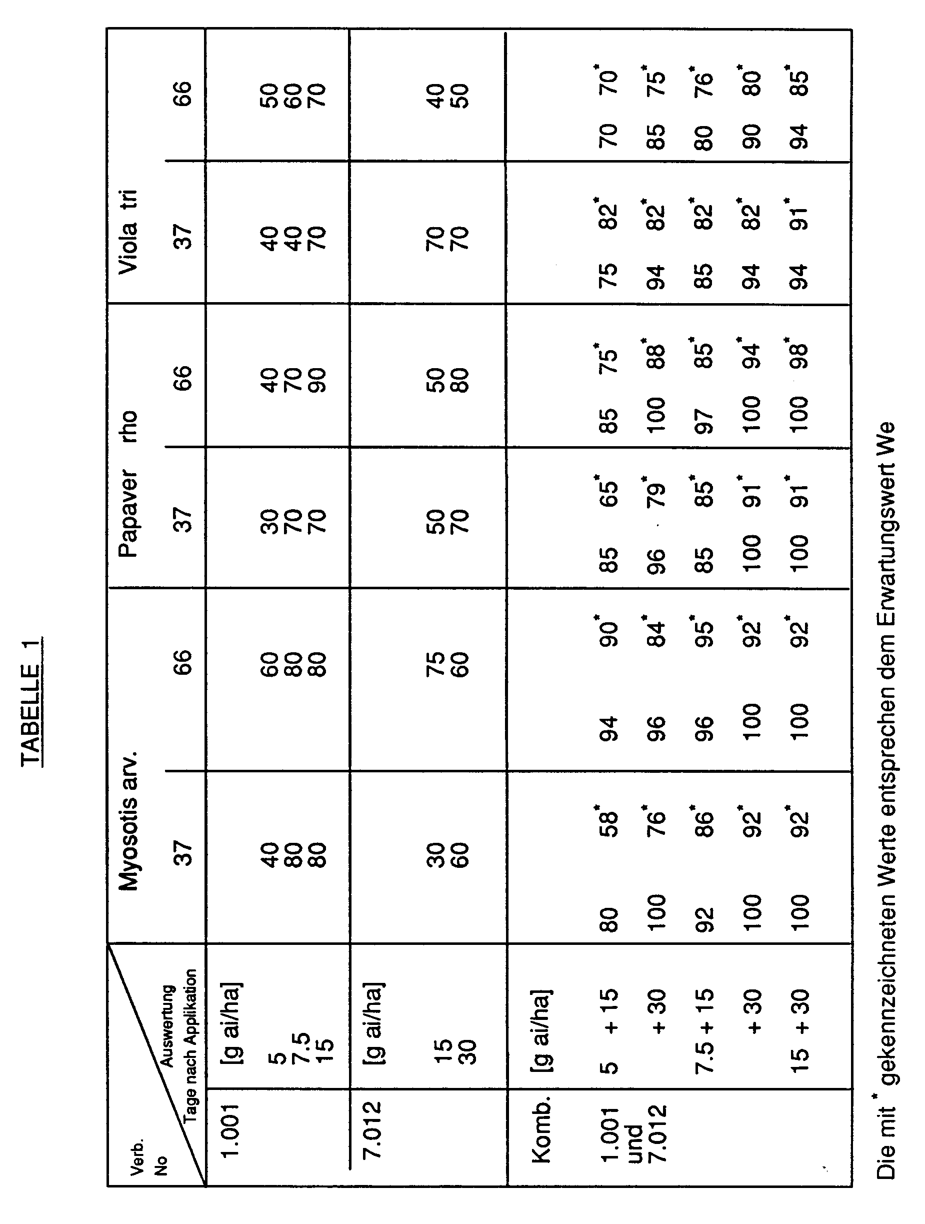

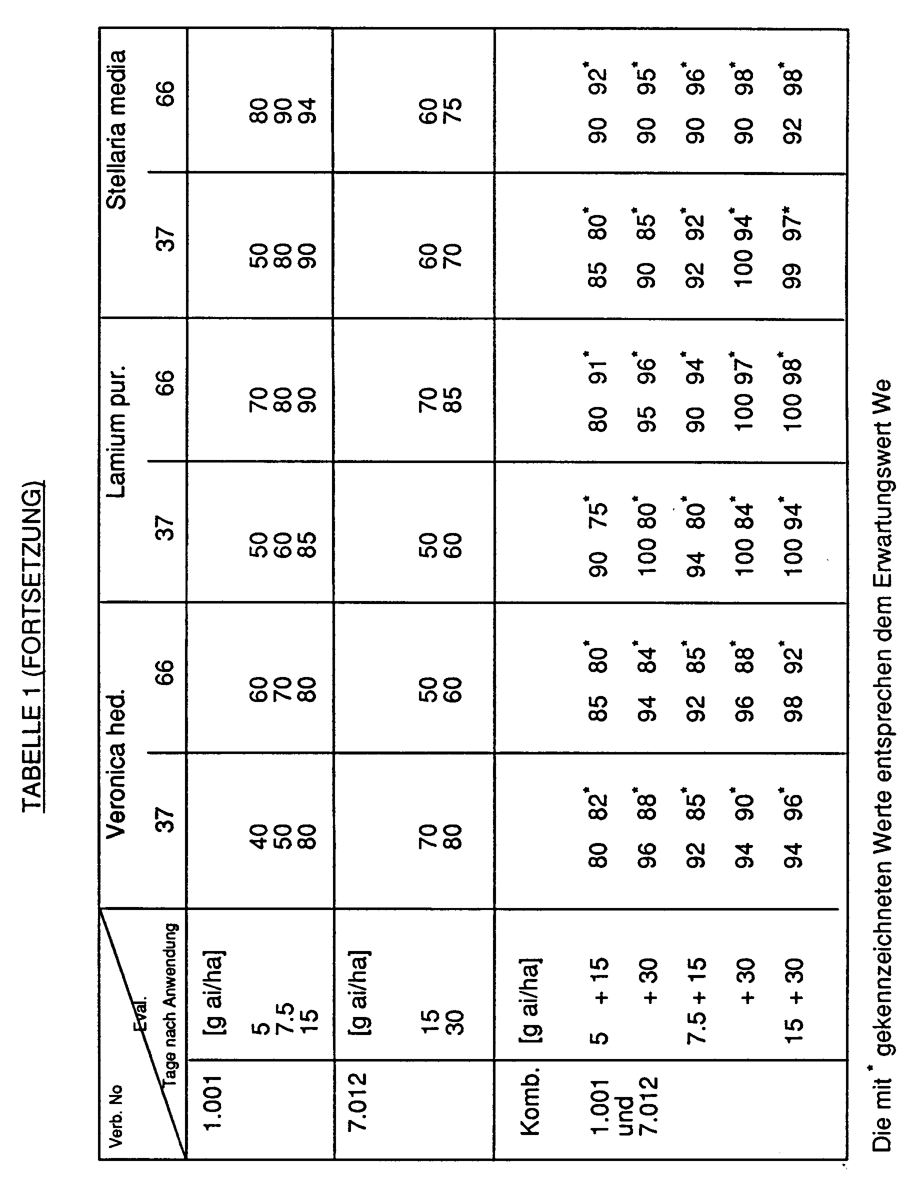

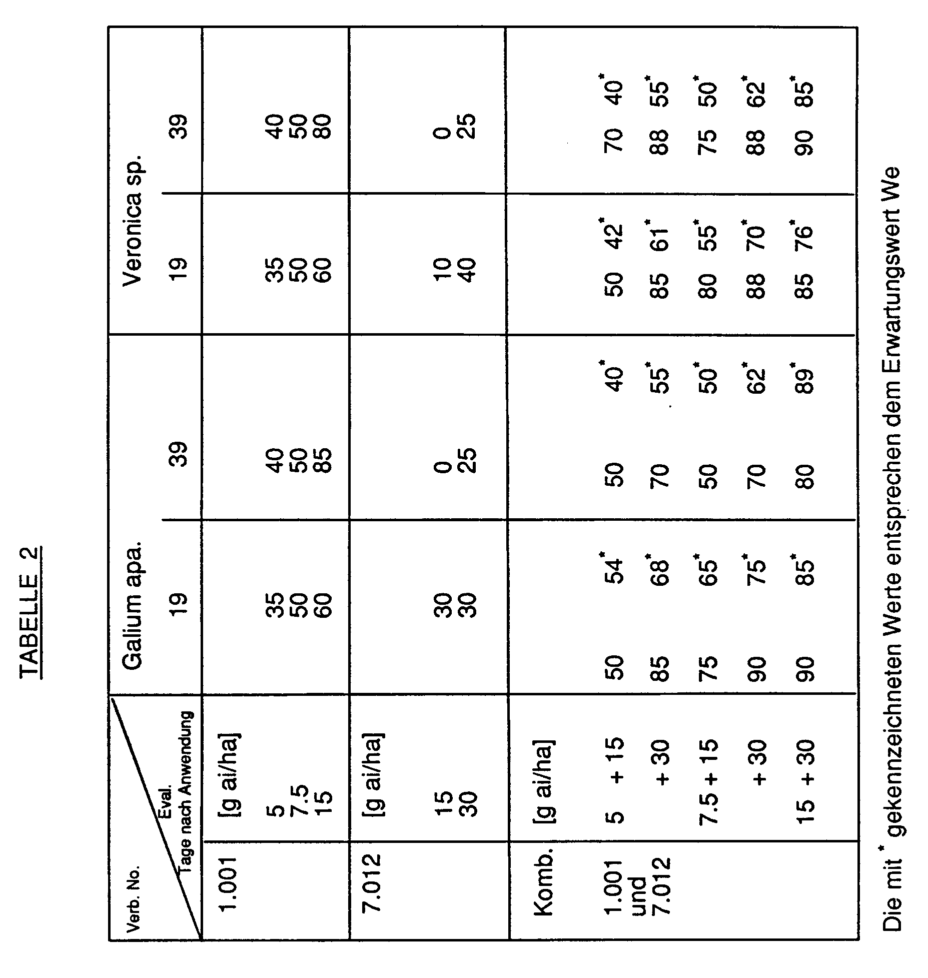

**Tabelle 3**

| Verbindung No. | [g ai/ha] | Xanthium canadense |
|---|---|---|
| 1.003 | 10 | 35 |
| 7.012 | 10 | 30 |
| Komb. 1.003 und 7.012 | 10 + 10 | 70 49* |
| Der mit * gekennzeichnete Wert entspricht dem Erwartungswert We | | |

**Tabelle 4**

| Verbindung No. | [g ai/ha] | Xanthium canadense |
|---|---|---|
| 2.001 | 30 | 15 |
| 7.012 | 10 | 30 |
| Komb. 2.001 und 7.012 | 30 + 10 | 75 40* |
| Der mit * gekennzeichnete Wert entspricht dem Erwartungswert We | | |

**Tabelle 5**

| Verbindung No. | [g ai/ha] | Ipomoea purpurea |
|---|---|---|
| 1.017 | 30 | 25 |
| 7.012 | 5 | 55 |
| Komb. 1.017 und 7.012 | 30 + 5 | 85 66* |
| Der mit * gekennzeichnete Wert entspricht dem Erwartungswert We | | |

**Tabelle 6**

| Verbindung No. | [g ai/ha] | Ipomoea purpurea |
|---|---|---|
| 2.003 | 30 | 15 |
| 7.012 | 5 | 55 |
| Komb. 2.003 und 7.012 | 30 + 5 | 80 62* |
| Der mit * gekennzeichnete Wert entspricht dem Erwartungswert We | | |

**Tabelle 7**

| Verbindung No. | [g ai/ha] | Amaranthus |
|---|---|---|
| 1.017 | 15 | 75 |
| 8.018 | 5 | 50 |
| Komb. 1.017 und 8.018 | 15 + 5 | 96 87* |
| Der mit * gekennzeichnete Wert entspricht dem Erwartungswert We | | |

**Tabelle 8**

| Verbindung No. | [g ai/ha] | Veronica persica |
|---|---|---|
| 1.001 | 15 | 55 |
| 8.018 | 8 | 55 |
| Komb. 1.001 und 8.018 | 15 + 8 | 90 80* |
| Der mit * gekennzeichnete Wert entspricht dem Erwartungswert We | | |

**Tabelle 9**

| Verbindung No. | [g ai/ha] | Veronica persica |
|---|---|---|
| 6.001 | 15 | 0 |
| 8.018 | 15 | 85 |
| Komb. 6.001 und 8.018 | 15 + 15 | 96 85* |
| Der mit * gekennzeichnete Wert entspricht dem Erwartungswert We | | |

**Tabelle 10**

| Verbindung No. | [g ai/ha] | Chenopodium album |
|---|---|---|
| 1.039 | 2 | 35 |
| 8.018 | 8 | 0 |
| Komb. 1.039 und 8.018 | 2 + 8 | 93 35* |
| Der mit * gekennzeichnete Wert entspricht dem Erwartungswert We | | |

**Tabelle 11**

| Verbindung No. | [g ai/ha] | Chenopodium album |
|---|---|---|
| 1.012 | 4 | 25 |
| 8.018 | 8 | 0 |
| Komb. 1.012 und 8.018 | 4 + 8 | 70 25* |
| Der mit * gekennzeichnete Wert entspricht dem Erwartungswert We | | |

**Tabelle 12**

| Verbindung No. | [g ai/ha] | Chenopodium album |
|---|---|---|
| 1.014 | 30 | 50 |
| 7.012 | 7.5 | 20 |
| Komb. 1.014 und 7.012 | 30 + 7.5 | 95 60* |
| Der mit * gekennzeichnete Wert entspricht dem Erwartungswert We | | |

**Tabelle 13**

| Verbindung No. | [g ai/ha] | Sagitharia |
|---|---|---|
| 1.040 | 5 | 30 |
| 7.012 | 30 | 0 |
| Komb. 1.040 und 7.012 | 5 + 30 | 65 30* |
| Der mit * gekennzeichnete Wert entspricht dem Erwartungswert We | | |

**Tabelle 14**

| Verbindung No. | [g ai/ha] | Sagitharia |
|---|---|---|
| 0.001 | 10 | 65 |
| 7.012 | 30 | 0 |
| Komb. 0.001 und 7.012 | 10 + 30 | 80 65* |
| Der mit * gekennzeichnete Wert entspricht dem Erwartungswert We | | |

**Tabelle 15**

| Verbindung No. | [g ai/ha] | Sagitharia |
|---|---|---|
| 4.001 | 5 | 65 |
| 7.012 | 30 | 0 |
| Komb. 4.001 und 7.012 | 5 + 30 | 90 65* |
| Der mit * gekennzeichnete Wert entspricht dem Erwartungswert We | | |

**Tabelle 16**

| Verbindung No. | [g ai/ha] | Sagitharia |
|---|---|---|
| 0.001 | 10 | 65 |
| 8.018 | 30 | 0 |
| Komb. 0.001 und 8.018 | 10 + 30 | 85 65* |
| Der mit * gekennzeichnete Wert entspricht dem Erwartungswert We | | |

**Tabelle 17**

| Verbindung No. | [g ai/ha] | Sagitharia |
|---|---|---|
| 4.001 | 10 | 70 |
| 8.018 | 30 | 0 |
| Komb. 4.001 und 8.018 | 5 + 30 | 96 70* |
| Der mit * gekennzeichnete Wert entspricht dem Erwartungswert We | | |

**Tabelle 18**

| Verbindung No. | [g ai/ha] | Sagitharia |
|---|---|---|
| 1.040 | 10 | 80 |
| 8.018 | 30 | 0 |
| Komb. 1.040 und 8.018 | 10 + 30 | 90 80* |
| Der mit * gekennzeichnete Wert entspricht dem Erwartungswert We | | |

**Tabelle 19**

| Verbindung No. | [g ai/ha] | Amaranthus hybridus |
|---|---|---|
| 1.041 | 15 | 20 |
| 7.012 | 2.5 | 40 |
| Komb. 1.041 und 7.012 | 15 + 2.5 | 60 52* |
| Der mit * gekennzeichnete Wert entspricht dem Erwartungswert We | | |

Die in den Tabellen 3 bis 19 angegebenen gemessenen Werte werden 3 Wochen nach der Anwendung erhalten.

### F1. Formulierungsbeispiele

### Mischungen der Verbindungen der Formeln I und II (% = Gewichtsprozent)

| a) Spritzpulver | a) | b) | c) | d) |
|---|---|---|---|---|
| Mischung Wirkstoffe der Formel I und II | 10% | 20 % | 5 % | 30 % |
| Na-Ligninsulfonat | 5 % | 5 % | 5 % | 5 % |
| Na-Laurylsulfat | 3 % | - | 3 % | - |
| Na-Diisobutylnaphthalinsulfonat | - | 6 % | - | 6 % |
| Octylphenolpolyäthelynglykoläther (7-8 Mol AeO) | - | 2 % | - | 2 % |
| Hochdisperse Kieselsäure | 5 % | 27 % | 5 % | 27 % |
| Kaolin | 67 % | - | 67 % | - |

Der Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) | c) |
|---|---|---|---|
| Mischung Wirkstoffe der Formel I und II | 5 % | 5 % | 12 % |
| Octylphenolpolyäthylenglykoläther (4-5 Mol AeO) | 3 % | 3 % | 3 % |
| Ca-Dodecylbenzolsulfonat | 3 % | 3 % | 2 % |
| Ricinusölpolyglykoläther (36 Mol AeO) | 4 % | 4 % | 4 % |
| Cyclohexanon | 30 % | 30 % | 31 % |
| Xylolgemisch | 50 % | 35 % | 35 % |

Aus diesen Konzentraten können durch Verdünnen mit Wasser Emulsionen jeder gewünschten Konzentration hergestellt werden.

| c) Stäubemittel | a) | b) | c) | d) |
|---|---|---|---|---|
| Mischung Wirkstoffe der Formel I und II | 2 % | 4 % | 2 % | 4 % |
| Talkum | 3 % | 4 % | 4 % | 8 % |
| Kaolin | 95 % | 92 % | 94 % | 88 % |

Man erhalt anwendungsfertige Stäubemittel, indem das Wirkstoffgemisch mit dem Träger vermischt und auf einer geeigneten Mühle vermahlen wird.

| d) Extruder Granulat | a) | b) | c) |
|---|---|---|---|
| Mischung der Wirkstoffe der Formel I und II | 5 % | 3 % | 5 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | a) | b) |
|---|---|---|
| Mischung Wirkstoffe der Formel I und II | 1,5 % | 3 % |
| Polyäthylenglykol (MG 200) | 3 % | 3 % |
| Kaolin | 94 % | 89 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Mischung der Wirkstoffe der Formel I und II | 20 % | 20 % |
| Aethylenglykol | 10 % | 10 % |
| Nonylphenolpolyäthylenglykoläther (15 Mol AeO) | 6 % | 6 % |
| Na-Ligninsulfonat | 10 % | 10 % |
| Carboxymethylcellulose | 1 % | 1 % |
| 37 %ige wässrige Formaldehyd-Lösung | 0,2 % | 0,2 % |
| Silikonöl in Form einer 75%igen wässrigen Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft praktischer, den Wirkstoff der Formel I und den Mischpartner der Formeln II-IX einzeln zu formulieren und sie dann erst kurz vor dem Ausbringen im Applikator im gewünschten Mischungsverhältnis als "Tankmischung" im Wasser zusammenzubringen

## Patentansprüche

1. Herbizides Mittel, enthaltend einen Sulfonylharnstoff, der Formel I 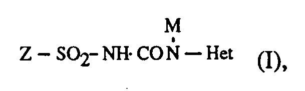 worin
Z einen substituierten Phenyl-, Thiophenyl-, Benzyl-, Pyridinyl-, Pyrazinyl-, heteroanellierten Phenyl- oder Alkylsulfonylamino-Rest:
M Wasserstoff; oder C₁-C₄-Alkyl; und
Het einen substituierten fünf- oder sechsgliedrigen Heterocyclus mit 2 oder drei Stickstoffatomen
bedeutet, sowie deren agrochemisch verträglichen Salze und ein_synergistisch wirksame Menge eines 5,6,7,8-Tetrahydro-1H,3H-(1,3,4)-thiadiazolo-[3,4-a]-pyridazins oder 7,8-Dihydro-1H,3H-(1,3,4)-thiadiazolo-[3,4-a]-pyridazins der allgemeinen Formel II 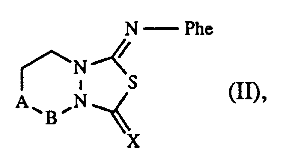 worin
X Sauerstoff; oder Schwefel;
A-B -CH₂-CH₂-; oder -CH=CH-; und
Phe einen substituierten Phenylrest
bedeutet.

2. Herbizides Mittel, gemäss Anspruch 1, enthaltend einen herbizid wirksamen Sulfonylharnstoff, der Formel I 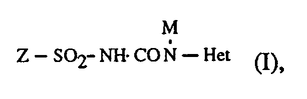 worin
Z einen Rest 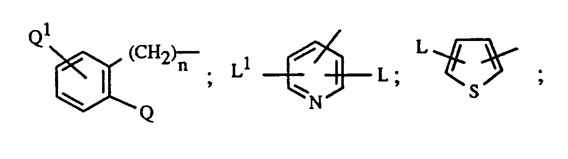 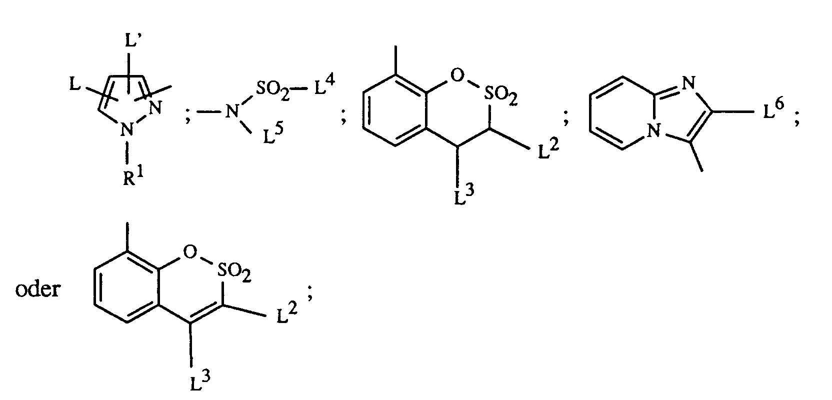
Het einen Rest 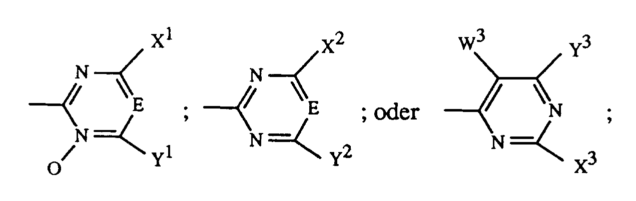
M Wasserstoff; oder C₁-C₄-Alkyl;
Q Halogen; Nitro; C₁-C₆-Alkyl; C₁-C₆-Halogenalkyl; C₂-C₆-Alkenyl; C₂-C₆-Halogenalkenyl; C₂-C₆-Alkinyl; C₃-C₆-Halogenalkinyl; -NH₂; -NH-(C₁-C₄-Alkyl); -N(C₁-C₄--Alkyl)₂; -SO₂N(C₁-C₄-alkyl)₂; -SO₂NH(C₁-C₄-alkyl); -COOR²; -COOR'; -(A)-R'; -(A)-R²; Phenyl; Phenoxy; C₁-C₅-Alkylphenyl; Halogenphenyl; oder Halogenphenoxy;
Q¹ Wasserstoff; Nitro; C₁-C₄-Alkyl; Halogen; C₁-C₄-Alkoxy; C₁-C₄-Halogenalkyl; N(C₁-C₄-Alkyl)₂; C₁-C₄-Alkylamino; C₁-C₄-Halogenalkylthio; C₁-C₄-Halogenalkoxy; C₁-C₄-Alkoxy-C₁-C₄-alkoxy; C₂-C₄-Alkenyl; C₂-C₄-Alkinyl; CN; C₂-C₄-Halogenalkenyl;
n 0; oder 1;
R¹ Wasserstoff; C₁-C₄-Alkyl; oder Pyridyl;
A Sauerstoff; Schwefel; -SO-; -SO₂-; oder -O-SO₂-;
R² C₁-C₅-Alkyl; C₂-C₆-Alkenyl; C₃-C₆-Alkinyl; C₁-C₅-Halogenalkyl; C₁-C₄-Alkoxy-C₁-C₄-alkyl; C₂-C₅-Halogenalkenyl; C₂-C₅-Halogenalkinyl;
R' Oxetan-3-yl; Thietan-3-yl;
L Halogen; Nitro; C₁-C₅-Alkyl; -A-R²; COOR²; -CO-NH₂; -CO-NHC₁-C₄-Alkyl; oder -CO-N(C₁-C₄-Alkyl)₂;
L' Wasserstoff; oder Chlor;
L¹ Wasserstoff; Nitro; C₁-C₄-Alkyl; Halogen; C₁-C₄-Alkoxy; C₁-C₄-Halogenalkyl; oder C₁-C₆-Halogenalkoxy;
L² Wasserstoff; oder C₁-C₄-Alkyl;
L³ Wasserstoff; oder C₁-C₄-Alkyl;
L⁴ C₁-C₆-Alkyl; C₂-C₆-Alkenyl; oder C₂-C₆-Alkinyl;
L⁵ C₁-C₆-Alkyl; C₂-C₆-Alkenyl; oder C₂-C₆-Alkinyl; oder
L⁴ und L⁵ gemeinsam eine C₂-C₆-Alkylenbrücke;
E N; oder CH;
X¹, X², X³, und Y¹ unabhängig voneiander Wasserstoff; Halogen; C₁-C₄-Halogenalkoxy; C₁-C₄-Halogenalkyl; C₁-C₄-Alkoxy; C₁-C₄-Alkyl; Cyclopropyl; Dimethylamino; Methylamino; Aethylamino; Amino; C₁-C₄-Alkoxy-C₁-C₄-alkyl; C₁-C₄-Alkoxy-C₁-C₄-alkoxy; C₁-C₄-Halogenalkylthio; C₁-C₄-Alkylthio; C₁-C₄-Alkylthio-C₁-C₄-alkyl;
Y² Wasserstoff; Halogen; C₁-C₄-Halogenalkoxy; C₁-C₄-Halogenalkyl; C₁-C₄-Alkoxy; C₁-C₄-Alkyl; Dimethylamino; Methylamino; Aethylamino; Amino; C₁-C₄-Alkoxy-C₁-C₄-alkyl; Cyclopropyl; Dimethoxymethyl; Diethoxyethyl; 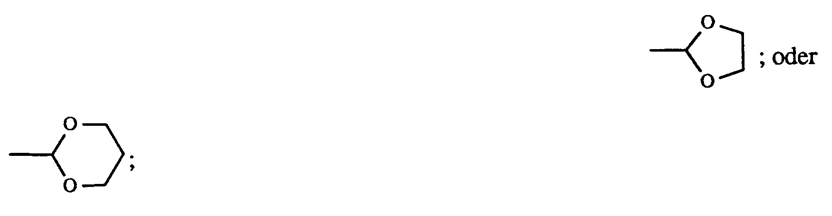
Y³ C₁-C₄-Alkyl; C₁-C₄-Alkoxy; C₁-C₂-Halogenalkyl; oder C₁-C₂-Halogenalkoxy;
W³ Wasserstoff; C₁-C₄-Alkyl; C₁-C₄-Alkoxy; C₁-C₂-Halogenalkyl; C₁-C₂-Halogenalkoxy; C₁-C₄-Alkoxycarbonyl; Halogen; Cyan; Nitro; C₁-C₄-Alkylthio; C₁-C₄Alkylsulfinyl; oder C₁-C₄-Alkylsulfonyl; oder
W³ und Y³ gemeinsam eine C₂-C₄-Alkylenbrücke; oder eine durch Sauerstoff einfach unterbrochene C₁-C₃-Alkylenbrücke;
bedeutet
mit einer synergistisch wirksamen Menge eines 5,6,7,8-Tetrahydro- 1H,3H-(1,3,4)-thiadiazolo-[3,4-a]-pyridazins oder eines 7,8-Dihydro1H,3H-(1,3,4)-thiadiazolo-[3,4-a]-pyridazins der Formel II 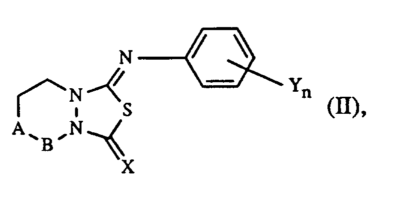 worin
A-B -CH₂-CH₂-; oder -CH=CH-;
Y unabhängig voneinander Halogen; Hydroxy; C₁-C₆-Alkyl; C₁-C₆-Alkoxy; C₁-C₆-Halogenalkoxy; C₃-C₆-Alkenyloxy; C₂-C₆-Halogenalkenyloxy; C₃-C₆-Alkinyloxy; Phenoxy; C₅-C₆-Cycloalkyloxy; C₁-C₆-Alkoxycarbonyl-C₁-C₄-alkoxy; C₁-C₆Alkoxycarbonyl-C₂-C₄-alkenyloxy; C₁-C₆-Alkylthiocarbonyl-C₁-C₄-alkoxy; C₃-C₆-Alkinyloxycarbonyl-C₁-C₄-alkoxy; Benzyloxycarbonyl-C₁-C₄-alkoxy; Trifluoromethyl; Benzyloxy; Chlorbenzyloxy; C₁-C₆-Alkylbenzyloxy; C₂-C₆-Alkenyl; CyanoC₁-C₆-alkyl; C₁-C₆-Alkylcarbamoyloxy; C₁-C₄-Alkoxy-C₁-C₄-alkyl; C₃-C₆-Alkinyloxy-C₁-C₄-alkyl; C₃-C₆-Alkenyloxy-C₁-C₃-alkyl; unsubstituiertes oder durch Halogen substituiertes C₅-C₆Cycloalkylmethoxy; C₁-C₆-Alkoxy-C₁-C₄-alkoxy; Phenethyloxy; C₅-C₆-Cycloalkoxycarbonyl-C₁-C₄-alkoxy; Pyrrolidinocarbonyl; unsubstituiertes oder durch C₁-C₆-Alkyl substituiertes Phenylcarbonyl; -CO-X⁵-R³; 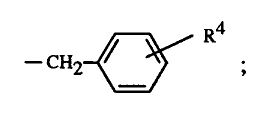 -S(O)ₚ-R⁵; -O-CH(R⁶)-CO-OR⁷; -N=C(CH₃)-R⁸; -NHR⁹; -S-CH(R¹⁰)-CO-R¹¹; oder -O-P(X⁵)(OC₂H₅)₂;
R³ Wasserstoff; C₁-C₆-Alkyl; Phenyl; C₅-C₆-Cycloalkyl; C₁-C₆-Alkoxy-C₁-C₄-alkyl; C₁-C₆-Alkoxycarbonyl-C₁-C₄-alkyl; oder C₁-C₄-Alkoxy-C₁-C₄-alkocycarbonyl-C₁-C₄-alkyl;
R⁴ Wasserstoff; C₁-C₆-Alkoxy; C₁-C₄-Alkyl; oder Halogen;
R⁵ C₁-C₆-Alkyl; C₂-C₆-Alkenyl; oder C₂-C₆-Alkinyl;
p 0 oder 2;
R⁶ Wasserstoff; oder C₁-C₆-Alkyl;
R⁷ Wasserstoff; C₁-C₆-Alkyl; C₁-C₆-Alkoxy-C₁-C₄-alkyl; Tetrahydrofuryl; C₁-C₄-Alkoxy-C₁-C₄-alkoxy-C₁-C₄-alkyl; C₁-C₆-Alkoxycarbonyl-C₁-C₄-alkyl; oder C₅-C₆-Cycloalkyl;
R⁸ C₁-C₆-Alkyl; oder Phenyl;
R⁹ C₁-C₆-Alkylcarbonyl; oder C₁-C₆-Alkoxycarbonyl-C₁-C₄-alkyl;
R¹⁰ Wasserstoff; oder C₁-C₆-Alkyl;
R¹¹ C₁-C₆-Alkoxy; C₅-C₆-Cycloalkyloxy; 1-Pyrrolidinyl; C₃-C₆-Alkenyloxy; C₃-C₆-Alkinyloxy; C₁-C₆-Alkylthio; C₁-C₆-Halogenalkoxy; C₁-C₄-Alkoxycarbonyl-C₁-C₄-alkoxy; α,α-Dimethylbenzylamino; -OC₂H₄S(O)₂-(C₁-C₆-Alkyl); -OC₂H₄S-(C₁-C₆-Alkyl); -OC₂H₄S(O)₂-(phenyl); -OC₂H₄S-(phenyl); 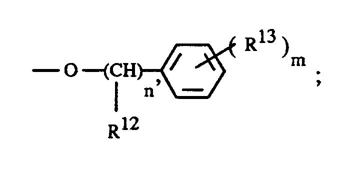 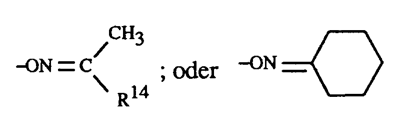
n' 0; oder 1;
R¹² Halogen; oder C₁-C₄-Alkyl;
R¹³ Phenyl; Benzyl; oder Methoxy-C₁-C₄-alkyl;
R¹⁴ Styryl; Cyano-C₁-C₄-alkyl; Tetrahydrofuran-2-yl, Thienyl oder Pyridin-2-yl;
X Sauerstoff; oder Schwefel;
X⁵ Sauerstoff; oder Schwefel;
m 0; 1; 2; oder 3;
und
n 0; 1; 2; oder 3;
bedeutet.

3. Mittel nach Anspruch 1 oder 2, enthaltend einen Sulfonylharnstoff der Formel I, worin
Z einen Rest 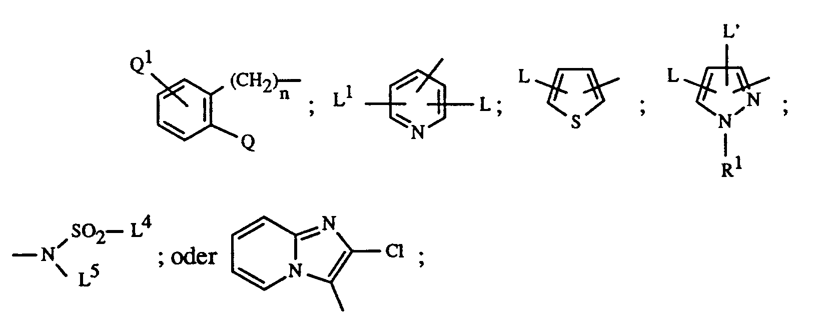 und
Het den Rest 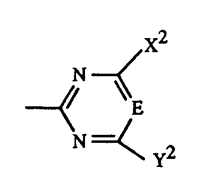 und
M Wasserstoff; oder C₁-C₄-Alkyl;
Q Halogen; Nitro; C₁-C₆-Alkyl; C₁-C₆-Halogenalkyl; C₂-C₆-Alkenyl; C₂-C₆-Halogenalkenyl; C₂-C₆-Alkinyl; C₃-C₆-Halogenalkinyl; -SO₂N(CH₃)₂; -COOR²; -COOR'; oder -(A)-R²
R¹ Wasserstoff; oder C₁-C₄-Alkyl;
R² C₁-C₅-Alkyl; C₂-C₅-Alkenyl; C₂-C₅-Alkinyl; C₁-C₅-Halogenalkyl; C₁-C₄-Alkoxy-C₁-C₄-alkyl; C₂-C₅-Halogenalkenyl; C₂-C₅-Halogenalkinyl;
R' Oxetan-3-yl; oder Thietan-3-yl;
n 0; oder 1
A Sauerstoff; Schwefel; -SO₂-; oder -O-SO₂-;
Q¹ Wasserstoff; Nitro; Halogen; OCH₃; OCHF₂; CH₃; oder SCH₃;
L Halogen; Nitro; C₁-C₅-Alkyl; -A-R²; -COOR²; -CO-NH₂; CO-NHC₁-C₄-Alkyl; oder -CO-N(C₁-C₄-Alkyl)₂;
L' Wasserstoff; oder Chlor;
L¹ Wasserstoff; Nitro; C₁-C₄-Alkyl; Halogen; C₁-C₄-Alkoxy; C₁-C₄-Halogenalkyl; oder C₁-C₄-Halogenalkoxy;
L⁴ C₁-C₆-Alkyl;
L⁵ C₁-C₆-Alkyl; oder
L⁴ und L⁵ gemeinsam eine C₃-C₄-Alkylenbrücke;
X² C₁-C₄-Halogenalkoxy; C₁-C₄-Halogenalkyl; C₁-C₄-Alkoxy; C₁-C₄-Alkyl; Halogen; SCH₃; Cyclopropyl; Dimethylamino; Methylamino; oder C₁-C₄-Alkoxy-C₁-C₄-alkyl;
Y² C₁-C₄-Halogenalkoxy; C₁-C₄-Halogenalkyl; C₁-C₄-Alkoxy; C₁-C₄-Alkyl; Cyclopropyl; Dimethylamino; Methylamino; oder C₁-C₄-Alkoxy-C₁-C₄-alkyl; und
E CH; oder N; bedeutet, sowie deren agrochemisch verträglichen Salze.

4. Mittel gemäss Anspruch 3, enthaltend einen Sulfonylharnstoff der Formel Ia, 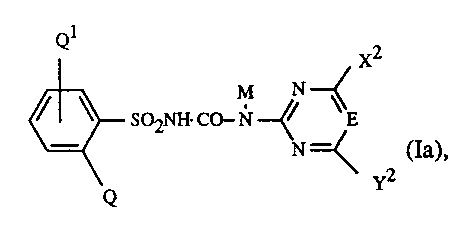 worin
M Wasserstoff; oder C₁-C₄-Alkyl;
Q Halogen; Nitro; C₁-C₆-Halogenalkyl; C₂-C₆-Alkenyl; C₂-C₆-Halogenalkenyl; C₂-C₆-Alkinyl; -SO₂N(CH₃)₂; -COOR²; -COOR'; oder -(A)-R²;
A Sauerstoff; Schwefel; oder -SO₂-;
R² C₁-C₅-Alkyl; C₃-C₆-Alkenyl; C₃-C₆-Alkinyl; C₁-C₅-Halogenalkyl; C₁-C₄-Alkoxy-C₁-C₄-alkyl; C₂-C₅-Halogenalkenyl; oder C₂-C₅-Halogenalkinyl;
R' Oxetan-3-yl; oder Thietan-3-yl;
Q¹ Wasserstoff; Nitro; Halogen; OCH₃; OCHF₂; CH₃; oder SCH₃;
X² C₁-C₄-Halogenalkoxy; C₁-C₄-Halogenalkyl; C₁-C₄-Alkoxy; C₁-C₄-Alkyl; Halogen; SCH₃; Cyclopropyl; Dimethylamino; Methylamino; oder C₁-C₄-Alkoxy-C₁-C₄-alkyl;
Y² C₁-C₄-Halogenalkoxy; C₁-C₄-Halogenalkyl; C₁-C₄-Alkoxy; C₁-C₄-Alkyl; Cyclopropyl; Dimethylamino; Methylamino; oder C₁-C₄-Alkoxy-C₁-C₄-alkyl; und
E CH; oder N;
bedeutet, sowie deren agrochemisch verträglichen Salze.

5. Mittel nach Anspruch 4 enthaltend einen Sulfonylharnstoff der Formel Ia, worin
M Wasserstoff; oder Methyl;
Q C₁-C₆-Halogenalkyl; C₂-C₆-Halogenalkenyl; -(A)-R²; -COOR'; oder -COOR²,
A Sauerstoff; oder Schwefel;
R² C₁-C₆-Halogenalkyl; C₁-C₂-Alkoxy-C₁-C₃-alkyl; C₁-C₂-Alkyl;
R' Oxetan-3-yl; oder Thietan-3-yl;
E N; oder CH;
Q¹ Wasserstoff; und
X² und Y² unabhängig voneinander C₁-C₄-Alkyl; C₁-C₄-Halogenalkoxy; Halogen; oder C₁-C₄-Alkoxy; bedeutet.

6. Mittel nach Anspruch 5 enthaltend einen Sulfonylharnstoff der Formel Ia, worin
Q C₁-C₆-Fluoralkyl; C₂-C₆-Fluoralkenyl;oder -(A)-R²;
R² C₁-C₆-Fluoralkyl oder C₁-C₆-Chloralkyl;
E N;
Q¹ Wasserstoff; und
X² und Y² unabhängig voneinander Methyl; oder Methoxy; bedeutet.

7. Mittel nach Anspruch 3, enthaltend einen Sulfonylharnstoff der Formel Ib, 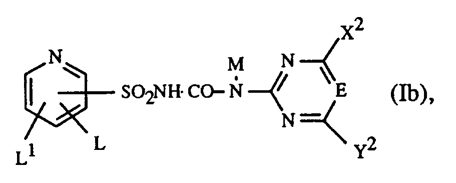 worin
M Wasserstoff; oder C₁-C₄-Alkyl;
L Halogen; Nitro; C₁-C₅-Alkyl; -A-R²; -COOR²; -NH(C₁-C₄-alkyl); oder -N(C₁-C₄-alkyl)₂; -CO-NH₂; -CO-NHC₁-C₄-Alkyl; oder -CO-N(C₁-C₄-Alkyl)₂;
L¹ Wasserstoff; Nitro; C₁-C₄-Alkyl; Halogen; C₁-C₄-Alkoxy; C₁-C₄-Halogenalkyl; oder C₁-C₄-Halogenalkoxy;
X² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
Y² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
A Sauerstoff; Schwefel; oder -SO₂-;
R² C₁-C₅-Alkyl; C₃-C₆-Alkenyl; C₃-C₆-Alkinyl; C₁-C₅-Halogenalkyl; C₁-C₄-Alkoxy-C₁-C₄-alkyl; C₂-C₅-Halogenalkenyl; oder C₂-C₅-Halogenalkinyl;
E CH; oder N;
bedeutet, sowie deren agrochemisch verträglichen Salze.

8. Mittel nach Anspruch 7, enthaltend einen Sulfonylharnstoff der Formel Ib' 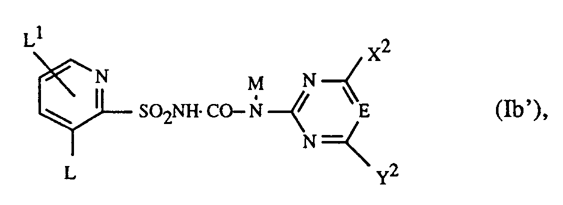 worin die Substituenten L, L¹, M, X², Y² und E wie zuvor definiert sind.

9. Mittel nach Anspruch 7, enthaltend einen Sulfonylharnstoff der Formel Ib'' 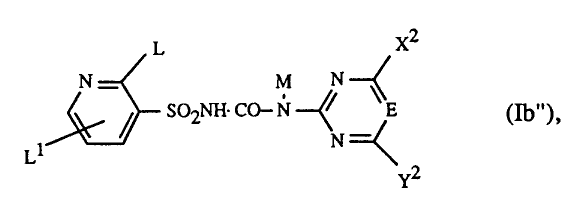 worin die Substituenten L, L¹, M, X², Y² und E wie zuvor definiert sind.

10. Mittel nach Anspruch 3, enthaltend einen Sulfonylharnstoff der Formel Ic, 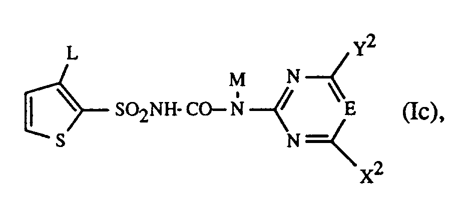 worin
L Halogen; Nitro; C₁-C₅-Alkyl; C₁-C₅-Alkylsulfonyl; -COOR²; -CO-NH₂; -CO-NHC₁-C₄-Alkyl; oder -CO-N(C₁-C₄-Alkyl)₂;
R² C₁-C₅-Alkyl; C₁-C₅-Halogenalkyl; C₂-C₆-Alkenyl; C₂-C₆-Halogenalkenyl; C₂-C₆--Alkinyl; C₃-C₆-Halogenalkinyl; oder C₁-C₄-Alkoxy-C₁-C₄-alkyl;
X² C₁-C₄-Halogenalkoxy; C₁-C₄-Halogenalkyl; C₁-C₄-Alkoxy; C₁-C₄-Alkyl; Dimethylamino; Methylamino; der C₁-C₄-Alkoxy-C₁-C₄-alkyl;
Y² C₁-C₄-Halogenalkoxy; C₁-C₄-Halogenalkyl; C₁-C₄-Alkoxy; C₁-C₄-Alkyl; Cyclopropyl; Dimethylamino; Methylamino; der C₁-C₄-Alkoxy-C₁-C₄-alkyl; und
E CH; oder N;
bedeutet, sowie deren agrochemisch verträglichen Salze.

11. Mittel gemäss Anspruch 3, enthaltend einen Sulfonylharnstoff der Formel Id 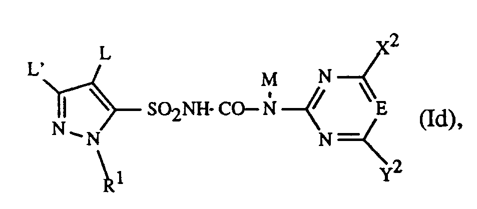 worin
M Wasserstoff; der C₁-C₄-Alkyl;
L C₁-C₅-Alkyl; C₁-C₅-Alylsulfonyl; -COOR²; -CO-NH₂, -CO-NHC₁-C₄-Alkyl; oder -CO-N(C₁-C₄-Alkyl)₂;
L' Wasserstoff; der Chlor,
R¹ Wasserstoff; C₁-C₄-Alkyl; oder Pyridyl;
R² C₁-C₅-Alkyl; C₁-C₅-Halogenalkyl; C₁-C₄-Alkoxy-C₁-C₄-alkyl; C₃-C₆-Halogenalkenyl; oder C₃-C₆-Halogenalkinyl;
X² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
Y² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl; und
E CH; oder N;
bedeutet, sowie deren agrochemisch verträglichen Salze.

12. Mittel gemäss Anspruch 3, enthaltend einen Sulfonylharnstoff der Formel Ie 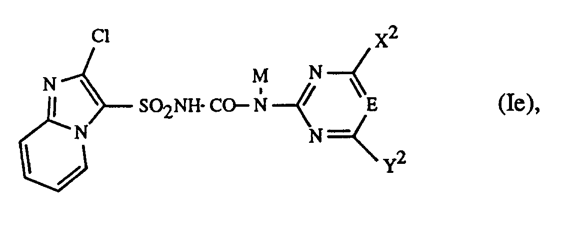 worin
X² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
Y² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl; und
E CH; oder N;
bedeutet, sowie deren agrochemisch verträglichen Salze.

13. Mittel gemäss Anspruch 3, enthaltend einen Sulfonylharnstoff der Formel If 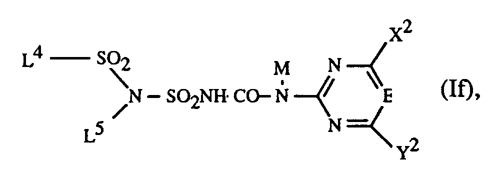 worin
L⁴ C₁-C₆-Alkyl;
L⁵ C₁-C₆-Alkyl; oder
L⁴ und L⁵ gemeinsam eine C₂-C₆-Alkylenbrücke;
X² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl;
Y² C₁-C₄-Halogenalkoxy; C₁-C₄-Halogenalkyl; C₁-C₄-Alkoxy; C₁-C₄-Alkyl; Dimethylamino; Methylamino; oder C₁-C₄-Alkoxy-C₁-C₄-alkyl; und
E CH; oder N;
bedeutet, sowie deren agrochemisch verträglichen Salze.

14. Mittel gemäss Anspruch 3, enthaltend einen Sulfonylharnstoff der Formel Ig 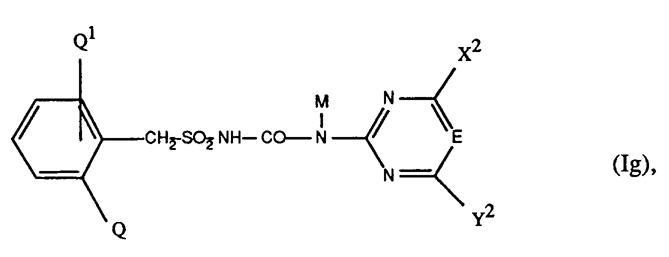 worin Q¹, Q, M, E, X² und Y² die in Anspruch 3 angegebenen Bedeutungen haben, insbesondere worin Q¹ Wasserstoff, Q COOCH₃, M Wasserstoff, E CH, und X² und Y² je Methoxy bedeuten.

15. Mittel gemäss einem oder mehreren der Anspüche 1 bis 14, enthaltend eine synergistisch wirksame Menge einer Verbidnung der Formel II 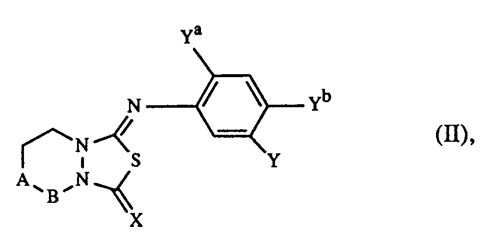 worin
A-B -CH₂-CH₂-; oder -CH=CH-;
Y Hydroxy; C₁-C₆-Alkyl; C₁-C₆-Alkoxy; C₁-C₆Halogenalkoxy; C₃-C₆-Alkenyloxy; C₂-C₆-Halogenalkenyloxy; C₃-C₆-Alkinyloxy; Phenoxy; C₅-C₆-Cycloalkloxy; C₁-C₆-Alkoxycarbonyl-C₁-C₄-alkoxy; C₁-C₆Alkoxycarbonyl-C₂-C₄-alkenyloxy; C₁-C₆-Alkylthiocarbony-C₁-C₄-alkoxy; C₃-C₆-Alkinyloxycarbonyl-C₁-C₄-alkoxy; Benzyloxycarbonyl-C₁-C₄-alkoxy; Trifluoromethyl; Benzyloxy; Chlorbenzyloxy; C₁-C₆-Alkylbenzyloxy; C₂-C₆-Alkenyl; CyanoC₁-C₆alkyl; C₁-C₆-Alkylcarbamoyloxy; C₁-C₄-Alkoxy-C₁-C₄-alkyl; C₃-C₆-Alkinyloxy-C₁-C₄-alkyl; C₃-C₆-Alkenyloxy-C₁-C₄-alkyl; unsubstituiertes oder durch Halogen substituiertes C₅-C₆Cycloalkylmethoxy; C₁-C₆Alkoxy-C₁-C₄-alkoxy; Phenethyloxy; C₅-C₆-Cycloalkoxycarbonyl-C₁-C₄-alkoxy; Pyrrolidinocarbonyl; unsubstituiertes oder durch C₁-C₆-Alkyl substituiertes Phenylcarbonyl; -CO-X⁵-R³; 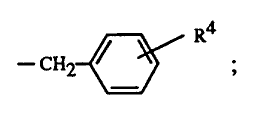 -S(O)ₚ-R⁵; -O-CH(R⁶)-CO-OR⁷; -N=C(CH₃)-R⁸; -NHR⁹; -S-CH(R¹⁰)-CO-R¹¹; oder -O-P(X⁵)(OC₂H₅)₂;
Y^{a} und Y^{b} unabahängig voneinander Wasserstoff; Fluor; Chlor; oder Brom; und
R³ bis R¹¹, X, X⁵ und p wie zuvor definiert sind.

16. Mittel gemäss Anspruch 15 enthaltend eine Verbindung der Formel II 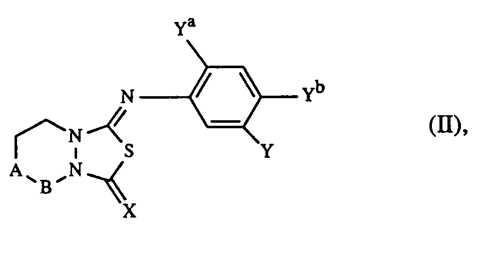 worin
A-B -CH₂-CH₂-; oder -CH=CH-;
Y C₁-C₆-Alkoxy; C₁-C₆Halogenalkoxy; C₃-C₆-Alkenyloxy; C₂-C₆-Halogenalkenyloxy; C₃-C₆-Alkinyloxy; C₅-C₆-Cycloalkyloxy; C₁-C₆-Alkoxycarbonyl-C₁-C₄-alkoxy; C₁-C₆Alkoxycarbonyl-C₂-C₄-alkenyloxy; C₁-C₆-Alkylthiocarbony-C₁-C₄-alkoxy; C₃-C₆-Alkinyloxycarbonyl-C₁-C₄-alkoxy; CyanoC₁-C₆alkyl; C₁-C₆-Alkylcarbamoyloxy; C₁-C₆-Alkoxy-C₁-C₄-alkoxy; Phenoxy; Benzyloxy; -S(O)ₚ-R⁵; -O-CH(R⁶)-CO-OR⁷; -CO-X⁵-R³; oder -S-CH(R¹⁰)-CO-R¹¹;
Y^{a} Wasserstoff; Fluor; oder Chlor;
Y^{b} Wasserstoff; Fluor; Chlor; oder Brom;
R³ Wasserstoff; C₁-C₆-Alkyl; Phenyl; C₅-C₆-Cycloalkyl; C₁-C₆-Alkoxy-C₁-C₄-alkyl; C₁-C₆-Alkoxycarbonyl-C₁-C₄-alkyl; oder C₁-C₄-Alkoxy-C₁-C₄-alkoxycarbonyl-C₁-C₄-alkyl;
R⁵ C₁-C₆-Alkyl; C₃-C₆-Alkenyl; oder C₃-C₆-Alkinyl;
p 0 oder 2;
R⁶ Wasserstoff; oder C₁-C₆-Alkyl;
R⁷ Wasserstoff; C₁-C₆-Alkyl; C₁-C₆-Alkoxy-C₁-C₄-alkyl; Tetrahydrofuryl; C₁-C₄-Alkoxy-C₁-C₄-alkoxy-C₁-C₄-alkyl; C₁-C₆-Alkoxycarbonyl-C₁-C₄-alkyl; oder C₅-C₆-Cycloalkyl;
R¹⁰ Wasserstoff; oder C₁-C₆-Alkyl;
R¹¹ C₁-C₆-Alkoxy; C₅-C₆-Cycloalkyloxy; 1-Pyrrolidinyl; C₃-C₆-Alkenyloxy; C₃-C₆-Alkinyloxy; C₁-C₆-Alkylthio; C₁-C₆-Halogenalkoxy; C₁-C₄-Alkoxycarbonyl-C₁-C₄-alkoxy; α,α-Dimethylbenzylamino; -OC₂H₄S(O)₂-(C₁-C₆-Alkyl); -OC₂H₄S-(C₁-C₆-Alkyl); -OC₂H₄S(O)₂-(Phenyl); -OC₂H₄S-(Phenyl); 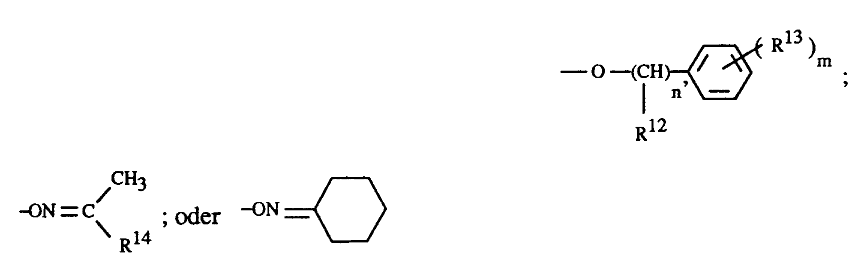
m 0; 1; 2; oder 3;
n' 0; oder 1;
R¹² Halogen; oder C₁-C₄-Alkyl;
R¹³ Phenyl; Benzyl; oder Methoxy-C₁-C₄-alkyl;
R¹⁴ Styryl; Cyano-C₁-C₄-alkyl; Tetrahydrofuran-2-yl, Thienyl oder Pyridin-2-yl;
X Sauerstoff; oder Schwefel; und
X⁵ Sauerstoff; oder Schwefel;
bedeutet.

17. Mittel gemäss Anspruch 15, enthaltend eine Verbindung der Formel IIa 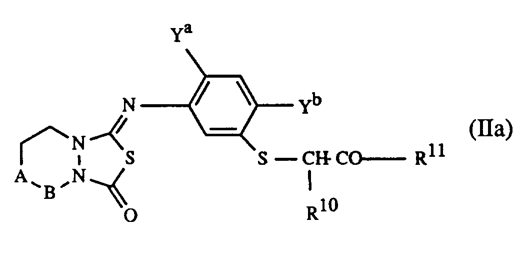 worin
A-B, Y^{a}, Y^{b}, R¹⁰, und R¹¹ wie zuvor definiert sind.

18. Mittel gemäss Anspruch 15, enthaltend eine Verbindung der Formel IIb 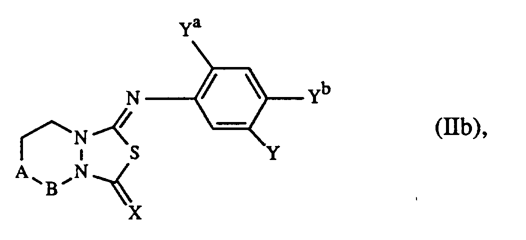 worin
Y C₁-C₆-Alkoxy; C₃-C₆-Alkenyloxy; C₃-C₆-Alkinyloxy; C₁-C₆-Alkoxycarbonyl-C₁-C₄-alkoxy; C₁-C₆-Alkylthiocarbonyl-C₁-C₄-alkoxy; C₃-C₆-Alkinyloxycarbonyl-C₁-C₄-alkoxy; C₁-C₆-Alkylthio; C₁-C₆-Alkylsulfonyl; C₃-C₆-Alkinylthio; C₃-C₆-Alkenylthio; C₅-C₆-Cycloalkoxy; Phenoxy; Benzyloxy; CyanoC₁-C₆alkyl; C₁-C₆-Alkoxy-C₁-C₄-alkoxy; und
A-B, Y^{a}, und Y^{b} wie zuvor definiert sind.

19. Mittel gemäss Anspruch 15, enthaltend eine Verbindung der Formel IIc 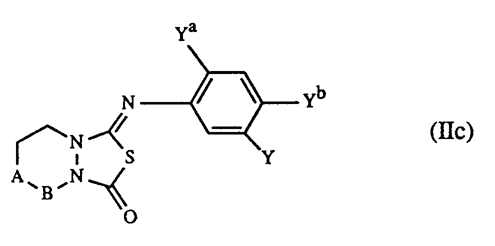 worin
Y -CO-X⁵-R³;
R³ Wasserstoff; C₁-C₆-Alkyl; Phenyl; C₅-C₆-Cycloalkyl; C₁-C₆-Alkoxy-C₁-C₄-alkyl; C₃-C₆-Alkinyl; C₃-C₆-Alkenyl; Benzyl; C₁-C₆-Alkoxycarbonyl-C₁-C₄-alkyl; oder C₁-C₄-Alkoxy-C₁-C₄-alkoxycarbonyl-C₁-C₄-alkyl; und
X⁵ Sauerstoff; oder Schwefel; und
A-B, Y^{a}, und Y^{b} wie zuvor definiert sind.

20. Mittel gemäss Anspruch 15, enthaltend eine Verbindung der Formel IId 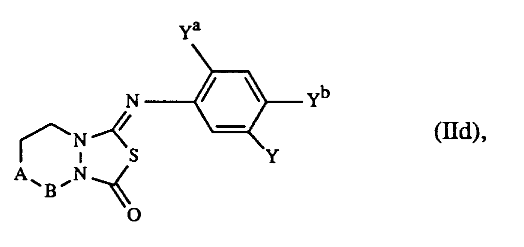
Y -O-CH(R⁶)-CO-OR⁷;
R⁶ Wasserstoff; oder C₁-C₆-Alkyl;
R⁷ Wasserstoff; C₁-C₆-Alkyl; C₃-C₆-Alkinyl; C₃-C₆-Alkenyl; C₁-C₆-Alkoxy-C₁-C₄-alkyl; Tetrahydrofuryl; C₁-C₄Alkoxy-C₁-C₄-alkoxy-C₁-C₄-alkyl; C₁-C₆-Alkoxycarbonyl-C₁-C₄-alkyl; oder C₅-C₆-Cycloalkyl; und
A-B, Y^{a}, und Y^{b} wie zuvor definiert sind.

21. Mittel gemäss einem der Ansprüche 15 bis 20 enthaltend eine Verbindung der Formel II oder der Formeln IIa bis IId, worin
A-B -CH₂-CH₂-; bedeutet

22. Mittel gemäss Anspruch 2, enthaltend einen Sulfonylharnstoffe der Formel Ia, 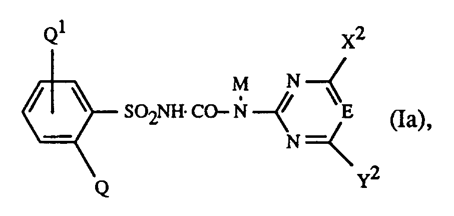 worin
M Wasserstoff
Q C₁-C₆-Halogenalkyl; C₂-C₆-Halogenalkenyl;oder -(A)-R²;
A Sauerstoff; oder Schwefel;
R² C₁-C₆-Halogenalkyl;
E N;
Q¹ Wasserstoff; und
X² und Y² unabhängig voneinander C₁-C₄-Alkyl; C₁-C₄-Alkoxy; oder C₁-C₄-Halogenalkoxy; bedeutet
und eine Verbindung der Formel IIa 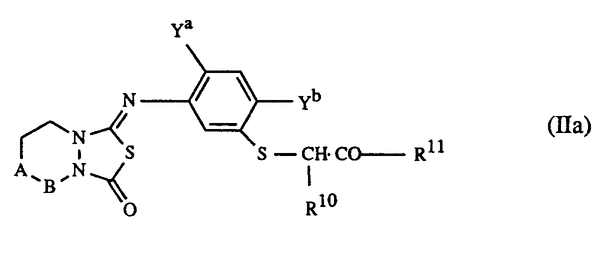 worin
A-B -CH₂-CH₂-;
Y^{a} Wasserstoff; oder Fluor;
Y^{b} Chlor; oder Brom;
R¹⁰ Wasserstoff; oder C₁-C₄-Alkyl; und
R¹¹ C₁-C₄-Alkoxy; C₅-C₆-Cycloalkyloxy; C₃-C₆-Alkenyloxy; C₃-C₆-Alkinyloxy; C₁-C₄-Alkylthio; oder C₁-C₄-Alkoxycarbonyl-C₁-C₄alkoxy;
bedeutet.

23. Mittel gemäss Anspruch 2, enthaltend einen Sulfonylharnstoffe der Formel Ia, 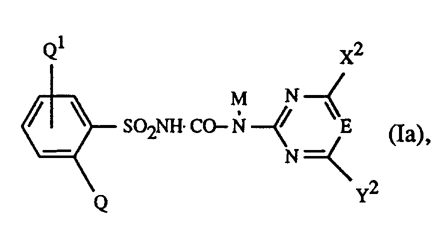 worin
M Wasserstoff
Q C₁-C₆-Halogenalkyl; C₂-C₆-Halogenalkenyl;oder -(A)-R²;
A Sauerstoff; oder Schwefel;
R² C₁-C₆-Halogenalkyl;
E N;
Q¹ Wasserstoff; und
X² und Y² unabhängig voneinander C₁-C₄-Alkyl; C₁-C₄-Alkoxy; oder C₁-C₄-Halogenalkoxy; bedeutet
und eine Verbindung der Formel IIc 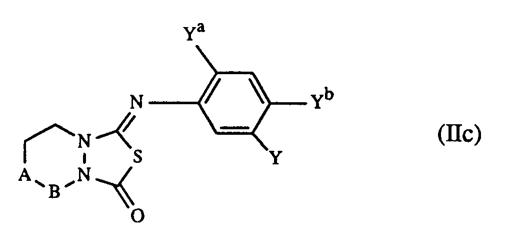 worin
Y -CO-X⁵-R³;
R³ Wasserstoff; C₁-C₆-Alkyl; Phenyl; C₅-C₆-Cycloalkyl; C₁-C₆-Alkoxy-C₁-C₄-alkyl; C₃-C₆-Alkinyl; C₃-C₆-Alkenyl; Benzyl; C₁-C₆-Alkoxycarbony-C₁-C₄-alkyl; oder C₁-C₄-Alkoxy-C₁-C₄-alkoxycarbonyl-C₁-C₄-alkyl; und
X⁵ Sauerstoff; oder Schwefel; und
A-B, Y^{a}, und Y^{b} wie zuvor definiert sind.

24. Mittel gemäss einem der Ansprüche 15 bis 20 enthaltend eine Verbindung der Formel II oder der Formeln IIa bis IId, worin
A-B -CH₂=CH₂-; bedeutet.

25. Mittel gemäss einem der Ansprüche 1 bis 21, enthaltend N-[2-(2-Chlorethoxy)phenylsulfonyl]-N'-(4-methoxy-6-methyl-1,3,5-triazin-2-yl)-harnstoff als Verbindung der Formel Ia neben einer synergistisch wirksamen Menge 3-[(4-Chlor-2-fluor-5-methoxycarbonylmethylthio)phenylimino]5,6,7,8-tetrahydro-1H,3H-(1,3,4)-thiadiazolo-[3,4-a]-pyridazin als Verbindung der Formel IIa.

26. Mittel gemäss einem der Ansprüche 1 bis 21, enthaltend N-[2-(2-Chlorethoxy)phenylsulfonyl]-N'-(4-methoxy-6-methyl-1,3,5-triazin-2-yl)-harnstoff als Verbindung der Formel Ia neben einer synergistisch wirksamen Menge
9-[4-Chlor-2-fluor-5-(2-ethoxy-ethoxycarbonyl-1-ethylthiocarbonyl)phenylimino]-8-diaza bicyclo[4.3.0]nonan-7-on als Verbindung der Formel IIa.

27. Mittel gemäss einem der Ansprüche 1 bis 21, enthaltend
N-[2-(2-Fluorethylthio)phenylsulfonyl]-N'-(4-methoxy-6-methyl-1,3,5-triazin-2-yl)-harnstoff, N-[2-(3,3,3-Trifluorpropyl)phenylsulfonyl]-N'-(4-methoxy-6-methyl-1,3,5-triazin-2-yl)-harnstoff, N-[2-(3,3-Difluorbut-1-enyl)phenylsulfonyl]-N'-(4-methoxy-6-methyl-1,3,5-triazin-2-yl)-harnstoff, N-[2-(3,3-Difluorbutyl)phenylsulfonyl]-N'-(4-methoxy-6-methyl-1,3,5-triazin-2-yl)-harnstoff, N-[2-(2,2-Difluorethylthio)phenylsulfonyl]-N'-(4-methoxy-6-methyl-1,3,5-triazin-2-yl)-harnstoff, N-[2-(2-Methoxyethoxy)phenylsulfonyl]-N'-(4,6-dimethoxy-1,3,5- triazin-2-yl)-harnstoff, N-[3-Dimethylaminocarbonylpyridin-2-sulfonyl]-N'-(4,6-dimethoxy-pyrimidin-2-yl)-harnstoff, N-[3-Ethylsulfonyl-pyridin-2-sulfonyl]-N'-(4,6-dimethoxy-pyrimidin-2-yl)-harnstoff, N-[2-Methoxycarbonylphenylsulfonyl]-N'-(4,6-bis-difluormethoxy-pyrimidin-2-yl)-harnstoff, N-[2-Methoxycarbonylphenylsulfonyl]-N'-(4,6-dimethoxypyrimidin-2-yl)-harnstoff, N-[2-Methoxycarbonylbenzylsulfonyl]-N,-(4,6-dimethoxypyrimidin-2-yl)-harnstoff, N-[2-Methoxycarbonylphenylsulfonyl]-N,-methyl-N'-(4-methoxy-6-methyl-1,3,5-triazin-2-yl)-harnstoff, N-[1-Methyl-4-Ethoxycarbonylpyrazol-5-sulfonyl]-N'-(4,6-dimethoxy-pyrimidin-2-yl)-harnstoff, oder N-[2-(2-Chlorethoxy)phenylsulfonyl]-N'-(4-methoxy-6-methyl-1,3,5-trazin-2-yl)-harnstoff als Verbindung der Formel Ia neben einer synergistisch wirksamen Menge 3-[(4-Chlor-2-fluor-5-methoxycarbonylmethylthio)phenylimino]5,6,7,8-tetrahydro-1H,3 H-(1,3,4)-thiadiazolo-[3,4-a]-pyridazin als Verbindung der Formel IIa.

28. Mittel gemäss einem der Ansprüche 1 bis 21, enthaltend N-[2-(2-Fluorethylthio)phenylsulfonyl]-N'-(4-methoxy-6-methyl-1,3,5-triazin-2-yl)-harnstoff, N-[2-(3,3,3-Trifluorpropyl)phenylsulfonyl]-N'-(4-methoxy-6-methyl-1,3,5-triazin-2-yl)-harnstoff, N-[2-(3,3-Difluorbut-1-enyl)phenylsulfonyl]-N'-(4-methoxy-6-methyl-1,3,5-triazin-2-yl)-harnstoff, N-[2-(3,3-Difluorbutyl)phenylsulfonyl]-N'-(4-methoxy-6-methyl-1,3,5-triazin-2-yl)-harnstoff, N-[2-(2,2-Difluorethylthio)phenylsulfonylj-N'-(4-metboxy-6-methyl-1,3,5-triazin-2-yl)-harnstoff, N-[2-(2-Methoxyethoxy)phenylsulfonyl]-N'-(4,6-dimethoxy-1,3,5-triazin-2-yl)-harnstoff, N-[3-Dimethylaminocarbonylpyridin-2-sulfonyl]-N'-(4,6-dimethoxy-pyrimidin-2-yl)-harnstoff, N-[3-Ethylsulfonyl-pyridin-2-sulfonyl]-N'-(4,6-dimethoxy-pyrimidin-2-yl)-harnstoff, N-[2-Methoxycarbonylphenylsulfonyl]-N'-(4,6-bis-difluormethoxy-pyrimidin-2-yl)-harnstoff, N-[2-Methoxycarbonylphenylsulfonyl]-N'-(4,6-dimethoxypyrimidin-2-yl)-harnstoff, N-[2-Methoxycarbonylbenzylsulfonyl]-N'-(4,6-dimethoxypyrimidin-2-yl)-harnstoff, N-[2-Methoxycarbonylphenylsulfonyl]-N'-methyl-N'-(4-methoxy-6-methyl-1,3,5-triazin-2-yl)-harnstoff, N-[1-Methyl-4-ethoxycarbonylpyrazol-5-sulfonyl]-N'-(4,6-dimethoxy-pyrimidin-2-yl)-harnstoff, oder N-[2-(2-Chlorethoxy)phenylsulfonyl]-N'-(4-methoxy-6-methyl-1,3,5-trazin-2-yl)-harnstoff als Verbindung der Formel Ia neben einer synergistisch wirksamen Menge 9-[4-Chlor-2-fluor-5-(2-ethoxy-ethoxycarbony-1-ethylthiocarbonyl)-phenylimino]-8-diazabicyclo[4.3.0]nonan-7-on als Verbindung der Formel IIa.

29. Mittel gemäss einem der Ansprüche 1 bis 21, enthaltend
N-[2-(Oxetan-3-yloxycarbonyl)phenylsulfonyl]-N'(4-methoxy-6-methyl-1,3,5-triazin-2-yl)-harnstoff, als Verbindung der Formel Ia neben einer synergistisch wirksamen Menge 3-[(4-Chlor-2-fluor-5-methoxycarbonylmethylthio)-phenylimino]5,6,7,8-tetrahydro-1H,3 H-(1,3,4)-thiadiazolo-[3,4-a]-pyridazin (Verbindung 7.012) als Verbindung der Formel IIa.

30. Verfahren zur Bekämpfung unerwünschten Pflanzenwuchses in Nutzpflanzenkulturen, dadurch gekennzeichnet, dass man eine herbizid wirksame Menge eines Mittels gemäss einem der Ansprüche 1 bis 29 auf die Kulturpflanze oder deren Lebensraum einwirken lässt.

31. Verfahren gemäss Anspruch 30 zur Bekämpfung von Unkräutern in Getreide.

32. Verfahren gemäss Anspruch 30 zur Bekämpfung von Unkräutern in Mais.

33. Verfahren gemäss Anspruch 30 zur Bekämpfung von Unkräutern in Soja.

34. Verfahren gemäss Anspruch 30 zur Bekämpfung von Unkräutern in Reis.

## Claims

1. A herbicidal composition comprising a sulfonylurea of formula I 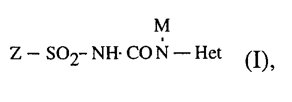 wherein
Z is a substituted phenyl, thiophenyl, benzyl, pyridinyl, pyrazinyl, hetero-fused phenyl, or alkylsulfonylamino radical;
M is hydrogen; or C₁-C₄alkyl; and
Het is a substituted five- or six-membered heterocycle having 2 or 3 nitrogen atoms,
or an agrochemically acceptable salt thereof, and a synergistically effective amount of a 5,6,7,8-tetrahydro-1H,3H-(1,3,4)-thiadiazolo[3,4-a]pyridazine or 7,8-dihydro-1H,3H-(1,3,4)-thiadiazolo[3,4-a]pyridazine of the general formula II 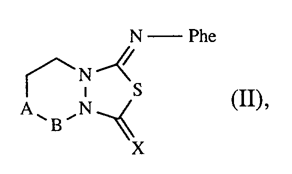 wherein
X is oxygen; or sulfur;
A-B is -CH₂-CH₂-; or -CH=CH-; and
Phe is a substituted phenyl radical.

2. A herbicidal composition according to claim 1, comprising a herbicidally active sulfonylurea of formula I 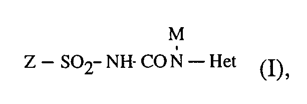 wherein
Z is a radical 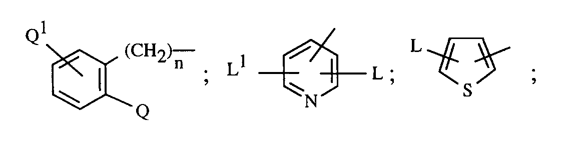 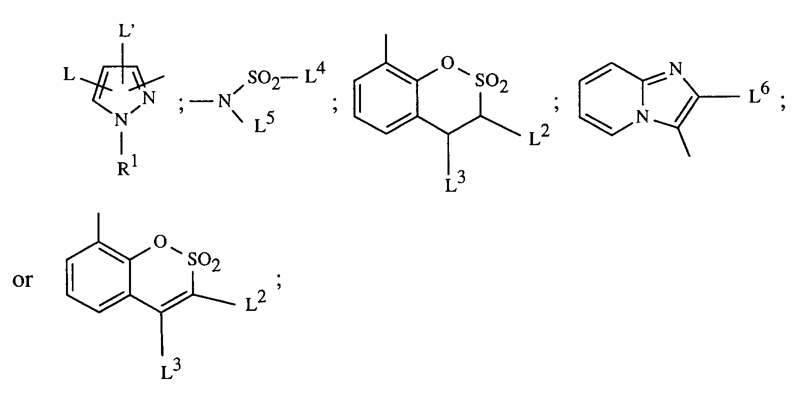
Het is a radical 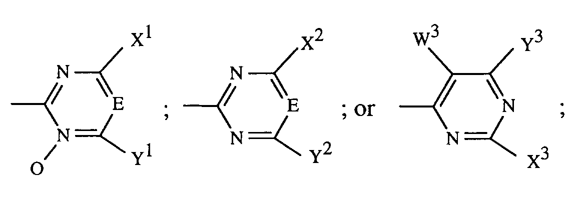
M is hydrogen; or C₁-C₄alkyl;
Q is halogen; nitro; C₁-C₆alkyl; C₁-C₆haloalkyl; C₂-C₆alkenyl; C₂-C₆haloalkenyl; C₂-C₆alkynyl; C₃-C₆haloalkynyl; -NH₂; -NH-(C₁-C₄alkyl); -N(C₁-C₄alkyl)₂; -SO₂N-(C₁-C₄alkyl)₂; -SO₂NH(C₁-C₄alkyl); -COOR²; -COOR'; -(A)-R'; -(A)-R²; phenyl; phenoxy; C₁-C₅alkylphenyl; halophenyl; or halophenoxy;
Q¹ is hydrogen; nitro; C₁-C₄alkyl; halogen; C₁-C₄alkoxy; C₁-C₄haloalkyl; N(C₁-C₄-alkyl)₂; C₁-C₄alkylamino; C₁-C₄haloalkylthio; C₁-C₄haloalkoxy; C₁-C₄alkoxy-C₁-C₄-alkoxy; C₂-C₄alkenyl; C₂-C₄alkynyl; CN; or C₂-C₄haloalkenyl;
n is 0; or 1;
R¹ is hydrogen; C₁-C₄alkyl; or pyridyl;
A is oxygen; sulfur; -SO-; -SO₂-; or -O-SO₂-;
R² is C₁-C₅alkyl; C₂-C₆alkenyl; C₃-C₆alkynyl; C₁-C₅haloalkyl; C₁-C₄alkoxy-C₁-C₄alkyl; C₂-C₅haloalkenyl; or C₂-C₅haloalkynyl;
R' is oxetan-3-yl; or thietan-3-yl;
L is halogen; nitro; C₁-C₅alkyl; -A-R²; COOR²; -CO-NH₂; -CO-NHC₁-C₄alkyl; or -CO-N(C₁-C₄alkyl)₂;
L' is hydrogen; or chlorine;
L¹ is hydrogen; nitro; C₁-C₄alkyl; halogen; C₁-C₄alkoxy; C₁-C₄haloalkyl; or C₁-C₆haloalkoxy;
L² is hydrogen; or C₁-C₄alkyl;
L³ is hydrogen; or C₁-C₄alkyl;
L⁴ is C₁-C₆alkyl; C₂-C₆alkenyl; or C₂-C₆alkynyl;
L⁵ is C₁-C₆alkyl; C₂-C₆alkenyl; or C₂-C₆alkynyl; or
L⁴ and L⁵ together are a C₂-C₆alkylene bridge;
E is N; or CH;
X¹, X², X³ and Y¹, each independently of the others, is hydrogen; halogen; C₁-C₄haloalkoxy; C₁-C₄haloalkyl; C₁-C₄alkoxy; C₁-C₄alkyl; cyclopropyl; dimethylamino; methylamino; ethylamino; amino; C₁-C₄alkoxy-C₁-C₄alkyl; C₁-C₄alkoxy-C₁-C₄-alkoxy; C₁-C₄haloalkylthio; C₁-C₄alkylthio; or C₁-C₄alkylthio-C₁-C₄alkyl;
Y² is hydrogen; halogen; C₁-C₄haloalkoxy; C₁-C₄haloalkyl; C₁-C₄alkoxy; C₁-C₄alkyl; dimethylamino; methylamino; ethylamino; amino; C₁-C₄alkoxy-C₁-C₄alkyl; cyclopropyl; dimethoxymethyl; diethoxyethyl; 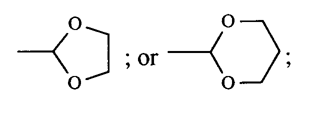
Y³ is C₁-C₄alkyl; C₁-C₄alkoxy; C₁-C₂haloalkyl; or C₁-C₂haloalkoxy;
W³ is hydrogen; C₁-C₄alkyl; C₁-C₄alkoxy; C₁-C₂haloalkyl; C₁-C₂haloalkoxy; C₁-C₄-alkoxycarbonyl; halogen; cyano; nitro; C₁-C₄alkylthio; C₁-C₄alkylsulfinyl; or C₁-C₄-alkylsulfonyl; or
W³ and Y³ together are a C₂-C₄alkylene bridge; or a C₁-C₃alkylene bridge interrupted once by oxygen;
with a synergistically effective amount of a 5,6,7,8-tetrahydro-1H,3H-(1,3,4)-thiadiazolo[3,4-a]pyridazine or 7,8-dihydro-1H,3H-(1,3,4)-thiadiazolo[3,4-a]pyridazine of formula II 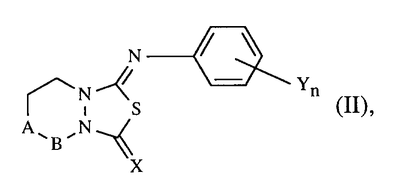 wherein
A-B is -CH₂-CH₂-; or -CH=CH-;
each Y, independently of the others, is halogen; hydroxy; C₁-C₆alkyl; C₁-C₆alkoxy; C₁-C₆haloalkoxy; C₃-C₆alkenyloxy; C₂-C₆haloalkenyloxy; C₃-C₆alkynyloxy; phenoxy; C₅-C₆cycloalkyloxy; C₁-C₆alkoxycarbonyl-C₁-C₄alkoxy; C₁-C₆alkoxycarbonyl-C₂-C₄alkenyloxy; C₁-C₆alkylthiocarbonyl-C₁-C₄alkoxy; C₃-C₆alkynyloxycarbonyl-C₁-C₄alkoxy; benzyloxycarbonyl-C₁-C₄alkoxy; trifluoromethyl; benzyloxy; chlorobenzyloxy; C₁-C₆alkylbenzyloxy; C₂-C₆alkenyl; cyanoC₁-C₆alkyl; C₁-C₆alkylcarbamoyloxy; C₁-C₄alkoxy-C₁-C₄alkyl; C₃-C₆alkynyloxy-C₁-C₄alkyl; C₃-C₆alkenyloxy-C₁-C₃alkyl; unsubstituted or halo-substituted C₅-C₆cycloalkylmethoxy; C₁-C₆-alkoxy-C₁-C₄alkoxy; phenethyloxy; C₅-C₆cycloalkoxycarbonyl-C₁-C₄alkoxy; pyrrolidinocarbonyl; unsubstituted or C₁-C₆alkyl-substituted phenylcarbonyl; -CO-X⁵-R³; 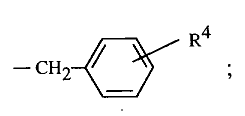 -S(O)ₚ-R⁵; -O-CH(R⁶)-CO-OR⁷; -N=C(CH₃)-R⁸; -NHR⁹; -S-CH(R¹⁰)-CO-R¹¹; or -O-P(X⁵)(OC₂H₅)₂;
R³ is hydrogen; C₁-C₆alkyl; phenyl; C₅-C₆cycloalkyl; C₁-C₆alkoxy-C₁-C₄alkyl; C₁-C₆-alkoxycarbonyl-C₁-C₄alkyl; or C₁-C₄alkoxy-C₁-C₄alkoxycarbonyl-C₁-C₄alkyl;
R⁴ is hydrogen; C₁-C₆alkoxy; C₁-C₄alkyl; or halogen;
R⁵ is C₁-C₆alkyl; C₂-C₆alkenyl; or C₂-C₆alkynyl;
p is 0 or 2;
R⁶ is hydrogen; or C₁-C₆alkyl;
R⁷ is hydrogen; C₁-C₆alkyl; C₁-C₆alkoxy-C₁-C₄alkyl; tetrahydrofuryl; C₁-C₄alkoxyC₁-C₄alkoxy-C₁-C₄alkyl; C₁-C₆alkoxycarbonyl-C₁-C₄alkyl; or C₅-C₆cycloalkyl;
R⁸ is C₁-C₆alkyl; or phenyl;
R⁹ is C₁-C₆alkylcarbonyl; or C₁-C₆alkoxycarbonyl-C₁-C₄alkyl;
R¹⁰ is hydrogen; or C₁-C₆alkyl;
R¹¹ is C₁-C₆alkoxy; C₅-C₆cycloalkyloxy; 1-pyrrolidinyl; C₃-C₆alkenyloxy; C₃-C₆alkynyloxy; C₁-C₆alkylthio; C₁-C₆haloalkoxy; C₁-C₄alkoxycarbonyl-C₁-C₄alkoxy; α,α-dimethylbenzylamino; -OC₂H₄S(O)₂-(C₁-C₆alkyl); -OC₂H₄S-(C₁-C₆alkyl); -OC₂H₄S(O)₂-(phenyl); -OC₂H₄S-(phenyl); 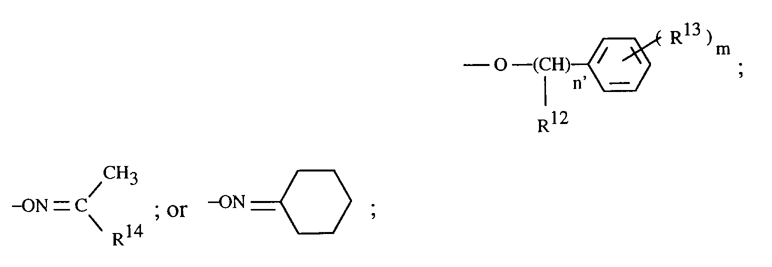
n' is 0; or 1;
R¹² is halogen; or C₁-C₄alkyl;
R¹³ is phenyl; benzyl; or methoxy-C₁-C₄alkyl;
R¹⁴ is styryl; cyano-C₁-C₄alkyl; tetrahydrofuran-2-yl, thienyl or pyridin-2-yl;
X is oxygen; or sulfur;
X⁵ is oxygen; or sulfur;
m is 0; 1; 2; or 3;
and
n is 0; 1; 2; or 3.

3. A composition according to claim 1 or 2, comprising a sulfonylurea of formula I, wherein
Z is a radical 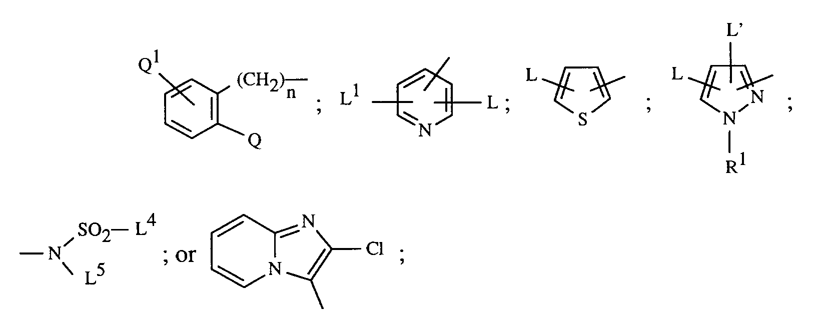 and
Het is the radical 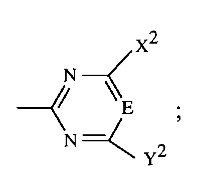 and
M is hydrogen; or C₁-C₄alkyl;
Q is halogen; nitro; C₁-C₆alkyl; C₁-C₆haloalkyl; C₂-C₆alkenyl; C₂-C₆haloalkenyl; C₂-C₆alkynyl; C₃-C₆haloalkynyl; -SO₂N(CH₃)₂; -COOR²; -COOR'; or -(A)-R²;
R¹ is hydrogen; or C₁-C₄alkyl;
R² is C₁-C₅alkyl; C₂-C₅alkenyl; C₂-C₅alkynyl; C₁-C₅haloalkyl; C₁-C₄alkoxy-C₁-C₄alkyl; C₂-C₅haloalkenyl; or C₂-C₅haloalkynyl;
R' is oxetan-3-yl; or thietan-3-yl;
n is 0; or 1;
A is oxygen; sulfur; -SO₂-; or -O-SO₂-;
Q¹ is hydrogen; nitro; halogen; OCH₃; OCHF₂; CH₃; or SCH₃;
L is halogen; nitro; C₁-C₅alkyl; -A-R²; -COOR²; -CO-NH₂; -CO-NHC₁-C₄alkyl; or -CO-N(C₁-C₄alkyl)₂;
L' is hydrogen; or chlorine;
L¹ is hydrogen; nitro; C₁-C₄alkyl; halogen; C₁-C₄alkoxy; C₁-C₄haloalkyl; or C₁-C₄haloalkoxy;
L⁴ is C₁-C₆alkyl;
L⁵ is C₁-C₆alkyl; or
L⁴ and L⁵ together are a C₃-C₄alkylene bridge;
X² is C₁-C₄haloalkoxy; C₁-C₄haloalkyl; C₁-C₄alkoxy; C₁-C₄alkyl; halogen; SCH₃; cyclopropyl; dimethylamino; methylamino; or C₁-C₄alkoxy-C₁-C₄alkyl;
Y² is C₁ -C₄haloalkoxy; C₁-C₄haloalkyl; C₁-C₄alkoxy; C₁-C₄alkyl; cyclopropyl; dimethylamino; methylamino; or C₁-C₄alkoxy-C₁-C₄alkyl; and
E is CH; or N; or an agrochemically acceptable salt thereof.

4. A composition according to claim 3, comprising a sulfonylurea of formula Ia 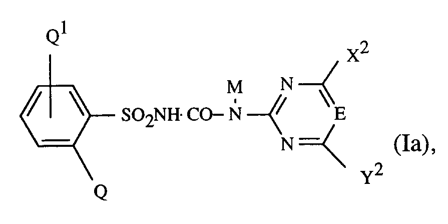 wherein
M is hydrogen; or C₁-C₄alkyl;
Q is halogen; nitro; C₁-C₆haloalkyl; C₂-C₆alkenyl; C₂-C₆haloalkenyl; C₂-C₆alkynyl; -SO₂N(CH₃)₂; -COOR²; -COOR'; or -(A)-R²;
A is oxygen; sulfur; or -SO₂-;
R² is C₁-C₅alkyl; C₃-C₆alkenyl; C₃-C₆alkynyl; C₁-C₅haloalkyl; C₁-C₄alkoxy-C₁-C₄alkyl; C₂-C₅haloalkenyl; or C₂-C₅haloalkynyl;
R' is oxetan-3-yl; or thietan-3-yl;
Q¹ is hydrogen; nitro; halogen; OCH₃; OCHF₂; CH₃; or SCH₃;
X² is C₁-C₄haloalkoxy; C₁-C₄haloalkyl; C₁-C₄alkoxy; C₁-C₄alkyl; halogen; SCH₃; cyclopropyl; dimethylamino; methylamino; or C₁-C₄alkoxy-C₁-C₄alkyl;
Y² is C₁-C₄haloalkoxy; C₁-C₄haloalkyl; C₁-C₄alkoxy; C₁-C₄alkyl; cyclopropyl; dimethylamino; methylamino; or C₁-C₄alkoxy-C₁-C₄alkyl; and
E is CH; or N;
or an agrochemically acceptable salt thereof.

5. A composition according to claim 4, comprising a sulfonylurea of formula Ia, wherein
M is hydrogen; or methyl;
Q is C₁-C₆haloalkyl; C₂-C₆haloalkenyl; -(A)-R²; -COOR'; or -COOR²;
A is oxygen; or sulfur;
R² is C₁-C₆haloalkyl; C₁-C₂alkoxy-C₁-C₃alkyl; or C₁-C₂alkyl;
R' is oxetan-3-yl; or thietan-3-yl;
E is N; or CH;
Q¹ is hydrogen; and
X² and Y², each independently of the other, is C₁-C₄alkyl; C₁-C₄haloalkoxy; halogen; or C₁-C₄alkoxy.

6. A composition according to claim 5, comprising a sulfonylurea of formula Ia, wherein
Q is C₁-C₆fluoroalkyl; C₂-C₆fluoroalkenyl; or -(A)-R²;
R² is C₁-C₆fluoroalkyl or C₁-C₆chloroalkyl;
E is N;
Q¹ is hydrogen; and
X² and Y², each independently of the other, is methyl; or methoxy.

7. A composition according to claim 3, comprising a sulfonylurea of formula Ib 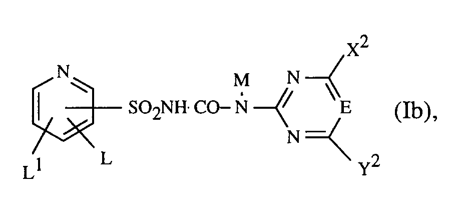 wherein
M is hydrogen; or C₁-C₄alkyl;
L is halogen; nitro; C₁-C₅alkyl; -A-R²; -COOR²; -NH(C₁-C₄alkyl); or - N(C₁-C₄alkyl)₂; -CO-NH₂; -CO-NHC₁-C₄alkyl; or -CO-N(C₁-C₄alkyl)₂;
L¹ is hydrogen; nitro; C₁-C₄alkyl; halogen; C₁-C₄alkoxy; C₁-C₄haloalkyl; or C₁-C₄haloalkoxy;
X² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl;
Y² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl;
A is oxygen; sulfur; or -SO₂-;
R² is C₁-C₅alkyl; C₃-C₆alkenyl; C₃-C₆alkynyl; C₁-C₅haloalkyl; C₁-C₄alkoxy-C₁-C₄alkyl; C₂-C₅haloalkenyl; or C₂-C₅haloalkynyl;
E is CH; or N;
or an agrochemically acceptable salt thereof.

8. A composition according to claim 7, comprising a sulfonylurea of formula Ib' 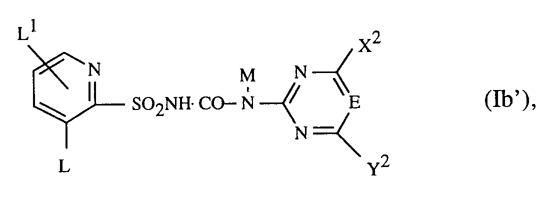 wherein the substituents L, L¹, M, X², Y² and E are as defined above.

9. A composition according to claim 7, comprising a sulfonylurea of formula Ib'' 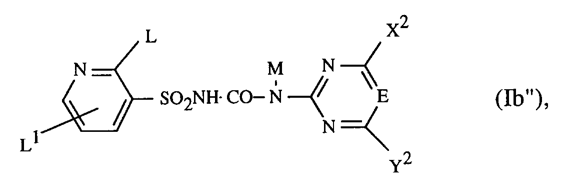 wherein the substituents L, L¹, M, X², Y² and E are as defined above.

10. A composition according to claim 3, comprising a sulfonylurea of formula Ic 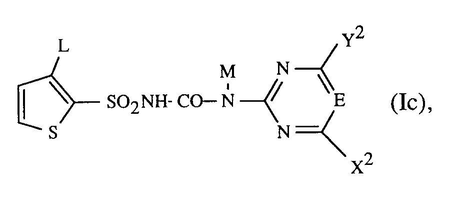 wherein
L is halogen; nitro; C₁-C₅alkyl; C₁-C₅alkylsulfonyl; -COOR²; -CO-NH₂; -CO-NHC₁-C₄alkyl; or -CO-N(C₁-C₄alkyl)₂;
R² is C₁-C₅alkyl; C₁-C₅haloalkyl; C₂-C₆alkenyl; C₂-C₆haloalkenyl; C₂-C₆alkynyl; C₃-C₆haloalkynyl; or C₁-C₄alkoxy-C₁-C₄alkyl;
X² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl;
Y² is C₁-C₄haloalkoxy; C₁-C₄haloalkyl; C₁-C₄alkoxy; C₁-C₄alkyl; cyclopropyl; dimethylamino; methylamino; or C₁-C₄alkoxy-C₁-C₄alkyl; and
E is CH; or N;
or an agrochemically acceptable salt thereof.

11. A composition according to claim 3, comprising a sulfonylurea of formula Id 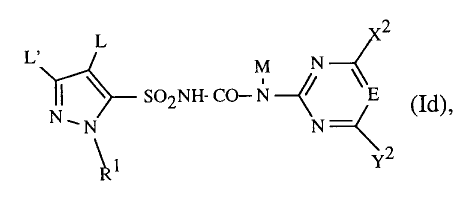 wherein
M is hydrogen; or C₁-C₄alkyl;
L is C₁-C₅alkyl; C₁-C₅alkylsulfonyl; -COOR²; -CO-NH₂; -CO-NHC₁-C₄alkyl; or -CO-N(C₁-C₄alkyl)₂;
L' is hydrogen; or chlorine;
R¹ is hydrogen; C₁-C₄alkyl; or pyridyl;
R² is C₁-C₅alkyl; C₁-C₅haloalkyl; C₁-C₄alkoxy-C₁-C₄alkyl; C₃-C₆haloalkenyl; or C₃-C₆-haloalkynyl;
X² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl;
Y² is C₁-C₄haloalkoxy; C₁-C₄haloalkyl; C₁-C₄alkoxy; C₁-C₄alkyl; dimethylamino; methylamino; or C₁-C₄alkoxyC₁-C₄alkyl; and
E is CH; or N;
or an agrochemically acceptable salt thereof.

12. A composition according to claim 3, comprising a sulfonylurea of formula Ie 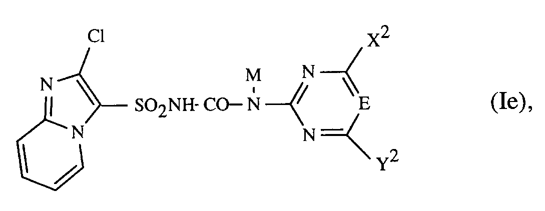 wherein
X² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl;
Y² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl; and
E is CH; or N;
or an agrochemically acceptable salt thereof.

13. A composition according to claim 3, comprising a sulfonylurea of formula If 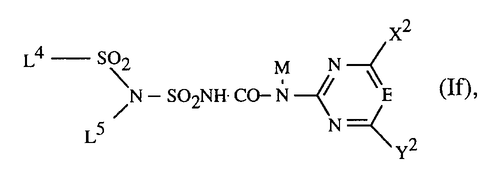 wherein
L⁴ is C₁-C₆alkyl;
L⁵ is C₁-C₆alkyl; or
L⁴ and L⁵ together are a C₂-C₆alkylene bridge;
X² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl;
Y² is C₁-C₄haloalkoxy; C₁-C₄haloalkyl; C₁-C₄alkoxy; C₁-C₄alkyl; dimethylamino; methylamino; or C₁-C₄alkoxy-C₁-C₄alkyl; and
E is CH; or N;
or an agrochemically acceptable salt thereof.

14. A composition according to claim 3, comprising a sulfonylurea of formula Ig 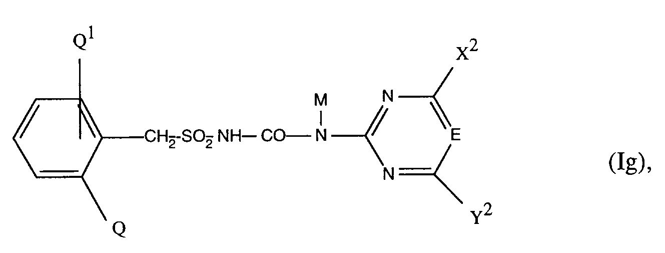 wherein Q¹, Q, M, E, X² and Y² are as defined in claim 3, especially wherein Q¹ is hydrogen, Q is COOCH₃, M is hydrogen, E is CH and each of X² and Y² is methoxy.

15. A composition according to one or more of claims 1 to 14, comprising a synergistically effective amount of a compound of formula II 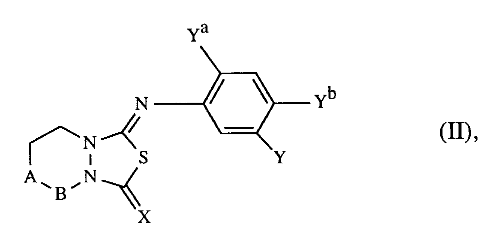 wherein
A-B is -CH₂-CH₂-; or -CH=CH-;
Y is hydroxy; C₁-C₆alkyl; C₁-C₆alkoxy; C₁-C₆haloalkoxy; C₃-C₆alkenyloxy; C₂-C₆haloalkenyloxy; C₃-C₆alkynyloxy; phenoxy; C₅-C₆cycloalkyloxy; C₁-C₆alkoxycarbonyl-C₁-C₄alkoxy; C₁-C₆alkoxycarbonyl-C₂-C₄alkenyloxy; C₁-C₆alkylthiocarbonyl-C₁-C₄alkoxy; C₃-C₆alkynyloxycarbonyl-C₁-C₄alkoxy; benzyloxycarbonyl-C₁-C₄alkoxy; trifluoromethyl; benzyloxy; chlorobenzyloxy; C₁-C₆alkylbenzyloxy; C₂-C₆alkenyl; cyano-C₁-C₆alkyl; C₁-C₆alkylcarbamoyloxy; C₁-C₄alkoxy-C₁-C₄alkyl; C₃-C₆alkynyloxy-C₁-C₄alkyl; C₃-C₆alkenyloxy-C₁-C₄alkyl; unsubstituted or halo-substituted C₅-C₆cycloalkylmethoxy; C₁-C₆alkoxy-C₁-C₄-alkoxy; phenethyloxy; C₅-C₆cycloalkoxycarbonyl-C₁-C₄alkoxy; pyrrolidinocarbonyl; unsubstituted or C₁-C₆alkyl-substituted phenylcarbonyl; -CO-X⁵-R³; 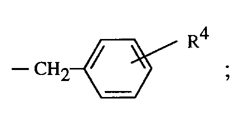 -S(O)ₚ-R⁵; -O-CH(R⁶)-CO-OR⁷; -N=C(CH₃)-R⁸; -NHR⁹; -S-CH(R¹⁰)-CO-R¹¹; or -O-P(X⁵)(OC₂H₅)₂;
Y^{a} and Y^{b}, each independently of the other, is hydrogen; fluorine; chlorine; or bromine; and
R³ to R¹¹, X, X⁵ and p are as defined above.

16. A composition according to claim 15, comprising a compound of formula II 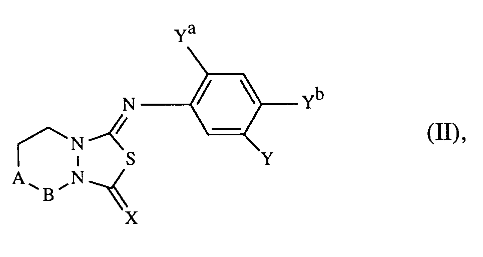 wherein
A-B is -CH₂-CH₂-; or -CH=CH-;
Y is C₁-C₆alkoxy; C₁-C₆haloalkoxy; C₃-C₆alkenyloxy; C₂-C₆haloalkenyloxy; C₃-C₆alkynyloxy; C₅-C₆cycloalkyloxy; C₁-C₆alkoxycarbonyl-C₁-C₄alkoxy; C₁-C₆alkoxycarbonyl-C₂-C₄alkenyloxy; C₁-C₆alkylthiocarbonyl-C₁-C₄alkoxy; C₃-C₆alkynyloxycarbonyl-C₁-C₄alkoxy; cyano-C₁-C₆alkyl; C₁-C₆alkylcarbamoyloxy; C₁-C₆alkoxy-C₁-C₄alkoxy; phenoxy; benzyloxy; -S(O)ₚ-R⁵; -O-CH(R⁶)-CO-OR⁷; -CO-X⁵-R³; or -S-CH(R¹⁰)-CO-R¹¹;
Y^{a} is hydrogen; fluorine; or chlorine;
Y^{b} is hydrogen; fluorine; chlorine; or bromine;
R³ is hydrogen; C₁-C₆alkyl; phenyl; C₅-C₆cycloalkyl; C₁-C₆alkoxy-C₁-C₄alkyl; C₁-C₆alkoxycarbonyl-C₁-C₄alkyl; or C₁-C₄alkoxy-C₁-C₄alkoxycarbonyl-C₁-C₄alkyl;
R⁵ is C₁-C₆alkyl; C₃-C₆alkenyl; or C₃-C₆alkynyl;
p is 0 or 2;
R⁶ is hydrogen; or C₁-C₆alkyl;
R⁷ is hydrogen; C₁-C₆alkyl; C₁-C₆alkoxy-C₁-C₄alkyl; tetrahydrofuryl; C₁-C₄alkoxy-C₁-C₄alkoxy-C₁-C₄alkyl; C₁-C₆alkoxycarbonyl-C₁-C₄alkyl; or C₅-C₆cycloalkyl;
R¹⁰ is hydrogen; or C₁-C₆alkyl;
R¹¹ is C₁-C₆alkoxy; C₅-C₆cycloalkyloxy; 1-pyrrolidinyl; C₃-C₆alkenyloxy; C₃-C₆alkynyloxy; C₁-C₆alkylthio; C₁-C₆haloalkoxy; C₁-C₄alkoxycarbonyl-C₁-C₄alkoxy; α,α-dimethylbenzylamino; -OC₂H₄S(O)₂-(C₁-C₆alkyl); -OC₂H₄S-(C₁-C₆alkyl); -OC₂H₄S(O)₂-(phenyl); -OC₂H₄S-(phenyl); 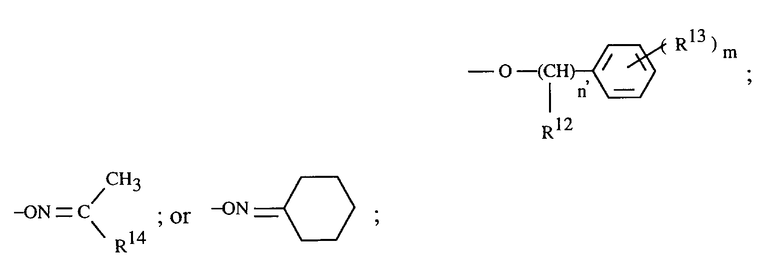
m is 0; 1; 2; or 3;
n' is 0; or 1;
R¹² is halogen; or C₁-C₄alkyl;
R¹³ is phenyl; benzyl; or methoxy-C₁-C₄alkyl;
R¹⁴ is styryl; cyano-C₁-C₄alkyl; tetrahydrofuran-2-yl, thienyl or pyridin-2-yl;
X is oxygen; or sulfur; and
X⁵ is oxygen; or sulfur.

17. A composition according to claim 15, comprising a compound of formula IIa 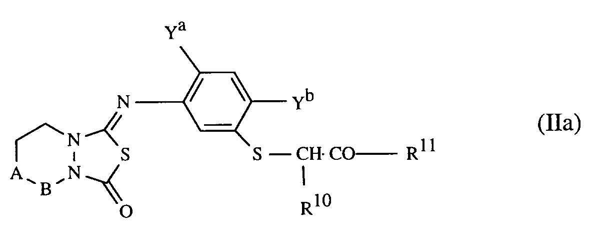 wherein
A-B, Y^{a}, Y^{b}, R¹⁰ and R¹¹ are as defined above.

18. A composition according to claim 15, comprising a compound of formula IIb 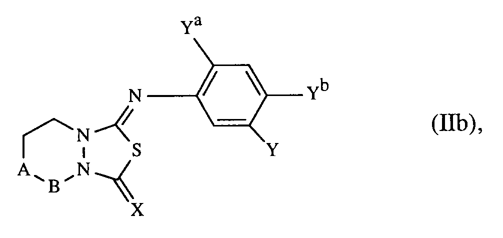 wherein
Y is C₁-C₆alkoxy; C₃-C₆alkenyloxy; C₃-C₆alkynyloxy; C₁-C₆alkoxycarbonyl-C₁-C₄alkoxy; C₁-C₆alkylthiocarbonyl-C₁-C₄alkoxy; C₃-C₆alkynyloxycarbonyl-C₁-C₄alkoxy; C₁-C₆alkylthio; C₁-C₆alkylsulfonyl; C₃-C₆alkynylthio; C₃-C₆alkenylthio; C₅-C₆cycloalkoxy; phenoxy; benzyloxy; cyano-C₁-C₆alkyl; C₁-C₆alkoxy-C₁-C₄alkoxy; and
A-B, Y^{a} and Y^{b} are as defined above.

19. A composition according to claim 15, comprising a compound of formula IIc 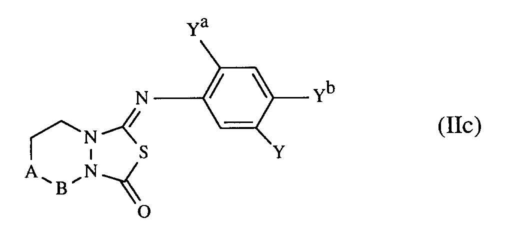 wherein
Y is -CO-X⁵-R³;
R³ is hydrogen; C₁-C₆alkyl; phenyl; C₅-C₆cycloalkyl; C₁-C₆alkoxy-C₁-C₄alkyl; C₃-C₆-alkynyl; C₃-C₆alkenyl; benzyl; C₁-C₆alkoxycarbonyl-C₁-C₄alkyl; or C₁-C₄alkoxy-C₁-C₄alkoxycarbonyl-C₁-C₄alkyl; and
X⁵ is oxygen; or sulfur; and
A-B, Y^{a} and Y^{b} are as defined above.

20. A composition according to claim 15, comprising a compound of formula IId 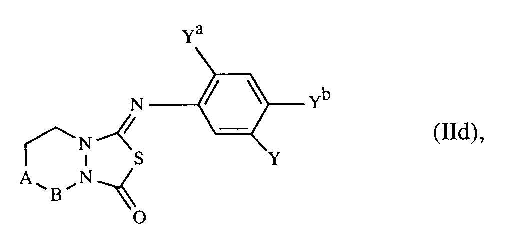 wherein
Y is -O-CH(R⁶)-CO-OR⁷;
R⁶ is hydrogen; or C₁-C₆alkyl;
R⁷ is hydrogen; C₁-C₆alkyl; C₃-C₆alkynyl; C₃-C₆alkenyl; C₁-C₆alkoxy-C₁-C₄alkyl; tetrahydrofuryl; C₁-C₄alkoxy-C₁-C₄alkoxy-C₁-C₄alkyl; C₁-C₆alkoxycarbonyl-C₁-C₄alkyl; or C₅-C₆cycloalkyl; and
A-B, Y^{a} and Y^{b} are as defined above.

21. A composition according to any one of claims 15 to 20, comprising a compound of formula II or of formulae IIa to IId, wherein
A-B is -CH₂-CH₂-.

22. A composition according to claim 2, comprising a sulfonylurea of formula Ia 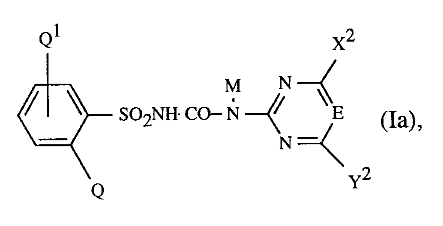 wherein
M is hydrogen;
Q is C₁-C₆haloalkyl; C₂-C₆haloalkenyl; or -(A)-R²;
A is oxygen; or sulfur;
R² is C₁-C₆haloalkyl;
E is N;
Q¹ is hydrogen; and
X² and Y², each independently of the other, is C₁-C₄alkyl; C₁-C₄alkoxy; or C₁-C₄haloalkoxy;
and a compound of formula IIa 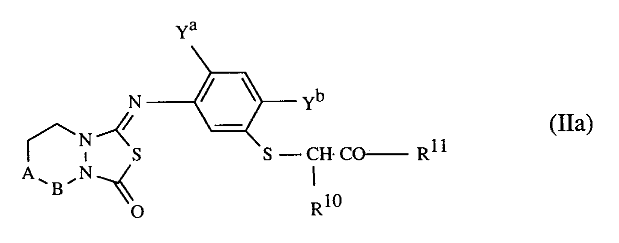 wherein
A-B is -CH₂-CH₂-;
Y^{a} is hydrogen; or fluorine;
Y^{b} is chlorine; or bromine;
R¹⁰ is hydrogen; or C₁-C₄alkyl; and
R¹¹ is C₁-C₄alkoxy; C₅-C₆cycloalkyloxy; C₃-C₆alkenyloxy; C₃-C₆alkynyloxy; C₁-C₄-alkylthio; or C₁-C₄alkoxycarbonyl-C₁-C₄alkoxy.

23. A composition according to claim 2, comprising a sulfonylurea of formula Ia 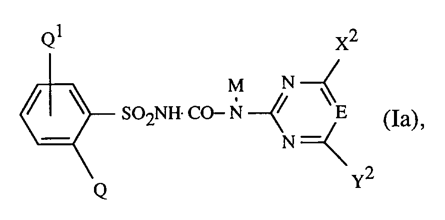 wherein
M is hydrogen;
Q is C₁-C₆haloalkyl; C₂-C₆haloalkenyl; or -(A)-R²;
A is oxygen; or sulfur;
R² is C₁-C₆haloalkyl;
E is N;
Q¹ is hydrogen; and
X² and Y², each independently of the other, is C₁-C₄alkyl; C₁-C₄alkoxy; or C₁-C₄haloalkoxy;
and a compound of formula IIc 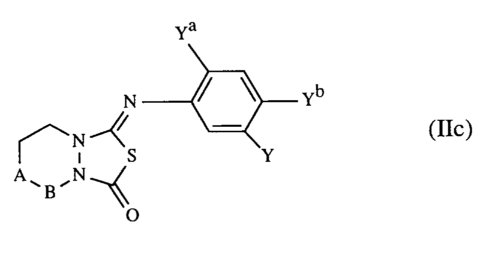 wherein
Y is -CO-X⁵-R³;
R³ is hydrogen; C₁-C₆alkyl; phenyl; C₅-C₆cycloalkyl; C₁-C₆alkoxy-C₁-C₄alkyl; C₃-C₆alkynyl; C₃-C₆alkenyl; benzyl; C₁-C₆alkoxycarbonyl-C₁-C₄alkyl; or C₁-C₄alkoxy-C₁-C₄alkoxycarbonyl-C₁-C₄alkyl; and
X⁵ is oxygen; or sulfur; and
A-B, Y^{a} and Y^{b} are as defined above.

24. A composition according to any one of claims 15 to 20, comprising a compound of formula II or of formulae IIa to IId, wherein A-B is -CH₂=CH₂-.

25. A composition according to any one of claims 1 to 21, comprising N-[2-(2-chloroethoxy)phenylsulfonyl]-N'-(4-methoxy-6-methyl-1,3,5-triazin-2-yl)-urea as compound of formula Ia together with a synergistically effective amount of 3-[(4-chloro-2-fluoro-5-methoxycarbonylmethylthio)phenyl-imino]-5,6,7,8-tetrahydro-1H,3H-(1,3,4)-thiadiazolo[3,4-a]pyridazine as compound of formula IIa.

26. A composition according to any one of claims 1 to 21, comprising N-[2-(2-chloroethoxy)phenylsulfonyl]-N'-(4-methoxy-6-methyl-1,3,5-triazin-2-yl)-urea as compound of formula Ia together with a synergistically effective amount of 9-[4-chloro-2-fluoro-5-(2-ethoxyethoxycarbonyl-1-ethylthiocarbonyl)phenylimino]-8-diazabicyclo[4.3.0]nonan-7-one as compound of formula IIa.

27. A composition according to any one of claims 1 to 21, comprising N-[2-(2-fluoroethylthio)phenylsulfonyl]-N'-(4-methoxy-6-methyl-1,3,5-triazin-2-yl)-urea, N-[2-(3,3,3-trifluoropropyl)phenylsulfonyl]-N'-(4-methoxy-6-methyl-1,3,5-triazin-2-yl)-urea, N-]2-(3,3-difluorobut-1-enyl)phenylsulfonyl]-N'-(4-methoxy-6-methyl-1,3,5-triazin-2-yl)-urea, N-[2-(3,3-difluorobutyl)phenylsulfonyl]-N'-(4-methoxy-6-methyl-1,3,5-triazin-2-yl)-urea, N-[2-(2,2-difluoroethylthio)phenylsulfonyl]-N'-(4-methoxy-6-methyl-1,3,5-triazin-2-yl)-urea, N-[2-(2-methoxyethoxy)phenylsulfonyl]-N'-(4,6-dimethoxy-1,3,5-triazin-2-yl)-urea, N-[3-dimethylaminocarbonylpyridine-2-sulfonyl]-N'-(4,6-dimethoxypyrimidin-2-yl)-urea, N-[3-ethylsulfonylpyridine-2-sulfonyl]-N'-(4,6-dimethoxypyrimidin-2-yl)-urea, N-[2-methoxycarbonylphenylsulfonyl]-N'-(4,6-bis-difluoromethoxypyrimidin-2-yl)-urea, N-[2-methoxycarbonylphenylsulfonyl]-N'-(4,6-dimethoxypyrimidin-2-yl)-urea, N-[2-methoxycarbonylbenzylsulfonyl]-N'-(4,6-dimethoxypyrimidin-2-yl)-urea, N-[2-methoxycarbonylphenylsulfonyl]-N'-methyl-N'-(4-methoxy-6-methyl-1,3,5-triazin-2-yl)-urea, N-[1-methyl-4-ethoxycarbonylpyrazole-5-sulfonyl]-N'-(4,6-dimethoxypyrimidin-2-yl)-urea or N-[2-(2-chloroethoxy)phenylsulfonyl]-N'-(4-methoxy-6-methyl-1,3,5-triazin-2-yl)-urea as compound of formula Ia together with a synergistically effective amount of 3-[(4-chloro-2-fluoro-5-methoxycarbonylmethylthio)phenylimino]-5,6,7,8-tetrahydro-1H,3H-(1,3,4)-thiadiazolo[3,4-a]pyridazine as compound of formula IIa.

28. A composition according to any one of claims 1 to 21, comprising N-[2-(2-fluoroethylthio)phenylsulfonyl]-N'-(4-methoxy-6-methyl-1,3,5-triazin-2-yl)-urea, N-[2-(3,3,3-trifluoropropyl)phenylsulfonyl]-N'-(4-methoxy-6-methyl-1,3,5-triazin-2-yl)-urea, N-[2-(3,3-difluorobut-1-enyl)phenylsulfonyl]-N'-(4-methoxy-6-methyl-1,3,5-triazin-2-yl)-urea, N-[2-(3,3-difluorobutyl)phenylsulfonyl]-N'-(4-methoxy-6-methyl-1,3,5-triazin-2-yl)-urea, N-[2-(2,2-difluoroethylthio)phenylsulfonyl]-N'-(4-methoxy-6-methyl-1,3,5-triazin-2-yl)-urea, N-[2-(2-methoxyethoxy)phenylsulfonyl]-N'-(4,6-dimethoxy-1,3,5-triazin-2-yl)-urea, N-[3-dimethylaminocarbonylpyridine-2-sulfonyl]-N'-(4,6-dimethoxypyrimidin-2-yl)-urea, N-[3-ethylsulfonylpyridine-2-sulfonyl]-N'-(4,6-dimethoxypyrimidin-2-yl)-urea, N-[2-methoxycarbonylphenylsulfonyl]-N'-(4,6-bis-difluoromethoxypyrimidin-2-yl)-urea, N-[2-methoxycarbonylphenylsulfonyl]-N'-(4,6-dimethoxypyrimidin-2-yl)-urea, N-[2-methoxycarbonylbenzylsulfonyl]-N'-(4,6-dimethoxypyrimidin-2-yl)-urea, N-[2-methoxycarbonylphenylsulfonyl]-N'-methyl-N'-(4-methoxy-6-methyl-1,3,5-triazin-2-yl)-urea, N-[1-methyl-4-ethoxycarbonylpyrazole-5-sulfonyl]-N'-(4,6-dimethoxypyrimidin-2-yl)-urea or N-[2-(2-chloroethoxy)phenylsulfonyl]-N'-(4-methoxy-6-methyl-1,3,5-triazin-2-yl)-urea as compound of formula Ia together with a synergistically effective amount of 9-[4-chloro-2-fluoro-5-(2-ethoxyethoxycarbonyl-1-ethylthiocarbonyl)phenylimino]-8-diazabicyclo[4.3.0]nonan-7-one as compound of formula IIa.

29. A composition according to any one of claims 1 to 21, comprising N-[2-(oxetan-3-yloxycarbonyl)phenylsulfonyl]-N'(4-methoxy-6-methyl-1,3,5-triazin-2-yl)-urea as compound of formula Ia together with a synergistically effective amount of 3-[(4-chloro-2-fluoro-5-methoxycarbonylmethylthio)phenylimino]-5,6,7,8-tetrahydro-1H,3H-(1,3,4)-thiadiazolo[3,4-a]pyridazine (compound 7.012) as compound of formula IIa.

30. A method of controlling undesired plant growth in crops of useful plants, which comprises causing a herbicidally effective amount of a composition according to any one of claims 1 to 29 to act on the cultivated plant or the locus thereof.

31. A method according to claim 30 of controlling weeds in cereals.

32. A method according to claim 30 of controlling weeds in maize.

33. A method according to claim 30 of controlling weeds in soybeans.

34. A method according to claim 30 of controlling weeds in rice.

## Revendications

1. Agent herbicide, comportant une sulfonylurée, de formule I 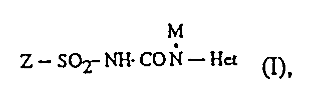 où
Z représente un radical substitué phényle-, thiophényle-, benzyle-, pyridinyle-, pyrazinyle-, phényle sur hétérocycle, ou alkylsulfonylamino;
M représente l'hydrogène; ou un alkyle en C₁-C₄; et
Het représente un hétérocycle substitué à 5 ou 6 chaînons avec 2 ou 3 atomes d'azote, ainsi que leurs sels compatibles avec l'agrochimie et une quantité à effet synergique d'une 5,6,7,8-tétrahydro-1H,3H-(1,3,4)-thiadiazolo-[3,4-a]-pyridazine ou d'une 7,8-dihydro-1H,3H(1,3,4)-thiadiazolo-[3,4,a]-pyridazine de formule générale II 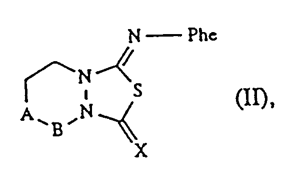 où
X représente l'oxygène; ou le soufre ;
A-B-représente -CH₂-CH₂-; ou -CH=CH-; et
Phe représente un radical phényle substitué.

2. Agent herbicide selon la revendication 1, comportant une sulfonylurée à activité herbicide de formule I 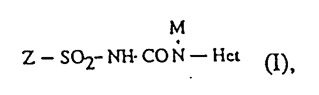 où
Z représente un radical 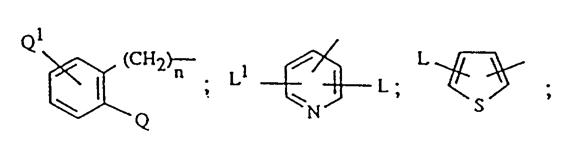 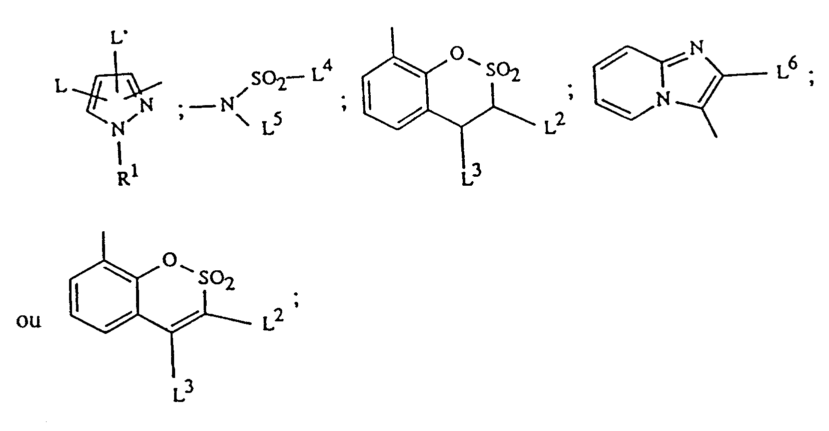 Het représente un radical 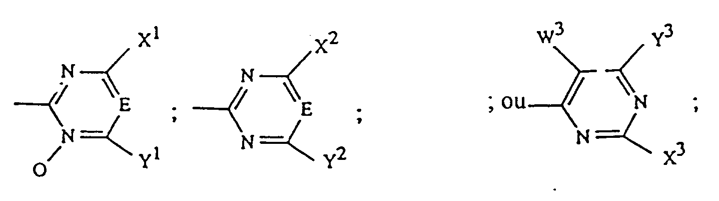 M représente l'hydrogène ou un alkyle en C₁-C₄ ;
Q représente un halogène; un nitro; un alkyle en C₁-C₆ ; un halogénoalkyle en C₁-C₆ ; un alcényle en C₂-C₆ ; un halogénoalcényle en C₂-C₆ ; un alcynyle en C₂-C₆ ; un halogénoalcynyle en C₃-C₆ ; -NH₂ ; -NH-(alkyle en C₁-C₄) ; -N(alkyle en C₁-C₄)₂ ; -SO₂N(alkyle en C₁-C₄)₂ -SO₂NH(alkyle en C₁-C₄) ; -COOR² ; -COOR'; - (A)-R' ; -(A)-R² ; un phényle ; un phénoxy ; un alkyle en C₁ -C₅₋phényle ; un halogénophényle ou un halogénophénoxy ;
Q¹ représente l'hydrogène ; un nitro; un alkyle en C₁-C₄ ; un halogène ; un alcoxy en C₁-C₄ ; un halogénoalkyle en C₁-C₄ ; N(alkyle en C₁-C₄)₂ ; un alkylamino en C₁-C₄ ; un halogénoalkylthio en C₁-C₄ ; un halogénoalcoxy en C₁-C₄ ; un alcoxy en C₁-C₄-alcoxy en C₁-C₄ ; un alcényle en C₂-C₄ ; un alcynyle en C₂-C₄;CN ; un halogénoalcényle en C₂-C₄ ;
n est 0 ; ou 1 ;
R¹ représente l'hydrogène ; un alkyle en C₁-C₄ ; ou un pyridyle ;
A représente l'oxygène ; le soufre ; -SO- ; -SO₂- ; ou -O-SO₂ ;
R² représente un alkyle en C₁-C₅ ; un alcényle en C₂-C₆ ; un alcynyle en C₃-C₆ ; un halogénoalkyle en C₁-C₅ ; un alcoxy en C₁-C₄-alkyle en C₁-C₄ ; un halogénoalcényle en C₂-C₅ ; un halogénoalcynyle en C₂-C₅ ;
R' représente un oxétanne-3-yle ; un thiétanne-3-yle ;
L représente un halogène ; un nitro ; un alkyle en C₁-C₅ ; -A-R² ; COOR² ; -CO-NH₂ ; -CO-NH-alkyle en C₁-C₄ ; ou -CO-N(alkyle en C₁-C₄)₂ ;
L' représente l'hydrogène ; ou le chlore ;
L¹ représente l'hydrogène ; un nitro ; un alkyle en C₁-C₄ ; un halogène ; un alcoxy en C₁-C₄ ; un halogénoalkyle en C₁-C₄ ; ou un halogénoalcoxy en C₁-C₆ ;
L² représente l'hydrogène ; ou un alkyle en C₁-C₄ ;
L³ représente l'hydrogène ; ou un alkyle en C₁-C₄ ;
L⁴ représente un alkyle en C₁-C₆ ; un alcényle en C₂-C₆ ; ou un alcynyle en C₂-C₆ ;
L⁵ représente un alkyle en C₁-C₆ ; un alcényle en C₂-C₆ ; ou un alcynyle en C₂-C₆ ;
ou
L⁴ et L⁵ forment ensemble un pont alkylène en C₂-C₆ ;
E représente N ; ou CH ;
X¹, X², X³, et Y¹ indépendamment les uns des autres, représentent l'hydrogène ; un halogène ; un halogénoalcoxy en C₁-C₄ ; un halogénoalkyle en C₁-C₄ ; un alcoxy en C₁-C₄ ; un alkyle en C₁-C₄ ; le cyclopropyle ; un diméthylamino ; un méthylamino ; un éthylamino ; un amino ; un alcoxy en C₁-C₄-alkyle en C₁-C₄ ; un alcoxy en C₁-C₄-alcoxy en C₁-C₄ ; un halogénoalkylthio en C₁-C₄ ; un alkylthio en C₁-C₄ ; un alkylthio en C₁-C₄-alkyle en C₁-C₄ ;
Y² représente l'hydrogène ; un halogène ; un halogénoalcoxy en C₁-C₄ ; un halogénoalkyle en C₁-C₄ ; un alcoxy en C₁-C₄ ; un alkyle en C₁-C₄ ; un diméthylainino ; un méthylamino ; un éthylamino ; un amino ; un alcoxy en C₁-C₄-alkyle en C₁-C₄ ; un cyclopropyle ; un diméthoxyméthyle ; un diéthoxyéthyle ; 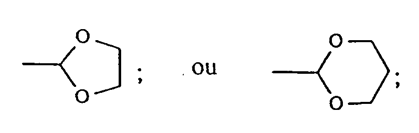 Y³ représente un alkyle en C₁-C₄ ; un alcoxy en C₁-C₄ ; un halogénoalkyle en C₁-C₂ ; ou un halogénoalcoxy en C₁-C₂ ;
W³ représente l'hydrogène ; un alkyle en C₁-C₄ ; un alcoxy en C₁-C₄ ; un halogénoalkyle en C₁-C₂ ; un halogénoalcoxy en C₁-C₂ ; un alcoxy en C₁-C₄-carbonyle ; un halogène ; un cyan ; un nitro ; un alkylthio en C₁-C₄ ; un alkylsulfinyle en C₁-C₄ ; ou un alkylsulfonyle en C₁-C₄ ; ou
W³ et Y³ forment ensemble un pont alkylène en C₂-C₄ ; ou un pont alkylène en C₁-C₃ interrompu une fois par l'oxygène ;
avec une quantité à activité synergique d'une 5,6,7,8-tétrahydro-1H,3H-(1,3,4)-thiadiazolo-[3,4-a]-pyridazine ou d'une 7,8-dihydro1H,3H-(1,3,4)-thiadiazolo-[3,4-a]-pyridazine de formule II 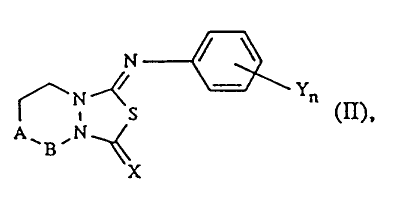 où
A-B représente -CH₂-CH₂- ;ou -CH=CH- ;
les Y, indépendamment les uns des autres, représentent un halogène ; un hydroxy ; un alkyle en C₁-C₆ ; un alcoxy en C₁-C₆ ; un halogénoalcoxy en C₁-C₆ ; un alcényloxy en C₃-C₆ ; un halogenoalcényloxy en C₂-C₆ ; un alcynyloxy en C₃-C₆ ; un phénoxy ; un cycloalkyloxy en C₅-C₆ ; un alcoxy en C₁-C₆-carbonyl-alcoxy en C₁-C₄ ; un alcoxy en C₁-C₆-carbonyl-alcényloxy en C₂-C₄ ; un alkyl en C₁-C₆-thiocarbonyl-alcoxy en C₁-C₄ ; un alcynyl en C₃-C₆-oxycarbonyl-alcoxy en C₁-C₄ ; un benzyloxycarbonyl-alcoxy en C₁-C₄ ; un trifluorométhyle ; un benzyloxy ; un chlorobenzyloxy ; un alkyl en C₁-C₆-benzyloxy ; un alcényle en C₂-C₆ ; un cyanoalkyle en C₁-C₆ ; un alkyl en C₁-C₆-carbamoyloxy ; un alcoxy en C₁-C₄-alkyle en C₁-C₄ ; un alcynyloxy en C₃-C₆-alkyle en C₁-C₄ ; un alcényloxy en C₃-C₆-alkyle en C₁-C₃ ; un C₅-C₆-cycloalkylméthoxy non substitué ou substitué par un halogène ; un alcoxy en C₁-C₆-alcoxy en C₁-C₄ ; un phénéthyloxy ; un cycloalcoxycarbonyl en C₅-C₆-alcoxy en C₁-C₄ ; un pyrrolidinocarbonyle ; un phénylcarbonyle non substitué ou substitué par un alkyle en C₁-C₆ ; -CO-X⁵-R³; 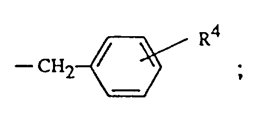 -S(O)ₚ-R⁵; -O-CH(R⁶)-CO-OR⁷; -N=C(CH₃)-R⁸; -NHR⁹; -S-CH(R¹⁰)-CO-R¹¹; ou -O-P(X⁵)(OC₂H₅)₂;
R³ représente un hydrogène; un alkyle en C₁-C₆ ; un phényle ; un cycloalkyle en C₅-C₆ ; un alcoxy en C₁-C₆-alkyle en C₁-C₄ ; un alcoxy en C₁-C₆-carbonyl-alkyle en C₁-C₄ ; ou
un alcoxy en C₁-C₄-alcoxy en C₁-C₄-carbonyl-alkyle en C₁-C₄ ;
R⁴ représente l'hydrogène ; un alcoxy en C₁-C₆ ; un alkyle en C₁-C₄ ; ou un halogène ;
R⁵ représente un alkyle en C₁-C₆ ; un alcényle en C₂-C₆ ; ou un alcynyle en C₂-C₆ ;
p représente 0 ou 2 ;
R⁶ représente l'hydrogène ; ou un alkyle en C₁-C₆ ;
R⁷ représente l'hydrogène ; un alkyle en C₁-C₆ ; un alcoxy en C₁-C₆-alkyle en C₁-C₄ ; un tétrahydrofuryle ; un alcoxy en C₁-C₄-alcoxy en C₁-C₄-alkyle en C₁-C₄ ; un alcoxy en C₁-C₆-carbonyl-alkyle en C₁-C₄; ou un cycloalkyle en C₅-C₆ ;
R⁸ représente un alkyle en C₁-C₆ ; ou un phényle ;
R⁹ représente un alkyl en C₁-C₆-carbonyle ; ou un alcoxy en C₁-C₆-carbonyl-alkyle en C₁-C₄ ;
R¹⁰ représente l'hydrogène; ou un alkyle en C₁-C₆ ;
R¹¹ représente un alcoxy en C₁-C₆ ; un cycloalkyloxy en C₅-C₆ ; un 1-pyrrolidinyle ; un alcényloxy en C₃-C₆ ; un alcynyloxy en C₃-C₆ ; un alkylthio en C₁-C₆ ; un halogénoalcoxy en C₁-C₆ ; un alcoxy en C₁-C₄-carbonyl-alcoxy en C₁-C₄ ; un α,α-diméthylbenzylamino ; -OC₂H₄S(O)₂-(Alkyle en C₁-C₆) ; -OC₂H₄S-(alkyle en C₁-C₆) ; -OC₂H₄S(O)₂-(phényle) ; -OC₂H₄S-(phényle) ; 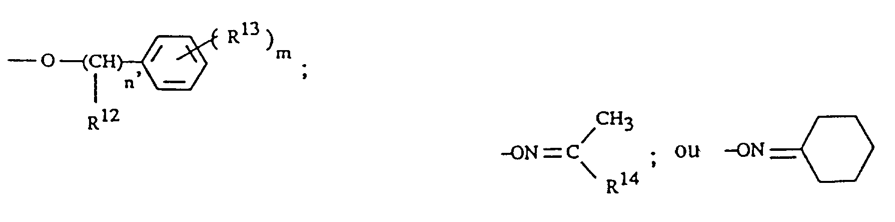 n' représente 0 ; ou 1 ;
R¹² représente un halogène ; ou un alkyle en C₁-C₄ ;
R¹³ représente le phényle ; le benzyle ; ou un méthoxy-alkyle en C₁-C₄ ;
R¹⁴ représente le styryle ; un cyan-alkyle en C₁-C₄ ; un tétrahydrofuranne-2-yle, un thiényle ou un pyridine-2-yle ;
X représente l'oxygène; ou le soufre ;
X⁵ représente l'oxygène; ou le soufre ;
m représente 0 ; 1 ; 2 ; ou 3 ;
et
n représente 0 ; 1 ; 2 ; ou 3.

3. Agent selon la revendication 1 ou 2, comportant une sulfonylurée de formule I, où Z représente un radical 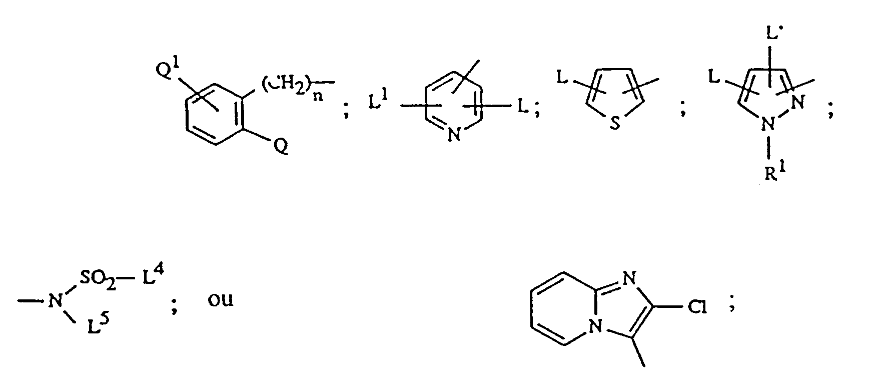 et
Het représente le radical 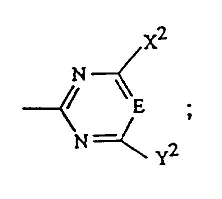 et
M représente l'hydrogène ; ou un alkyle en C₁-C₄ ;
Q représente un halogène ; un nitro ; un alkyle en C₁-C₆ ; un halogénoalkyle en C₁-C₆ ; un alcényle en C₂-C₆ ; un halogénoalcényle en C₂-C₆ ; un alcynyle en C₂-C₆ ; un halogénoalcynyle en C₃-C₆ ;-SO₂N(CH₃)₂ ; -COOR² ; -COOR' ; ou -(A)-R²
R¹ représente l'hydrogène ; ou un alkyle en C₁-C₄ ;
R² représente un alkyle en C₁-C₅ ; un alcényle en C₂-C₅ ; un alcynyle en C₂-C₅ ; un halogénoalkyle en C₁-C₅ ; un alcoxy en C₁-C₄-alkyle en C₁-C₄ ; un halogénoalcényle en C₂-C₅ ; un halogénoalcynyle en C₂-C₅ ;
R' représente l'oxétanne-3-yle ; ou le thiétanne-3-yle ;
n est 0 ; ou 1 ;
A représente l'oxygène ; le soufre ; -SO₂- ; ou -O-SO₂₋ ;
Q¹ représente un hydrogène ; un nitro ; un halogène ; OCH₃ ;OCHF₂ ;CH₃ ; ou SCH₃ ;
L représente un halogène ; un nitro ; un alkyle en C₁-C₅ ; -A-R² ; -COOR² ; -CO-NH₂ ; -CO-NH-alkyle en C₁-C₄ ; ou -CO-N(alkyle en C₁-C₄)₂ ;
L' représente l'hydrogène ; ou le chlore ;
L¹ représente l'hydrogène ; un nitro ; un alkyle en C₁-C₄ ; un halogène ; un alcoxy en C₁-C₄ ; un halogénoalkyle en C₁-C₄ ; ou un halogénoalcoxy en C₁-C₄ ;
L⁴ représente un alkyle en C₁-C₆ ;
L⁵ représente un alkyle en C₁-C₆ ; ou
L⁴ et L⁵ représentent ensemble un pont alkylène en C₃-C₄ ;
X² représente un halogénoalcoxy en C₁-C₄ ; un halogénoalkyle en C₁-C₄ ; un alcoxy en C₁-C₄ ; un alkyle en C₁-C₄ ; un halogène ; SCH₃ ; un cyclopropyle ; un diméthylamino ; un méthylamino ; ou un alcoxy en C₁-C₄-alkyle en C₁-C₄ ;
Y² représente un halogénoalcoxy en C₁-C₄ ; un halogénoalkyle en C₁-C₄ ; un alcoxy en C₁-C₄ ; un alkyle en C₁-C₄ ; un cyclopropyle ; un diméthylamino ; un méthylamino ; ou un alcoxy en C₁-C₄-alkyle en C₁-C₄ ; et
E représente CH ; ou N ; ainsi que leurs sels compatibles avec l'agrochimie.

4. Agent selon la revendication 3, comportant une sulfonylurée de formule Ia, 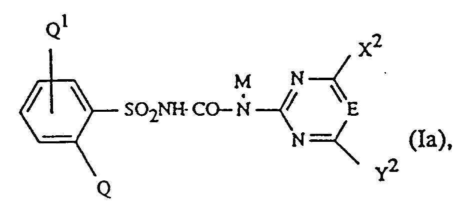 où
M représente l'hydrogène ; ou un alkyle en C₁-C₄ ;
Q représente un halogène ; un nitro ; un halogénoalkyle en C₁-C₆ ; un alcényle en C₂-C₆ ; un halogénoalcényle en C₂-C₆ ; un alcynyle en C₂-C₆ ; -SO₂N(CH₃)₂ ; -COOR² ; -COOR' ; ou -(A)-R² ;
A représente l'oxygène ; le soufre ; ou -SO₂- ;
R² représente un alkyle en C₁-C₅ ; un alcényle en C₃-C₆ ; un alcynyle en C₃-C₆ ; un halogénoalkyle en C₁-C₅ ; un alcoxy en C₁-C₄-alkyle en C₁-C₄ ; un halogénoalcényle en C₂-C₅ ; ou un halogénoalcynyle en C₂-C₅ ;
R' représente l'oxétanne-3-yle ; ou le thiétanne-3-yle ;
Q¹ représente l'hydrogène ; un nitro ; un halogène ; OCH₃ ; OCHF₂ ; CH₃ ; ou SCH₃ ;
X² représente un halogénoalcoxy en C₁-C₄ ; un halogénoalkyle en C₁-C₄ ; un alcoxy en C₁-C₄ ; un alkyle en C₁-C₄ ; un halogène : SCH₃ ; un cyclopropyle ; un diméthylamino ; un méthylamino ; ou un alcoxy en C₁-C₄-alkyle en C₁-C₄ ;
Y² représente un halogénoalcoxy en C₁-C₄ ; un halogénoalkyle en C₁-C₄ ; un alcoxy en C₁-C₄ ; un alkyle en C₁-C₄ ; un cyclopropyle ; un diméthylainino ; un méthylamino ; ou un alcoxy en C₁-C₄-alkyle en C₁-C₄ ; et
E représente CH ; ou N ;
ainsi que leurs sels compatibles avec l'agrochimie.

5. Agent selon la revendication 4 comportant une sulfonylurée de formule Ia, où
M représente l'hydrogène ; ou le méthyle ;
Q représente un halogènoalkyle en C₁-C₆ ; un halogénoalcényle en C₂-C₆ ; -(A)-R² ; -COOR'-; ou -COOR² ;
A représente l'oxygène ; ou le soufre ;
R² représente un halogénoalkyle en C₁-C₆ ; un alcoxy en C₁-C₂-alkyle en C₁-C₃ ; un alkyle en C₁-C₂ ;
R' représente un oxétanne-3-yle ; ou un thiétanne-3-yle ;
E représente N ; ou CH ;
Q¹ représente l'hydrogène ; et
X² et Y^{2,} indépendamment l'un de l'autre, représentent un alkyle en C₁-C₄ ; un halogénoalcoxy en C₁-C₄ ; un halogène ; ou un alcoxy en C₁-C₄.

6. Agent selon la revendication 5, comportant une sulfonylurée de formule Ia; où
Q représente un fluoroalkyle en C₁-C₆ ; un fluoroalcényle en C₂-C₆ ; ou -(A)-R² ;
R² représente un fluoroalkyle en C₁-C₆ ou un chloroalkyle en C₁-C₆ ;
E représente N ;
Q¹ représente l'hydrogène ; et
X² et Y^{2,} indépendamment l'un de l'autre, représentent un méthyle ; ou un méthoxy.

7. Agent selon la revendication 3, comportant une sulfonylurée de formule Ib, 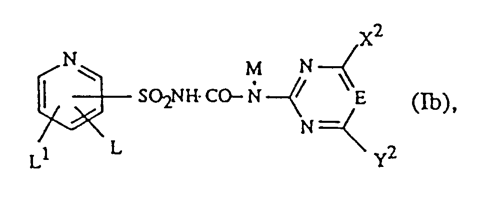 où
M représente l'hydrogène ; ou un alkyle en C₁-C₄ ;
L représente un halogène ; un nitro ; un alkyle en C₁-C₅ ; -A-R² ; -COOR² ; -NH(alkyle en C₁-C₄) ; ou -N(alkyle en C₁-C₄)₂ ; -CO-NH₂ ; -CO-NH-alkyle en C₁-C₄ ; ou -CO-N(alkyle en C₁-C₄)₂ ;
L¹ représente l'hydrogène ; un nitro ; un alkyle en C₁-C₄ ; un halogène ; un alcoxy en C₁-C₄ ; un halogénoalkyle en C₁-C₄ ; ou un halogénoalcoxy en C₁-C₄ ;
X² représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ;
Y² représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ;
A représente l'oxygène ; le soufre ; ou -SO₂- ;
R² représente un alkyle en C₁-C₅ ; un alcényle en C₃-C₆ ; un alcynyle en C₃-C₆ ; un halogénoalkyle en C₁-C₅ ; un alcoxy en C₁-C₄-alkyle en C₁-C₄ ; un halogénoalcényle en C₂-C₅ ; ou un halogénoalcynyle en C₂-C₅ ;
E représente CH ; ou N ;
ainsi que leurs sels compatibles avec l'agrochimie.

8. Agent selon la revendication 7, comportant une sulfonylurée de formule Ib' 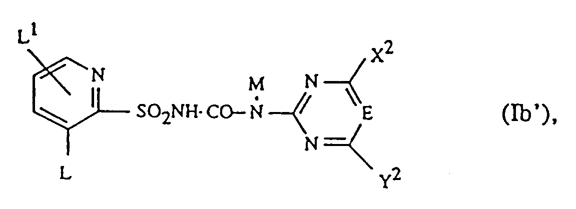 où les substituants L, L¹, M, X², Y² et E sont comme définis précédemment.

9. Agent selon la revendication 7, comportant une sulfonylurée de formule Ib'' 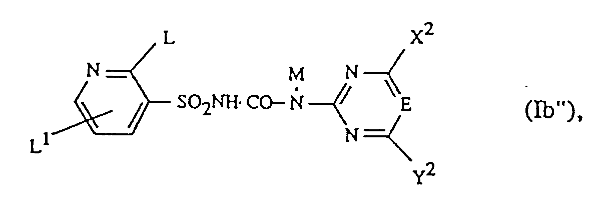 où les substituants L, L¹, M, X², Y² et E sont comme définis précédemment.

10. Agent selon la revendication 3, comportant une sulonylurée de formule Ic, 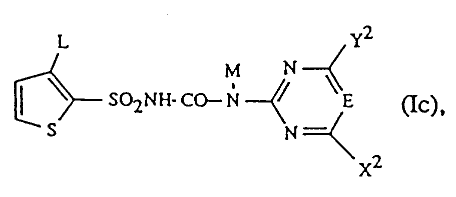 où
L représente un halogène ; un nitro ; un alkyle en C₁-C₅ ; un alkylsulfonyle en C₁-C₅ ; -COOR² ; -CO-NH₂ ; -CO-NH-alkyle en C₁-C₄ ; ou -CO-N(alkyle en C₁-C₄)₂ ;
R² représente un alkyle en C₁-C₅ ; un halogénoalkyle en C₁-C₅ ; un alcényle en C₂-C₆ ; un halogénoalcényle en C₂-C₆ ; un alcynyle en C₂-C₆ ; un halogénoalcynyle en C₃-C₆ ; ou un alcoxy en C₁-C₄-alkyle en C₁-C₄ ;
X2 représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ;
Y² représente un halogénoalcoxy en C₁-C₄ ; un halogénoalkyle en C₁-C₄ ; un alcoxy en C₁-C₄ ; un alkyle en C₁-C₄ ; un cyclopropyle ; un diméthylamino ; un méthylamino ; ou un alcoxy en C₁-C₄-alkyle en C₁-C₄ ; et
E représente CH ; ou N ;
ainsi que leurs sels compatibles avec l'agroçhimie.

11. Agent selon la revendication 3, comportant une sulfonylurée de formule Id 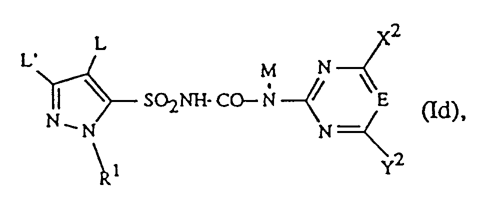 où
M représente l'hydrogène ; ou un alkyle en C₁-C₄ ;
L représente un alkyle en C₁-C₅ ; un alkylsulfonyle en C₁-C₅ ; -COOR² ; - CO-NH₂ ; -CO-NH-alkyle en C₁-C₄ ; ou -CO-N(alkyle en C₁-C₄)₂ ;
L' représente l'hydrogène ; ou le chlore ;
R¹ représente l'hydrogène ; un alkyle en C₁-C₄ ; ou un pyridyle ;
R² représente un alkyle en C₁-C₅ ; un halogénoalkyle en C₁-C₅ ; un alcoxy en C₁-C₄-alkyle en C₁-C₄ ; un halogénoalcényle en C₃-C₆ ; ou un halogénoalcynyle en C₃-C₆ ;
X² représente un halogénoalcoxy en C₁-C₄ ; un halogénoalkyle en C₁-C₄ ; un alcoxy en C₁-C₄ ; un alkyle en C₁-C₄ ; un diméthylalnino ; un méthylamino ; ou un alcoxy en C₁-C₄-alkyle en C₁-C₄ ;
Y² représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ; et
E représente CH ; ou N ;
ainsi que leurs sels compatibles avec l'agrochimie.

12. Agent selon la revendication 3, comportant une sulfonylurée de formule Ie 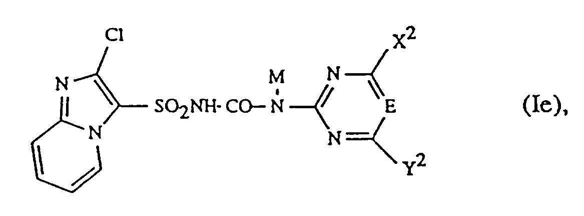 où
X² représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ;
Y² représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ; et
E représente CH ; ou N ;
ainsi que leurs sels compatibles avec l'agrochimie.

13. Agent selon la revendication 3, comportant une sulfonylurée de formule If 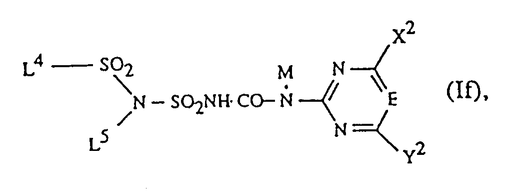 où
L⁴ représente un alkyle en C₁-C₆ ;
L⁵ représente un alkyle en C₁-C₆ ; ou
L⁴ et L⁵ représentent ensemble un pont alkylène en C₂-C₆ ;
X² représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ;
Y² représente un halogénoalcoxy en C₁-C₄ ; un halogénoalkyle en C₁-C₄ ; un alcoxy en C₁-C₄ ; un alkyle en C₁-C₄ ; un diméthylamino ; un méthylamino ; ou un alcoxy en C₁-C₄-alkyle en C₁-C₄ ; et
E représente CH ; ou N ;
ainsi que leurs sels compatibles avec l'agrochimie.

14. Agent selon la revendication 3, comportant une sulfonylurée de formule Ig 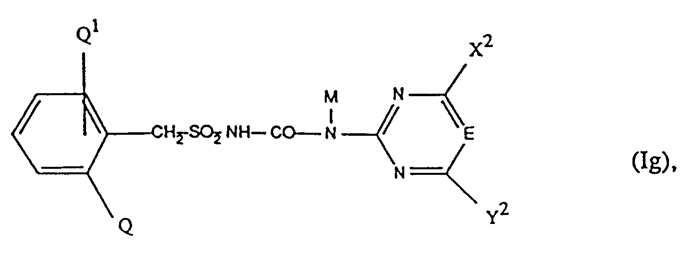 où Q¹, Q, M, E, X² et Y² ont les significations données dans la revendication 3, en particulier où Q¹ représente un hydrogène, Q représente COOCH₃, M représente un hydrogène, E représente CH, et X² et Y² représentent chacun un méthoxy..

15. Agent selon une ou plusieurs des revendications 1 à 14, comportant une quantité à activité synergique d'un composé de formule II 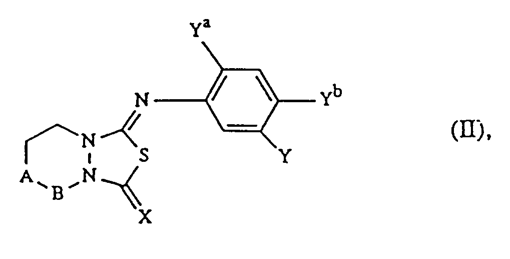 où
A-B représente -CH₂-CH₂- ; ou -CH=CH- ;
Y représente un hydroxy ; un alkyle en C₁-C₆ ; un alcoxy en C₁-C₆ ; un halogénoalcoxy en C₁-C₆ ; un alcényloxy en C₃-C₆ ; un halogénoalcényloxy en C₂-C₆ ; un alcynyloxy en C₃-C₆ ; un phénoxy ; un cycloalkyloxy en C₅-C₆ ; un alcoxy en C₁-C₆-carbonyl-alcoxy en C₁-C₄ ; un alcoxy en C₁-C₆-carbonyl-alcényloxy en C₂-C₄ ; un alkyl en C₁-C₆-thiocarbonyl-alcoxy en C₁-C₄ ; un alcynyloxy en C₃-C₆-carbonyl-alcoxy en C₁-C₄ ; un benzyloxycarbonyl-alcoxy en C₁-C₄ ; un trifluorométhyle ; un benzyloxy ; un chlorobenzyloxy ; un alkyl en C₁-C₆-benzyloxy ; un alcényle en C₂-C₆ ; un cyano-alkyle en C₁-C₆ ; un alkyl en C₁-C₆-carbamoyloxy ; un alcoxy en C₁-C₄-alkyle en C₁-C₄ ; un alcynyloxy en C₃-C₆-alkyle en C₁-C₄ ; un alcényloxy en C₃-C₆-alkyle en C₁-C₄ ; un cycloalkylméthoxy en C₅-C₆ non substitué ou substitué par un halogène ; un alcoxy en C₁-C₆-alcoxy en C₁-C₄ ; un phénéthyloxy ; un cycloalcoxycarbonyl en C₅-C₆-alcoxy en C₁-C₄ ; un pyrrolidinocarbonyle ; un phénylcarbonyle non substitué ou substitué par un alkyle en C₁-C₆ ; -CO-X⁵-R³ ; 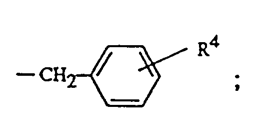 -S(O)ₚ-R⁵ ; -O-CH(R⁶)-CO-OR⁷ ; -N=C(CH₃)-R⁸ ; -NHR⁹ ; -S-CH(R¹⁰)-CO-R¹¹ ; ou -O-P(X⁵)(OC₂H₅)₂ ; Y^{a} et Y^{b}, indépendamment l'un de l'autre, représentent l'hydrogène ; le fluor ; le chlore ; ou le brome ; et R³ à R¹¹, X, X⁵ et p sont définis comme précédemment.

16. Agent selon la revendication 15, comportant un composé de formule II 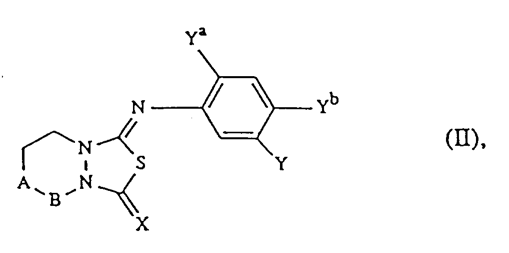 où
A-B- représente -CH₂-CH₂- ; ou -CH=CH-;
Y représente un alcoxy en C₁-C₆ ; un halogénoalcoxy en C₁-C₆ ; un alcényloxy en C₃-C₆ ; un halogénoalcényloxy en C₂-C₆ ; un alcynyloxy en C₃-C₆ ; un cycloalkyloxy en C₅-C₆ ; un alcoxy en C₁-C₆-carbonyl-alcoxy en C₁-C₄ ; un alcoxy en C₁-C₆-carbonyl-alcényloxy en C₂-C₄ ; un alkyl en C₁ -C₆-thiocarbonyl-alcoxy en C₁-C₄ ; un alcynyloxycarbonyl en C₃-C₆-alcoxy en C₁-C₄ ; un cyano-alkyle en C₁ - C₆ ; un alkyl en C₁-C₆-carbamoyloxy ; un alcoxy en C₁-C₆-alcoxy en C₁-C₄ ; un phénoxy ; un benzyloxy ; -S(O)ₚ-R⁵ ; -O-CH(R⁶)-CO-OR⁷ ; -CO-X⁵-R³ ; ou -S-CH(R¹⁰)-CO-R¹¹ ;
Y^{a} représente l'hydrogène ; le fluor ; ou le chlore ;
Y^{b} représente l'hydrogène ; le fluor ; le chlore ; ou le brome ;
R³ représente l'hydrogène ; un alkyle en C₁-C₆ ; un phényle ; un cycloalkyle en C₅-C₆ ; un alcoxy en C₁-C₆-alkyle en C₁-C₄ ; un alcoxy en C₁-C₆-carbonyl-alkyle en C₁-C₄ ; ou
un alcoxy en C₁-C₄-alcoxy en C₁-C₄-carbonyl-alkyle en C₁-C₄ ;
R⁵ représente un alkyle en C₁-C₆ ; un alcényle en C₃-C₆ ; ou un alcynyle en C₃-C₆ ;
p est 0 ou 2 ;
R⁶ représente l'hydrogène ; ou un alkyle en C₁-C₆ ;
R⁷ représente l'hydrogène ; un alkyle en C₁-C₆ ; un alcoxy en C₁-C₆-alkyle en C₁-C₄ ; un tétrahydrofuryle ; un alcoxy en C₁-C₄-alcoxy en C₁-C₄-alkyle en C₁-C₄ ; un alcoxy en C₁-C₆-carbonyl-alkyle en C₁-C₄ ; ou un cycloalkyle en C₅-C₆ ;
R¹⁰ représente l'hydrogène ; ou un alkyle en C₁-C₆ ;
R¹¹ représente un alcoxy en C₁-C₆ ; un cycloalcoxy en C₅-C₆ ; un 1-pyrrolidinyle ; un alcényloxy en C₃-C₆ ; un alcynyloxy en C₃-C₆ ; un alkylthio en C₁-C₆ ; un halogénoalcoxy en C₁-C₆ ; un alcoxy en C₁-C₄-carbonyl-alcoxy en C₁-C₄ ; un α,α-diméthylbenzylamino ; -OC₂H₄S(O)₂-(alkyle en C₁-C₆) ; -OC₂H₄S-(alkyle en C₁-C₆) ; -OC₂H₄S(O)₂-(phényle) ; -OC₂H₄S-(phényle) ; 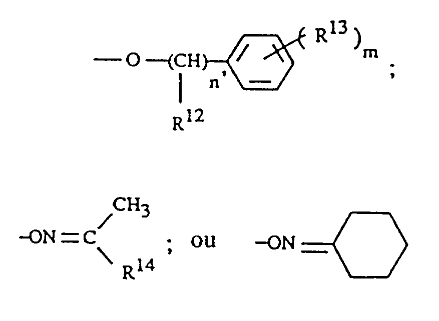 m est 0 ; 1 ; 2 ; ou 3 ;
n' est 0 ; ou 1 ;
R¹² représente un halogène ; ou un alkyle en C₁-C₄ ;
R¹³ représente un phényle ; un benzyle ; ou un méthoxy-alkyle en C₁-C₄ ;
R¹⁴ représente un styryle ; un cyano-alkyle en C₁-C₄ ; un tétrahydrofuranne-2-yle ;
un thiényle ou un pyridine-2-yle ;
X représente un oxygène ; ou un soufre ; et
X⁵ représente un oxygène ; ou un soufre.

17. Agent selon la revendication 15, comportant un composé de formule IIa 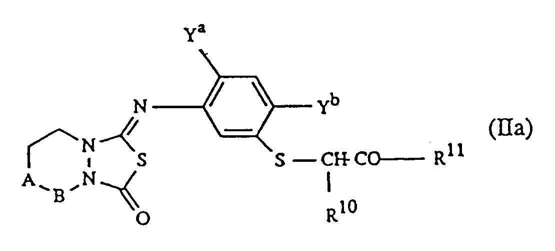 où
A-B, Y^{a}, Y^{b}, R¹⁰ et R¹¹ sont définis comme précédemment.

18. Agent selon la revendication 15, comportant un composé de formule IIb 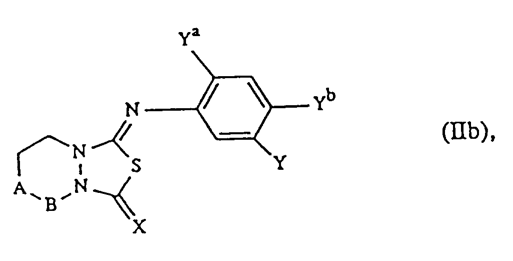 où
Y représente un alcoxy en C₁-C₆ ; un alcényloxy en C₃-C₆ ; un alcynyloxy en C₃-C₆ ; un alcoxy en C₁-C₆-carbonyl-alcoxy en C₁-C₄ ; un alkyl en C₁-C₆-thiocarbonyl-alcoxy en C₁-C₄ ; un alcynyloxycarbonyl-en C₃-C₆-alcoxy en C₁-C₄ ; un alkylthio en C₁-C₆ ; un alkylsulfonyle en C₁-C₆ ; un alcynylthio en C₃-C₆ ; un alcénylthio en C₃-C₆ ; un cycloalcoxy en C₅-C₆ ; un phénoxy ; un benzyloxy ; un cyano-alkyle en C₁-C₆ ; un alcoxy en C₁-C₆-alcoxy en C₁-C₄ ; et
A-B, Y^{a}, et Y^{b} sont comme définis précédemment.

19. Agent selon la revendication 15, comportant un composé de formule IIc 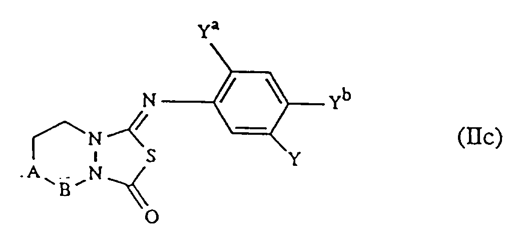 où
Y représente -CO-X⁵-R³ ;
R³ représente un hydrogène ; un alkyle en C₁-C₆ ; un phényle ; un cycloalkyle en C₅-C₆ ; un alcoxy en C₁-C₆-alkyle en C₁-C₄ ; un alcynyle en C₃-C₆ ; un alcényle en C₃-C₆ ; un benzyle ; un alcoxy en C₁-C₆-carbonyl-alkyle en C₁-C₄ ; ou un alcoxy en C₁-C₄-alcoxy en C₁-C₄-carbonyl-alkyle en C₁-C₄ ; et
X⁵ représente un oxygène; ou un soufre; et
A-B, Y^{a} et Y^{b} sont comme définis précédemment.

20. Agent selon la revendication 15, comportant un composé de formule IId 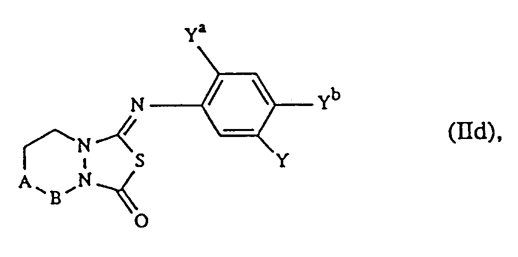 où
Y représente -O-CH(R⁶)-CO-OR⁷ ;
R⁶ représente un hydrogène ; ou un alkyle en C₁-C₆ ;
R⁷ représente un hydrogène ; un alkyle en C₁-C₆ ; un alcynyle en C₃-C₆ ; un alcényle en C₃-C₆ ; un alcoxy en C₁-C₆-alkyle en C₁-C₄ ; un tétrahydrofuryle ; un alcoxy en C₁-C₄-alcoxy en C₁-C₄-alkyle en C₁-C₄ ; un alcoxy en C₁-C₆-carbonyl-alkyle en C₁-C₄ ; ou un cycloalkyle en C₅-C₆ ; et
A-B, Y^{a} et Y^{b} sont définis comme précédemment.

21. Agent selon l'une des revendications 15 à 20, comportant un composé de formule II ou des formules IIa à IId, où
A-B représente -CH₂-CH₂-.

22. Agent selon la revendication 2, comportant une sulfonylurée de formule la 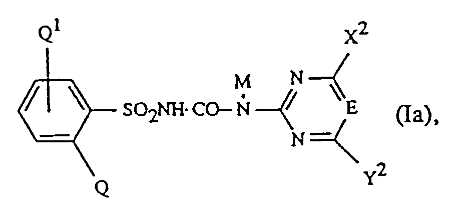 où
M représente l'hydrogène ;
Q représente un halogénoalkyle en C₁-C₆ ; un halogénoalcényle en C₂-C₆ ; ou (A)-R² ;
A représente l'oxygène ; ou le soufre ;
R² représente un halogénoalkyle en C₁-C₆ ;
E représente N ;
Q¹ représente l'hydrogène ; et
X² et Y², indépendamment l'un de l'autre, représentent un alkyle en C₁-C₄ ; un alcoxy en C₁-C₄ ; ou un halogénoalcoxy en C₁-C₄ ;
et un composé de formule IIa 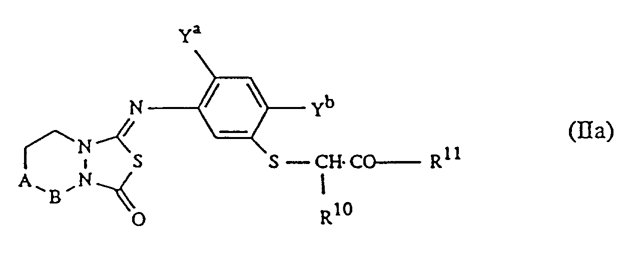 où
A-B représente -CH₂-CH₂ ;
Y^{a} représente l'hydrogène ; ou le fluor ;
Y^{b} représente le chlore ou le brome ;
R¹⁰ représente l'hydrogène ; ou un alkyle en C₁-C₄ ; et
R¹¹ représente un alcoxy en C₁-C₄ ; un cycloalcoxy en C₅-C₆ ; un alcényloxy en C₃-C₆ ; un alcynyloxy en C₃-C₆ ; un alkylthio en C₁-C₄ ; ou un alcoxy en C₁-C₄ carbonyl-alcoxy en C₁-C₄.

23. Agent selon la revendication 2, comportant une sulfonylurée de formule Ia, 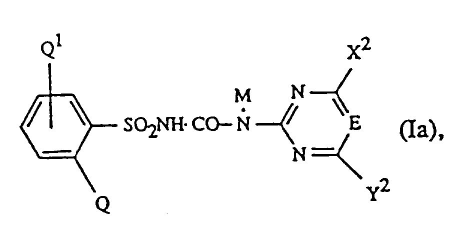 où
M représente l'hydrogène ;
Q représente un halogénoalkyle en C₁-C₆ ; un halogénoalcényle en C₂-C₆ ; ou -(A)-R² ;
A représente l'oxygène ; ou le soufre ;
R² représente un halogénoalkyle en C₁-C₆ ;
E représente N ;
Q¹ représente l'hydrogène ; et
X² et Y², indépendamment l'un de l'autre, représentent un alkyle en C₁-C₄ ; un alcoxy en C₁-C₄ ; ou un halogénoalcoxy en C₁-C₄ ;
et un composé de formule IIc 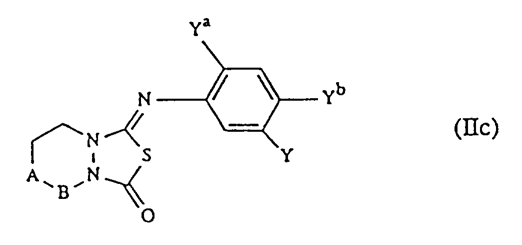 où
Y représente -CO-X⁵-R³ ;
R³ représente un hydrogène ; un alkyle en C₁-C₆ ; un phényle ; un cycloalkyle en C₅-C₆ ; un alcoxy en C₁-C₆-alkyle en C₁-C₄ ; un alcynyle en C₃-C₆ ; un alcényle en C₃-C₆ ; un benzyle ; un alcoxy en C₁-C₆-carbonyl-alkyle en C₁-C₄ ; ou un alcoxy en C₁-C₄-alcoxy en C₁-C₄-carbonyl-alkyle en C₁-C₄ ; et
X⁵ représente un oxygène; ou un soufre; et
A-B, Y^{a} et Y^{b} sont comme définis précédemment.

24. Agent selon une des revendications 15 à 20, comportant un composé de formule II ou des formules IIa à IId, où
A-B représente -CH₂-CH₂-.

25. Agent selon une des revendications 1 à 21, comportant la N-[2-(2-chloroéthoxy)phénylsulfonyl]-N'-(4-méthoxy-6-méthyl-1,3,5-triazine-2-yl)-urée comme composé de formule Ia avec une quantité à effet synergique de 3-[(4-chloro-2-fluoro-5-méthoxycarbonylméthylthio)phénylimino]5,6,7,8-tétrahydro-1H,3H-(1,3,4)-thiadiazolo-[3,4-a]-pyridazine comme composé de formule IIa.

26. Agent selon une des revendications 1 à 21, comportant la N-[2-(2-chloroéthoxy)phénylsulfonyl]-N'-(4-méthoxy-6-méthyl-1,3,5-triazine-2-yl)-urée comme composé de formule Ia avec une quantité à effet synergique de 9-[4-chlor-2-fluoro-5-(2-ethoxy-éthoxycarbonyl-1-éthylthiocarbonyl)phénylimino]-8-diazabicyclo[4.3.0]nonane-7-one comme composé de formule IIa.

27. Agent selon une des revendications 1 à 21, comportant
la N-[2-(2-fluoroéthylthio)phénylsufonyl]-N'(4-méthoxy-6-méthyl-1,3,5-triazine-2-yl)-urée,
la N-[2-(3,3,3-trifluoropropyl)phénylsulfonyl]-N'(4-méthoxy-6-méthyl-1,3,5-triazine-2-yl)-urée,
la N-[2-(3,3-difluorobut-1-ényl)phénylsulfonyl]-N'(4-méthoxy-6-méthyl-1,3,5-triazine-2-yl)-urée,
la N-[2-(3,3-difluorobutyl)phénylsulfonyl]-N'(4-méthoxy-6-méthyl-1,3,5-triazine-2-yl)-urée, la N-[2-(2,2-difluoroéthylthio)phénylsulfonyl]-N'-(4-méthoxy-6-méthyl-1,3,5-triazine-2-yl)-urée,
la N[2-(2-méthoxyéthoxy)phénylsulfonyl]-N'-(4,6-diméthoxy-1,3,5-triazine-2-yl)-urée, la N-[3-diméthylaminocarbonylpyridine-2-sulfonyl]-N'-(4,6-diméthoxy-pyrimidine-2-yl)-urée, la N-[3-éthylsulfonyl-pyridine-2-sulfonyl]-N'(4,6-diméthoxy-pyrimidine-2-yl)-urée, la N-[2-méthoxycarbonylphénylsulfonyl]-N'-(4,6-bis-difluorométhoxy-pyrimidine-2-yl)-urée, la N[2-méthoxycarbonylphénylsulfonyl]-N'-(4,6-diméthoxypyrimidine-2-yl)-urée, la N[2-méthoxycarbonylbenzylsulfonyl]-N'-(4,6-diméthoxypyrimidine-2-yl)-urée, la N-[2-méthoxycarbonylphénylsulfonyl]-N'-méthyl-N'-(4-méthoxy-6-méthyl-1,3,5-triazine-2-yl)-urée, la N-[1-méthyl-4-éthoxycarbonylpyrazole-5-sulfonyl]-N'-(4,6-diméthoxy-pyrimidine-2-yl)-urée, ou la N[2-(2-chloroéthoxy)phénylsulfonyl]-N'-(4-méthoxy-6-méthyl-1,3,5-triazine-2-yl)-urée comme composé de formule Ia en plus d'une quantité à effet synergique de 3-[(4-chloro-2-fluoro-5-méthoxycarbonylméthylthio)phénylimino]5,6,7,8-tétrahydro-1H,3H-(1,3,4)-thiadiazolo-[3,4-a]-pyridazine comme composé de formule IIa.

28. Agent selon une des revendications 1 à 21, comportant
la N-[2-(2-fluoroéthylthio)phénylsulfonyl]-N'(4-méthoxy-6-méthyl-1,3,5-triazine-2-yl)-urée, la N-[2-(3,3,3-trifluoropropyl)phénylsulfonyl]-N'(4-méthoxy-6-méthyl-1,3,5-triazine-2-yl)-urée, la N-[2-(3,3-difluorobut-1-ényl)phénylsulfonyl]-N'(4-méthoxy-6-méthyl-1,3,5-triazine-2-yl)-urée, la N-[2-(3,3-difluorobutyl)phénylsulfonyl]-N'(4-méthoxy-6-méthyl-1,3,5-triazine-2-yl)-urée, la N-(2-(2,2-difluoroéthylthio)phénylsulfonyl]-N'-(4-méthoxy-6-méthyl-1,3,5-triazine-2-yl)-urée,
la N[2-(2-méthoxyéthoxy)phénylsulfonyl]-N'-(4,6-diméthoxy-1,3,5-triazine-2-yl)-urée, la N-[3-diméthylaminocarbonylpyridine-2-sulfonyl]-N'-(4,6-diméthoxy-pyrimidine-2-yl)-urée, la N-[3-éthylsulfonyl-pyridine-2-sulfonyl]-N'(4,6-diméthoxy-pyrimidine-2-yl)-urée, la N-[2-méthoxycarbonylphénylsulfonyl]-N'-(4,6-bis-difluorométhoxy-pyrimidine-2-yl)urée, la N-[2-méthoxycarbonylphénylsulfonyl]-N'-(4,6-diméthoxypyrimidine-2-yl)-urée, la N(2-méthoxycarbonylbenzylsulfonyl]-N'-(4,6-diméthoxypyrimidine-2-yl)-urée, la N-(2-méthoxycarbonylphénylsulfonyl]-N'-méthyl-N'-(4-méthoxy-6-méthyl-1,3,5-triazine-2-yl)-urée, la N-[1-méthyl-4-éthoxycarbonylpyrazole-5-sulfonyl]-N'-(4,6-diméthoxy-pyrimidine-2-yl)-urée, ou la N[2-(2-chloroéthoxy)phénylsulfonyl]-N'-(4-méthoxy-6-méthyl-1,3,5-triazine-2-yl)-urée comme composé de formule Ia en plus d'une quantité à effet synergique de 9-[4-chloro-2-fluoro-5-(2-éthoxy-éthoxy-carbonyl-1-éthylthiocarbonyl)phénylimino]-8-diazabicyclo[4.3.0]nonane-7-one comme composé de formule IIa.

29. Agent selon une des revendications 1 à 21, comportant
la N-[2-(oxétanne-3-yloxycarbonyl)phénylsulfonyl]-N'(4-méthoxy-6-méthyl-1,3,5-triazine-2-yl)-urée, comme composé de formule Ia avec une quantité à effet synergique de 3-[(4-chloro-2-fluoro-5-méthoxycarbonylméthylthio)phénylimino]5,6,7,8-tétrahydro-1H,3H-(1,3,4)-thiadiazolo-[3,4-a]-pyridazine (composé 7.012) comme composé de formule IIa.

30. Procédé pour lutter contre la croissance indésirable de plantes dans des cultures de plantes utiles, caractérisé en ce qu'on fait agir une quantité à action herbicide d'un agent selon une des revendications 1 à 29 sur la plante de culture ou sur son biotope.

31. Procédé selon la revendication 30 pour lutter contre les mauvaises herbes dans les céréales.

32. Procédé selon la revendication 30 pour lutter contre les mauvaises herbes dans le maïs.

33. Procédé selon la revendication 30 pour lutter contre les mauvaises herbes dans le soja.

34. Procédé selon la revendication 30 pour lutter contre les mauvaises herbes dans le riz.
